# EUROPÄISCHE PATENTANMELDUNG

(11) **EP 3 656 836 A1**
(43) Veröffentlichungstag der Anmeldung: **27.05.2020**
(21) Anmeldenummer: 19186330.7
(22) Anmeldetag: 23.11.2009
(51) Int. Cl.: C10L 9/08, C10L 5/44

(54) **VERFAHREN UND VORRICHTUNG ZUR HERSTELLUNG VON WERK- ODER BRENNSTOFFEN**

(30) Priorität: 21.11.2008 DE 102008058444
(62) Teilanmeldung aus: 09827256.0
(71) Anmelder: Antacor Ltd., Ta' Xbiex XBX 1026 (MT)
(72) Erfinder: Peus, Dominik, Guildford GU1 4SW (GB)
(74) Vertreter: Diehl & Partner GbR

(57) **Zusammenfassung**

Ein Verfahren zur Beschickung eines Reaktors (19) zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente durch das Behandeln des Fest-Flüssig-Gemischs bei einer Temperatur von über 100°C und einem Druck von über 5 bar in dem Reaktor beinhaltet, dass das Fest-Flüssig-Gemisch zum Erhitztwerden einen Wärmetauscher (18) durchströmt, bei dem das Betragsmittel des Winkels der Rohrachse zur Horizontalebene größer als 10 Grad ist.

## Beschreibung

### Hintergrund der Erfindung

Die Anmeldung betrifft ein Verfahren und eine Vorrichtung zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente und zur Behandlung desselben, wobei das Fest-Flüssig-Gemisch bei einer Temperatur von über 100°C und einem Druck von über 5 bar behandelt wird.

### Stand der Technik

1913 beschrieb Friedrich Bergius in seiner Habilitationsschrift mit dem Titel "Die Anwendung hoher Drucke bei chemischen Vorgängen und eine Nachbildung des Entstehungsprozesses der Steinkohle" erstmals die Herstellung von Kohle aus Holz oder Zellulose bei Temperaturen zwischen 245 und etwa 340 Grad Celsius unter Luftabschluss in einem Laborreaktor ohne Anwendung von Katalysatoren. Die in der Elementaranalyse gemessenen Kohlenstoffgehalte lagen in der Regel oberhalb von 70 Prozent. Eine von Bergius durchgeführte Berechnung der Exothermie von Zellulose bei diesem Vorgang wurde im Juli 2006 von Prof. Markus Antonietti vom Potsdamer Max-Planck-Institut für Kolloid und Grenzflächenforschung im Wesentlichen bestätigt, der dieses Verfahren im Labormaßstab unter dem Namen der hydrothermalen Karbonisierung der Öffentlichkeit vorstellte.

Bei diesem Verfahren wird Biomasse in einem Laborautoklaven bei 10 bar und 180 Grad innerhalb eines halben Tages in einen kohleähnlichen Stoff oder dessen Vorstufen und Wasser umgewandelt. Die Nutzung von feuchter Biomasse zur Energiegewinnung durch Herstellung eines möglichst einheitlichen Brennstoffs wird seit längerem angestrebt, ist bisher aber durch mangelnde Effizienz der energetischen Nutzbarkeit und geringe Wirtschaftlichkeit in ihrer Anwendung begrenzt. Kohlendioxid-Emissionen durch die Verbrennung fossiler Energieträger werden im Wesentlichen für den Klimawandel verantwortlich gemacht.

Aus der DE19723510 ist beispielsweise eine Vorrichtung zur Behandlung biogener Restmassen bekannt, die einen zylindrischen Reaktor umfasst, in dem Lebensmittelabfälle und Ähnliches einer Temperatur-Druck-Hydrolyse oder Thermo-Druck-Hydrolyse unterzogen werden. Der Reaktor ist als Schlaufenreaktor mit beheizbarer Mantelfläche ausgebildet. Mittels einer Pumpe wird innerhalb des Reaktors eine Strömung erzeugt, die eine Durchmischung der Suspension gewährleistet.

### Beschreibung der Erfindung

Es ist Aufgabe der Erfindung, Verfahren und Vorrichtungen zu entwickeln, durch die Brennstoffe, Humus, kohlenstoffhaltige Werkstoffe sowie Maillard- und ähnliche Reaktionsprodukte mit hoher Effizienz aus einem Fest-Flüssig-Gemisch, insbesondere im industriellen Maßstab, wirtschaftlich hergestellt werden können.

Die Aufgabe wird erfindungsgemäß durch die Gegenstände der unabhängigen Patentansprüche gelöst. Vorteilhafte Weiterbildungen der Erfindungsgegenstände ergeben sich aus den abhängigen Patentansprüchen.

Die Aufgabe wird insbesondere durch ein Verfahren zur Hydrolyse und/oder Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente gelöst, bei dem das Fest-Flüssig-Gemisch bei einer Temperatur von über 100°C und einem Druck von über 5 bar in einem Reaktor behandelt für mindestens 1 Stunde behandelt. Erfindungsgemäß werden über einen ersten Förderstrang nicht pumpfähige Ausgangsstoffe in den wenigstens einen Reaktor gefördert und zeitlich parallel oder versetzt dazu über einen zweiten Förderstrang pumpfähige erhitzte Ausgangsstoffe in den wenigstens einen Reaktor geleitet.

In besonders vorteilhafter Ausgestaltung des Verfahrens ist dabei vorgesehen, dass über den ersten Förderstrang nicht pumpfähige Ausgangsstoffe mit einem Feststoffgehalt von 25 bis 97 Prozent in den Reaktor gefördert werden und parallel oder versetzt dazu über den zweiten Förderstrang pumpfähige erhitzte Ausgangsstoffe mit einem Feststoffgehalt von 3 bis 50 Prozent geleitet werden.

Vorzugsweise beträgt das Verhältnis des Massendurchsatzes von nicht-pumpfähigen zu pumpfähigen Ausgangsstoffen 1 : 20 bis 10 : 1.

In weiterer besonders vorteilhafter Ausgestaltung des Verfahrens ist vorgesehen, dass die nicht-pumpfähigen Ausgangsstoffe aus dem ersten Förderstrang unter einem Druck oberhalb des Dampfdrucks des Prozesswassers in den Reaktor gefördert werden. Dabei ist die Fördereinrichtung zur Einbringung der nicht-pumpfähigen Ausgangsstoffe aus dem ersten Förderstrang in den Reaktor unter Druck oberhalb des Dampfdrucks des Prozesswassers vorzugsweise ein Injektor, Doppelschrauben-Extruder, eine Exzenterschneckenpumpe, eine Kolbenpumpe, die jeweils mit oder ohne Verdichterschnecke/n ausgestattet sind, oder ein Doppelschneckenverdichter.

In besonders vorteilhafter Ausgestaltung des Verfahrens ist ferner vorgesehen, dass die nicht-pumpfähigen Ausgangsstoffe aus dem ersten Förderstrang bei einem Druck unterhalb des Dampfdrucks des Prozesswassers in den Reaktor vorgelegt werden und mit pumpfähigen Ausgangsstoffen aus dem zweiten Förderstrang überschichtet werden.

Das Verhältnis des Massendurchsatzes von vorgelegten zu zugeleiteten Ausgangsstoffen beträgt vorzugsweise 1 : 20 bis 10 : 1, oder 1 : 5 bis 1 : 1.

Erfindungsgemäß werden in dem Verfahren vorzugsweise weitere Förderstränge eingesetzt.

Das erfindungsgemäße Verfahren umfasst ferner die gemeinsame Nutzung weiterer Einrichtungen wie Lagerbehälter, Zerkleinerungsvorrichtungen, Mischbehälter, Dosierer, Inkubationsbehälter, Fördereinrichtungen, Prozesswasserbehälter, Rohrleitungen, Wärmetauscher oder Reaktoren.

In weiterer vorteilhafter Ausgestaltung des Verfahrens ist vorgesehen, dass die Pumpe zur Förderung von Fest-Flüssig-Gemischen im zweiten Förderstrang für Feststoffgehalte von mindestens 5 bis 10 oder 10 bis 25 Prozent ausgelegt ist.

Vorzugsweise ist die Pumpe zur Förderung von Fest-Flüssig-Gemischen im zweiten Förderstrang eine Exzenterschnecken-, Spiralverdränger- oder eine Kolbenpumpe.

Die Aufgabe wird auch durch ein Verfahren zur Hydrolyse einer kohlenstoffhaltigen Komponente, zur Beschickung eines Reaktors und/oder zur Herstellung von Werk- oder Brennstoffen, Humus, Maillard- oder ähnlichen Reaktionsprodukten aus einem Fest-Flüssig-Gemisch aus Wasser und der kohlenstoffhaltigen Komponente gelöst, bei dem das Fest-Flüssig-Gemisch bei einer Temperatur von über 100°C und einem Druck von über 5 bar behandelt wird. Erfindungsgemäß durchströmt dabei das Fest-Flüssig-Gemisch zum Erhitzen einen Wärmetauscher, bei dem das Betragsmittel des Winkels der Rohrachse zur Horizontalebene größer als 10 Grad ist. Dabei nimmt die Viskosität des Fest-Flüssig-Gemischs beim Durchlauf durch die Beschickungsvorrichtung vorzugsweise ab und ist zum Ende des Prozesses vorzugsweise mindestens auf drei Viertel der Viskosität des Ausgangsmaterials vermindert.

In vorteilhafter Ausgestaltung der Erfindung ist vorgesehen, dass das Fest-Flüssig-Gemisch zum Erhitzen einen Wärmetauscher durchströmt und dabei durch mindestens 60 Prozent im Wesentlichen senkrechte Rohranteile geleitet wird.

Das Fest-Flüssig-Gemisch weist vorzugsweise einen Feststoffgehalt zwischen 3 und 35 oder zwischen 35 und 60 % auf und/oder wird vorzugsweise durch eine Pumpe in den Wärmetauscher geleitet. Die Pumpe zur Förderung des Fest-Flüssig-Gemisches und/oder eine Gegendruckpumpe kann/können beispielsweise für Feststoffgehalte von mindestens 5 bis 10 oder 10 bis 25 Prozent ausgelegt und/oder eine Exzenterschnecken-, Spiralverdränger- oder eine Kolbenpumpe sein.

Die Aufgabe wird ferner durch eine Vorrichtung zur Behandlung eines Fest-Flüssig-Gemischs aus Wasser und einer kohlenstoffhaltigen Komponente bei einer Temperatur von über 100°C und einem Druck von über 5 bar gelöst, welche einen Reaktor und eine Beschickungsvorrichtung umfasst. Die Beschickungsvorrichtung umfasst erfindungsgemäß eine Pumpe zur Förderung von Fest-Flüssig-Gemischen mit einem Feststoffgehalt von mindestens 10 oder mindestens 15 Masseprozent oder einen Wärmetauscher, bei dem das Betragsmittel des Winkels der Rohrachse zur Horizontalebene größer ist als 10 Grad.

Die Aufgabe wird darüber hinaus alternativ durch eine Vorrichtung zur Behandlung eines Fest-Flüssig-Gemischs aus Wasser und einer kohlenstoffhaltigen Komponente bei einer Temperatur von über 100°C und einem Druck von über 5 bar gelöst, die einen Reaktor und eine Hydrolysevorrichtung umfasst. Die Hydrolysevorrichtung umfasst erfindungsgemäß eine Pumpe zur Förderung von Fest-Flüssig-Gemischen mit einem Feststoffgehalt von mindestens 10 oder mindestens 15 Masseprozent oder einen Wärmetauscher, bei dem das Betragsmittel des Winkels der Rohrachse zur Horizontalebene größer ist als 10 Grad. Die Hydrolysevorrichtung kann beispielsweise eine Gegendruckpumpe umfassen.

In vorteilhafter Ausgestaltung dieser erfindungsgemäßen Vorrichtungen ist vorgesehen, dass die Pumpe eine Exzenterschneckenpumpe oder eine Kolbenpumpe ist. Dabei ist die Pumpe vorzugsweise für Drücke von 10-130 bar ausgelegt.

In weiterer vorteilhafter Ausgestaltung der erfindungsgemäßen Vorrichtungen ist vorgesehen, dass der Wärmetauscher aus mindestens 60% senkrechten Rohranteilen besteht.

Der Wärmetauscher kann darüber hinaus zur Durchleitung von Fest-Flüssig-Gemischen mit einem Feststoffgehalt von 3 bis 50% bestehend im Wesentlichen aus Biomasse einschließlich Lignocellulose und/oder stärkehaltigem Material ausgelegt sein. Vorzugsweise ist der Wärmetauscher für Temperaturen von 60 bis 300°C, zumindest mindestens ein Modul oder eine Einheit des Wärmetauschers für Temperaturen von 200 bis 300°C, und/oder für Drücke von 10 bis 120 bar, zumindest mindestens ein Modul oder eine Einheit des Wärmetauschers für Drücke von 60 bis 120 bar, ausgelegt. Insbesondere kann der Wärmetauscher oder mindestens ein Modul oder eine Einheit beispielsweise für Temperaturen bis 250°C ausgelegt sein.

In weiterer vorteilhafter Ausgestaltung der erfindungsgemäßen Vorrichtungen ist vorgesehen, dass medienberührte Rohre des Wärmetauschers aus hitze- und korrosionsbeständigem sowie wasserabweisendem Material, z.B. aus beschichtetem Metall, insbesondere Edelmetall, keramischen Werkstoffen oder Emaille, bestehen. Dabei bestehen medienberührten Rohre des Wärmetauschers vorzugsweise aus korrosionsfestem Material und/oder aus Edelstahl wie z.B. austenitischem Stahl oder Stahl zunehmender Chrom- und Molybdängehalte der Gruppen 6, 7 und 8, oder aus Duplexstahl, oder aus Kupfer-Nickellegierung, hochmolybdänhaltiger Nickellegierung oder Titan.

In weiterer vorteilhafter Ausgestaltung der erfindungsgemäßen Vorrichtungen ist vorgesehen, dass der Wärmetauscher ein Rohrreaktor mit Temperierungssystem, ein Doppelrohrwärmetauscher, ein Rohrbündel- oder Plattenwärmetauscher oder eine Kombination davon ist.

Vorzugsweise besteht der Wärmetauscher aus mehreren gleichartigen Einheiten und/oder weist einen modularen Aufbau auf, wobei die gleichartigen Einheiten des Wärmetauschers hintereinander geschaltet und/oder wobei die modularen Einheiten in räumlicher Nähe zueinander angeordnet sind.

In weiterer vorteilhafter Ausgestaltung der erfindungsgemäßen Vorrichtungen ist vorgesehen, dass ein Temperierungssystem eines Rohrreaktors aus einer Doppelwand besteht, wobei der Zwischenraum der Doppelwand des Rohrreaktors von einem Wärmeenergieträgermedium durchströmt wird. Das Wärmeenergieträgermedium ist dabei vorzugsweise ein Thermoöl, Wasserdampf oder Prozesswasser, wobei der Wärmetauscher für verschiedene Wärmeenergieträgermedien und/oder für eine Zieltemperatur des Wärmeenergieträgermediums von 60 und 350°C ausgelegt sein kann. Vorzugsweise besteht der Wärmetauscher aus verschiedenen Modulen, Einheiten oder Abschnitten. Die Aufgabe wird auch durch eine Vorrichtung zur Behandlung eines Fest-Flüssig-Gemischs aus Wasser und einer kohlenstoffhaltigen Komponente bei einer Temperatur von über 100°C und einem Druck von über 5 bar gelöst, die einen Reaktor sowie eine Beschickungsvorrichtung und/oder eine Hydrolysevorrichtung umfasst, wobei die Beschickungsvorrichtung und/oder die Hydrolysevorrichtung folgenden Einrichtungen umfasst/umfassen:
eine Pumpe zur Förderung von Fest-Flüssig-Gemischen mit einem Feststoffgehalt von mindestens 10 bis 15 Prozent und/oder
einen Wärmetauscher, bei dem das Betragsmittel des Winkels der Rohrachse zur Horizontalebene größer als 10 Grad ist.

In vorteilhafter Ausgestaltung der erfindungsgemäßen Vorrichtung ist vorgesehen, dass die Hydrolysevorrichtung eine Gegendruckpumpe umfasst.

In weiterer vorteilhafter Ausgestaltung der erfindungsgemäßen Vorrichtung ist vorgesehen, dass die Pumpe zur Förderung von Fest-Flüssig-Gemischen und/oder die Gegendruckpumpe eine Exzenterschnecken-, Spiralverdränger- oder eine Kolbenpumpe ist/sind.

In weiterer vorteilhafter Ausgestaltung der erfindungsgemäßen Vorrichtung ist vorgesehen, dass die Pumpe und/oder die Gegendruckpumpe mindestens für Drücke von 10 - 130 bar ausgelegt ist/sind.

Der Wärmetauscher zur Durchleitung von Fest-Flüssig-Gemischen kann aus mindestens 60 Prozent senkrechten Rohranteilen bestehen und/oder auf einen Feststoffgehalt von 3 bis 50 Prozent ausgelegt sein, wobei der Feststoffgehalt im Wesentlichen aus Biomasse einschließlich Lignocellulose- und/oder stärkehaltigem Material bestehen kann.

In weiterer vorteilhafter Ausgestaltung der erfindungsgemäßen Vorrichtung ist vorgesehen, dass der Wärmetauscher für Temperaturen von 60 bis 300°C oder mindestens ein Modul oder eine Einheit für Temperaturen von 200 bis 300°C ausgelegt ist.

Der Wärmetauscher oder mindestens ein Modul oder eine Einheit des Wärmetauschers ist vorzugsweise für Drücke von 10 bis 120 bar, besonders bevorzugt für Drücke von 60 bis 120 bar, und/oder für Temperaturen bis 250°C ausgelegt.

In vorteilhafter Ausgestaltung der erfindungsgemäßen Vorrichtung ist ferner vorgesehen, dass die medienberührten Rohre des Wärmetauschers aus hitze- und korrosionsbeständigem sowie wasserabweisendem Material, zum Beispiel aus beschichtetem Metall, insbesondere Edelmetall, keramischen Werkstoffen oder Emaille, bestehen. Vorzugsweise bestehen die medienberührten Rohre des Wärmetauschers aus einem korrosionsfesten Material, insbesondere aus Edelstahl wie zum Beispiel austenitischen Stählen oder Stählen zunehmender Chrom- und Molybdängehalte der Gruppen 6, 7 und 8 oder auch Duplexstählen, Kupfer-Nickellegierungen, hochmolybdänhaltigen Nickellegierungen, wie z. B. 2.4610, oder Titan.

In weiterer vorteilhafter Ausgestaltung der erfindungsgemäßen Vorrichtung ist vorgesehen, dass der Wärmetauscher ein Rohrreaktor mit Temperierungssystem, ein Doppelrohrwärmetauscher, Rohrbündel- oder Plattenwärmetauscher oder eine Kombination davon ist.

Vorzugsweise besteht der Wärmetauscher aus mehreren gleichartigen Einheiten oder weist einen modularen Aufbau auf, wobei die gleichartigen Einheiten des Wärmetauschers vorzugsweise hintereinander geschaltet und/oder die modularen Einheiten des Wärmetauschers in räumlicher Nähe zueinander angeordnet sind.

In weiterer vorteilhafter Ausgestaltung der erfindungsgemäßen Vorrichtung ist vorgesehen, dass das Temperierungssystem des Rohrreaktors aus einer Doppelwand besteht, wobei der Zwischenraum der Doppelwand des Rohrreaktors von einem Wärmeenergieträgermedium durchströmt werden kann. Das Wärmeenergieträgermedium ist dabei vorzugsweise ein Thermoöl, Wasserdampf oder Prozesswasser, wobei der Wärmetauscher für verschiedene Wärmeträgermedien ausgelegt sein kann.

In weiterer vorteilhafter Ausgestaltung der erfindungsgemäßen Vorrichtung ist vorgesehen, dass der Wärmetauscher für eine Zieltemperatur des Wärmeträgermediums von 60 bis 350°C ausgelegt ist.

Der Wärmetauscher kann außerdem aus verschiedenen Modulen, Einheiten oder Abschnitten bestehen.

Die Aufgabe wird ferner durch ein Verfahren gelöst, bei dem Ausgangsstoffe über einen Wärmetauscher über einen Zeitraum von mindestens sechs Zehntel der Reaktionszeit kontinuierlich einem ersten Reaktor zugeführt werden und das Reaktionsgemisch chargenweise von einem zum folgenden Reaktor weitergeleitet wird, wobei Reaktionsprodukte über einen Zeitraum von mindestens sechs Zehntel der Reaktionszeit kontinuierlich aus einem letzten Reaktor abgeführt werden. Die wesentlichen Schritte des erfindungsgemäßen Verfahrens werden also kontinuierlich durchgeführt, wobei der Zeitraum, über den Ausgangsstoffe über einen Reaktionszyklus beziehungsweise über die für einen Durchlauf des Materials benötigte Zeit hinweg in den Prozess über den Wärmetauscher eingebracht werden, mindestens sechs Zehntel des Reaktionszyklus beträgt.

In vorteilhafter Ausgestaltung der Erfindung ist vorgesehen, dass eine Charge mindestens 10 und bis zu 25 Masseprozent, oder mindestens 25 Masseprozent des Reaktorinhalts des jeweils vorhergehenden Reaktors ausmacht.

Vorzugsweise verbleibt eine Charge zur Vermeidung von Rückvermischungen für einen Zeitraum von mindestens einem Hundertstel der Reaktionszeit in einem abgeschlossenen Reaktor, der in Durchflussrichtung hinter mindestens dem ersten Reaktor positioniert ist. Dabei kann der Abschluss des abgeschlossenen Reaktors über Verschlussarmaturen wie Druckventile oder Absperrklappen geregelt werden.

In weiterer vorteilhafter Ausgestaltung der Erfindung ist vorgesehen, dass nicht mehr als 60 Vol-% einer Charge dem abgeschlossenen Reaktor während der Verweilzeit zugeführt werden.

Chargen mit einer ähnlich langen restlichen Reaktionszeit werden vorzugsweise aus mindestens zwei Reaktoren in den folgenden Reaktor zusammengeführt. Dabei sollten die restlichen Reaktionszeiten zusammengeführter Chargen um nicht mehr als 50 Prozent der längsten der restlichen Reaktionszeiten der zusammengeführten Chargen voneinander abweichen.

In weiterer vorteilhafter Ausgestaltung der Erfindung ist vorgesehen, dass der letzte Reaktor ein weiterer Wärmetauscher ist. Der weitere Wärmetauscher wird vorzugsweise zum Abkühlen des Reaktionsgemischs während mindestens sechs Zehntel der Reaktionszeit von den Ausgangsstoffen durchflossen.

Erfindungsgemäß kann mindestens ein Wärmetauscher ein Rohrreaktor mit Temperierungssystem, ein Doppelrohrwärmetauscher, ein Rohrbündel- oder Plattenwärmetauscher oder eine Kombination aus diesen sein.

In besonders vorteilhafter Ausgestaltung der Erfindung ist ferner vorgesehen, dass der Wärmetauscher zum Erhitzen der Ausgangsstoffe während mindestens sechs Zehntel der Reaktionszeit von den Ausgangsstoffen durchflossen wird.

In weiterer vorteilhafter Ausgestaltung der Erfindung ist vorgesehen, dass das Reaktionsgemisch beim Weiterleiten von einem Reaktor in den folgenden durch einen Wärmetauscher geleitet wird.

Vorzugsweise wird das Reaktionsgemisch zur Entspannung durch den Wärmetauscher geleitet, wobei der Wärmetauscher zum Entspannen des Reaktionsgemischs vorzugsweise während mindestens sechs Zehntel der Reaktionszeit von Reaktionsteilnehmern durchflossen wird.

In weiterer vorteilhafter Ausgestaltung der Erfindung ist vorgesehen, dass ein Wärmetauscher aus mehreren gleichartigen Einheiten besteht und/oder einen modularen Aufbau aufweist, wobei die gleichartigen Einheiten des Wärmetauschers hintereinander geschaltet sein können. Vorzugsweise sind die modularen Einheiten dabei in räumlicher Nähe zueinander angeordnet.

Ein Temperierungssystem eines Rohrreaktors besteht vorzugsweise aus einer Doppelwand, wobei der Zwischenraum der Doppelwand des Rohrreaktors von einem Wärmeenergieträgermedium durchströmt werden kann. Als Wärmeenergieträgermedium wird dabei vorzugsweise ein Thermoöl, Wasserdampf oder Prozesswasser eingesetzt, wobei verschiedene Wärmeenergieträgermedien kombiniert werden können. Die Zieltemperatur des Wärmeenergieträgermediums, von dem der Wärmetauscher durchflossen wird, liegt vorzugsweise zwischen 60 und 350 Grad Celsius.

In einer weiteren bevorzugten Ausführungsform des erfindungsgemäßen Verfahrens besteht der Wärmetauscher aus verschiedenen Modulen, Einheiten oder Abschnitten. Die Temperatur in einem ersten Abschnitt oder Modul des Wärmetauschers liegt beispielsweise bei 60 - 100 oder 80 - 120°C, in einem zweiten Abschnitt oder Modul zwischen 100 und 140 oder zwischen 120 und 160°C, in einem dritten Abschnitt zwischen 140 und 180 oder zwischen 160 und 200°C und in einem vierten Abschnitt zwischen 180 und 220, zwischen 200 und 240 oder zwischen 240 und 350°C. Dabei können die Einheiten, Module oder Abschnitte des Wärmetauschers so hintereinander geschaltet sein, dass die Temperatur des Fest-Flüssig-Gemisches nach Erreichen einer Höchst- oder Peaktemperatur von zum Beispiel 220 bis 260 Grad wieder auf eine niedrigere Ein- oder Ausleittemperatur gebracht wird.

In weiterer vorteilhafter Ausgestaltung der Erfindung ist vorgesehen, dass der Wärmetauscher mit einer Haltestrecke ausgestattet ist, durch die die Temperatur auf einem gleichbleibenden Niveau von zum Beispiel +/- 2 bis 8°Cgehalten wird.

Erfindungsgemäß bevorzugt wird das Reaktionsgemisch nach Durchlaufen des Wärmetauschers zur Durchmischung oder Aufwirbelung in mindestens einen mit einem Rühr- oder Mischsystem ausgestatteten Reaktor oder einen Reaktor geleitet, dessen Höhe mindestens das Doppelte seines Durchmessers beträgt.

In weiterer vorteilhafter Ausgestaltung der Erfindung ist ferner vorgesehen, dass die Komponenten aus Ausgangsstoffen, Wasser oder Katalysatoren bestehen.

Während der Verweilzeit einer Charge in einem Reaktor werden vorzugsweise Komponenten, Reaktionsprodukte, Prozesswasser oder Katalysatoren abgezogen, wobei der Zeitraum, über den Komponenten, Reaktionsprodukte, Prozesswasser oder Katalysatoren abgezogen werden, vorzugsweise mindestens ein Hundertstel der Verweilzeit beträgt. Während der Verweilzeit einer Charge in dem Reaktor können für einen Zeitraum von mindestens einem Hundertstel der Verweilzeit auch Komponenten, Prozesswasser oder Katalysatoren zugeführt werden. Dabei wird zugeführtes Prozesswasser vorzugsweise behandelt, wobei die Behandlung des zugeführten Prozesswassers mindestens eine Fest-Flüssig-Trennung oder eine andere Wasseraufbereitungsmaßnahme umfassen kann.

In besonders vorteilhafter Ausgestaltung der Erfindung ist vorgesehen, dass das Verfahren unter Sauerstoffabschluss stattfindet.

Die Behandlung des Fest-Flüssig-Gemischs bestehend aus Wasser und der kohlenstoffhaltigen Komponente ist vorzugsweise eine Hydrolyse.

Die Aufgabe wird ferner durch ein Verfahren zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente gelöst, bei dem das Fest-Flüssig-Gemisch bei einer Temperatur von über 100°C und einem Druck von über 5 bar behandelt und dem Fest-Flüssig-Gemisch in einem Membranreaktor bei der Reaktion kontinuierlich oder in Intervallen Wasser entzogen wird.

Der Membranreaktor weist dabei vorzugsweise mindestens eine Vorrichtung zur Fest-Flüssig-Trennung auf, welche mindestens eine Grob- und/oder eine Feinfiltration oder eine Kombination aus beiden Vorrichtungen umfasst, die auch in einer Filtrationsvorrichtung kombiniert sein kann. Durch den Einsatz des Membranreaktors können Reaktions-, Zwischen-, Neben- und Endprodukten selektiv aus dem Reaktionsgemisch entfernt, Edukte kontrolliert zugegeben oder entfernt oder der Kontakt der Edukte intensiviert werden. Die Fest-Flüssig-Trennung des Membranreaktors verläuft vorzugsweise kontinuierlich oder in Intervallen.

Die Aufgabe wird ferner durch ein Verfahren zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente gelöst, wobei das Fest-Flüssig-Gemisch bei einer Temperatur von über 100°C und einem Druck von über 5 bar behandelt wird. Erfindungsgemäß wird aufkonzentriertes Prozesswasser teilweise zur Vorinkubation, Vorwärmung von Ausgangsstoffen, Herstellung der Pumpfähigkeit eines Fest-Flüssig-Gemischs, zur Übernahme in das Reaktionsgemisch, zur Überschichtung von oder zur Beimischung zu vorgelegtem Ausgangsstoff in einem Reaktor der Anlage, zur Rückführung in den laufenden Prozess, als Wärmeträgermedium z.B. für weitere Prozesse innerhalb oder außerhalb einer Anlage eingesetzt und/oder als Düngemittelbestandteil verwendet.

Vorzugsweise wird die Aufkonzentrierung mittels Fest-Flüssig-Trennung durchgeführt und/oder durch Verdampfen von Wasser durchgeführt. Dabei werden bei der Aufkonzentrierung vorzugsweise mindestens 1 bis 10%, besonders bevorzugt mehr als 10%, des Wassers entfernt.

In vorteilhafter Ausgestaltung des erfindungsgemäßen Verfahrens ist vorgesehen, dass zum Aufkonzentrieren das Prozesswasser entweder direkt aus dem laufenden Prozess oder aus einem isolierten und als Druckbehälter ausgelegten Reservoir für unbehandeltes Prozesswasser entnommen wird.

In vorteilhafter Ausgestaltung des erfindungsgemäßen Verfahrens ist ferner vorgesehen, dass der aus der Verdampfung des Prozesswassers gewonnene Wasserdampf an anderer Stelle im Prozess eingesetzt wird, zum Beispiel zur Erhitzung der Ausgangsstoffe vor Eintritt in einen Wärmetauschers, Erwärmung von Thermoöl über einen Wärmetauscherprozess und/oder zum Betreiben einer Vorrichtung zum Trocknen von Reaktionsprodukten wie z.B. einer Luftwirbelmühle.

Erfindungsgemäß beansprucht wird auch die Verwendung von aufkonzentriertem Prozesswasser aus einem Verfahren zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente, wobei das Fest- Flüssig-Gemisch bei einer Temperatur von über 100°C und einem Druck von über 5 bar behandelt wird, zur Vorinkubation, Vorwärmung von Ausgangsstoffen, Herstellung eines pumpfähigen Fest-Flüssig-Gemischs, zur Übernahme in das Reaktionsgemisch, zur Überschichtung von oder zur Beimischung zu vorgelegtem Ausgangsstoff in einem Reaktor der Anlage, zur Rückführung in den laufenden Prozess, als Wärmeträgermedium und/oder als Düngemittelbestandteil. Dabei kann das Prozesswasser beispielsweise bei Temperaturen von 1 bis 50°C über der Temperatur für den jeweiligen Verwendungszweck gewonnen werden. Vorzugsweise wird noch erhitztes Prozesswasser mit einer Temperatur von 25 bis 50, 50 - 70 oder 70 - 99°C eingesetzt.

Die Aufgabe wird auch durch eine Vorrichtung zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente und zur Behandlung desselben gelöst, wobei das Fest-Flüssig-Gemisch bei einer Temperatur von über 100°C und einem Druck von über 5 bar behandelt wird, welche erfindungsgemäß eine Vorrichtung zur Aufkonzentrierung von abgezogenem Prozesswasser und zum Rückführen des aufkonzentrierten Prozesswassers zu dem Fest-Flüssig-Gemisch umfasst.

Vorzugsweise umfasst die Vorrichtung ferner eine Vorrichtung zur Fest-Flüssig-Trennung und/ einen Verdampfer.

In vorteilhafter Ausgestaltung der Erfindung kann die Vorrichtung auch ein isoliertes und als Druckbehälter ausgelegtes Reservoir für unbehandeltes Prozesswasser umfassen.

Die Aufgabe wird ferner durch eine pumpfähige Brennstoffsuspension oder-dispersion gelöst, die aus einem Fest-Flüssig-Gemisch aus Wasser und einer kohlenstoffhaltigen Komponente durch Behandeln bei einer Temperatur von über 100°C und einem Druck von über 5 bar, insbesondere nach dem oben beschriebenen Verfahren hergestellt wurde. Erfindungsgemäß weist die Suspension bzw. Dispersion einen Feststoffanteil von mindestens 40% auf, wobei der Feststoffanteil einen Kohlenstoffgehalt von mindestens 50% aufweist.

Die Aufgabe wird auch durch eine Zusatzstoffsuspension oder -dispersion zur Herstellung von keramischen Werkstoffen gelöst, welche aus einem Fest-Flüssig-Gemisch aus Wasser und einer kohlenstoffhaltigen Komponente durch Behandeln bei einer Temperatur von über 100°C und einem Druck von über 5 bar, insbesondere nach dem oben beschriebenen Verfahren, hergestellt wurde. Erfindungsgemäß weist die Suspension bzw. Dispersion einen Feststoffanteil von mindestens 40% auf, wobei der Feststoffanteil einen Kohlenstoffgehalt von mindestens 50% aufweist.

Vorzugsweise wird die erfindungsgemäße Zusatzstoffsuspension oder -dispersion zur Herstellung von keramischen Werkstoffen in einem Sol-Gel-Verfahren verwendet, wobei diese Verwendung das Zuleiten der sauren Suspension zu einem alkalischen Sol und damit Einleiten des Gelierprozesses umfasst.

Erfindungsgemäß beansprucht wird auch die Verwendung eines Fest-Flüssig-Gemischs aus Wasser und einer kohlenstoffhaltigen Komponente als Ausgangs- oder Zusatzstoff zur Herstellung eines isolierenden und/oder keramischen Werkstoffs, wobei das Fest-Flüssig-Gemisch bei einer Temperatur von über 100°C und einem Druck von über 5 bar behandelt und der Schwefel- und/oder Aschegehalt des Fest-Flüssig-Gemischs um mindestens 50% bzw. 75% bezogen auf den jeweiligen ursprünglichen Gehalt der kohlenstoffhaltigen Komponente vermindert wird. In vorteilhafter Ausgestaltung dieser erfindungsgemäßen Verwendung ist vorgesehen, dass das Gemisch sauer ist und ein keramischer Werkstoff mittels eines alkalischen Sols hergestellt wird.

In vorteilhafter Ausgestaltung der genannten erfindungsgemäßen Verwendungen ist vorgesehen, dass der Werkstoff eine Siliziumverbindung ist und das Sol organische oder anorganische Silikate und/oder Kieselsäure enthält. Dabei das Sol vorzugsweise eine wässrige Lösung von Wasserglas. Die Verwendungen umfassen ferner das Herstellen eines Gels enthaltend eine Kohlenstoffkomponente und eine Silikatkomponente sowie das Erhitzen des Gels bis zur Entwicklung von SiC-Gas. Die erfindungsgemäßen Verwendungen umfassen auch das Herstellen des keramischen Werkstoffs unter Verwendung des SiC-Gases, wobei das SiC-Gas in einen bereitgestellten porösen Formkörper eindringen kann. Dieser poröse Formkörper enthält vorzugsweise Grafit. Der hergestellte Werkstoff kann beispielsweise ein Siliziumkarbid sein, insbesondere SiC oder SiSiC.

Die Aufgabe wird ferner durch ein Verfahren zur Herstellung von Brennstoffen, kohlenstoffhaltigen Werk- oder Nutzstoffen, Humus oder Maillard- oder ähnlichen Reaktionsprodukten gelöst, welches das Behandeln einer Fest-Flüssig-Mischung aus Wasser und einer kohlenstoffhaltigen Komponente, z.B. Biomasse, bei einer Temperatur von über 100°C und einem Druck von über 5 bar umfasst. Erfindungsgemäß ist dabei vorgesehen, dass die Behandlung kontinuierlich durchgeführt wird, um in besonders vorteilhafter Weise einen besonders effizienten, schnellen und kostengünstigen Verfahrensablauf zu ermöglichen.

In vorteilhafter Ausgestaltung dieses erfindungsgemäßen Verfahrens ist vorgesehen, dass die Behandlung mindestens eine Stunde (1 h) dauert und/oder eine Bearbeitung der Biomasse und/oder eine Aufarbeitung der Reaktions-, Zwischen-, Neben und/oder Endprodukte umfasst.

Die Temperatur wird vorzugsweise auf über 160°C, vorzugsweise zwischen 160 und 300°C, besonders bevorzugt zwischen 185 und 225°C, eingestellt und/oder automatisch gesteuert.

Der Druck wird vorzugsweise auf mindestens 7 bar, besonders bevorzugt zwischen 10 und 34 bar, insbesondere zwischen 10 und 17 bar, 18 und 26 bar oder 27 und 34 bar, eingestellt.

Die Behandlungsdauer kann beispielsweise mindestens 2 Stunden, vorzugsweise 3 bis 60 Stunden, besonders bevorzugt 5 bis 30 Stunden oder 31 bis 60 Stunden, insbesondere 6 bis 12 Stunden oder 13 bis 24 Stunden betragen, wobei die Behandlungsdauer vorzugsweise in Abhängigkeit von der Art der Biomasse und/oder dem gewünschten Reaktionsprodukt gewählt wird.

In vorteilhafter Ausgestaltung des erfindungsgemäßen Verfahrens ist ferner vorgesehen, dass die Biomasse vorbehandelt wird, vorzugsweise durch Entwässerung, Zerkleinerung, Vorinkubation mit Hilfsstoffen, Vermischung und/oder Vorwärmung. Dabei wird die Biomasse vor der Behandlung vorzugsweise bei saurem pH-Wert inkubiert. Der pH-Wert kann dabei beispielsweise unter 6, vorzugsweise unter 5, weiter bevorzugt unter 4, besonders bevorzugt unter 3, insbesondere unter 2, liegen.

In vorteilhafter Ausgestaltung des erfindungsgemäßen Verfahrens ist ferner vorgesehen, dass die Biomasse vor, während und/oder nach der Behandlung zerkleinert, vorzugsweise gehäckselt und/oder gemahlen, wird. Dabei die Partikelgröße der zerkleinerten Biomasse unter 10 cm, besonders bevorzugt unter 1 cm, insbesondere unter 2 mm liegen.

In weiterer vorteilhafter Ausgestaltung des erfindungsgemäßen Verfahrens ist vorgesehen, dass der Biomasse vor und/oder während der Behandlung mindestens ein Katalysator zugegeben wird. Der der Katalysator kann aus mehreren verschiedenen Komponenten zusammengesetzt sein, die gemeinsam ein Katalysatorgemisch bilden. Der Katalysator ist vorzugsweise eine anorganische Säure, bevorzugt Schwefelsäure, und/oder eine Mono-, Di- oder Tricarbonsäure, bevorzugt Wein- oder Zitronensäure. Die Säure, die als Katalysator eingesetzt wird, kann gleichzeitig auch zur Einstellung des sauren pH-Werts für den Inkubationsschritt Verwendung finden. Der Katalysator kann ein oder mehrere Metalle und/oder Metallverbindungen umfassen, wobei das Metall, die Metalle und/oder die Metallverbindungen mindestens ein Übergangsmetall der Nebengruppen Ia, IIa, IVa, Va, VIa, VIIa und VIIIa des periodischen Systems der Elemente, bevorzugt Nickel, Cobalt, Eisen, Kupfer, Chrom, Wolfram, Molybdän oder Titan, besonders bevorzugt Eisen, umfasst/umfassen. Vorzugsweise umfasst der Katalysator mindestens einen Biokatalysator, vorzugsweise Enzyme, Mikroorganismen, pflanzliche Zellen, tierische Zellen und/oder Zellextrakte.

In vorteilhafter Ausgestaltung des erfindungsgemäßen Verfahrens ist ferner vorgesehen, dass die Biomasse vor und/oder während der Behandlung gemischt wird, vorzugsweise durch Rühren, Mischen, Suspendieren und/oder Aufwirbeln, wobei zum Mischen eine oder mehrere Mischvorrichtungen, insbesondere eine Kombination verschiedener Mischvorrichtungen, bevorzugt mindestens ein Flüssigkeitsstrahlmischer, -pumpe oder eine Düse, eingesetzt werden kann/können.

In weiterer vorteilhafter Ausgestaltung des erfindungsgemäßen Verfahrens ist vorgesehen, dass die Reaktionsprodukte nach der Behandlung mit einem Trockner, vorzugsweise einem Konvektions- oder Kontakttrockner, besonders bevorzugt mit einem Strom- und/oder Band-, und/oder Wirbelschichttrockner, getrocknet werden.

Erfindungsgemäß bevorzugt wird im Laufe des Verfahrens anfallendes Prozesswasser, vorzugsweise durch mindestens eine Vorrichtung zur Fest-Flüssig-Trennung, abgezogen und/oder gereinigt und in das Reaktionsgemisch zurückgeführt. Dabei kann die Vorrichtung zur Fest-Flüssig-Trennung mindestens eine Vorrichtung zur Mikro-, Ultra-, Nanofiltration- und zum Umkehrosmoseverfahren oder eine Kombination verschiedener vorgenannter Vorrichtungen, bevorzugt mit keramischen Filterelementen und besonders bevorzugt ein Rotationsscheiben und/oder ein Zentrifugalmembranfilter, sein.

In vorteilhafter Ausgestaltung des erfindungsgemäßen Verfahrens ist ferner vorgesehen, dass anfallendes Abwasser mechanisch, chemisch und/oder biologisch gereinigt wird. Vorzugsweise wird bei der Behandlung, Bearbeitung und/oder Aufarbeitung anfallende Abluft mechanisch, chemisch und/oder biologisch gereinigt.

In weiterer vorteilhafter Ausgestaltung des erfindungsgemäßen Verfahrens ist vorgesehen, dass die Reaktions-, Zwischen-, Neben und Endprodukte Brennstoffe von Torf, über Braunkohle bis zu Steinkohle-ähnliche Brennstoffe, Humus, Maillard- oder ähnliche Reaktionsprodukte, kohlenstoffhaltige Werkstoffe wie Dämmstoffe, Nanoschwämme, Nanokügelchen, Nanofasern, Nanokabel, Aktivkohle oder Sorptionskohle, Grillkohleersatzstoff, hochverdichtete Kohlenstoffprodukte und Werkstoffe und insbesondere auch Ausgangsstoffe für Graphit und graphithaltige oder graphitartige Produkte sowie Kohlenstofffasern und Ausgangsstoffe für Verbund- oder Faserverbundwerkstoffe umfassen.

Die Aufgabe wird ebenfalls durch eine Anlage zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente und zur Behandlung desselben bei einer Temperatur von über 100°C und einem Druck von über 5 bar gelöst, welche folgende Einrichtungen umfasst:
eine Beschickungsvorrichtung umfassend
eine Pumpe zur Förderung von Fest-Flüssig-Gemischen mit einem Festoffgehalt von mindestens 10 bis 15%, und/oder einen Wärmetauscher, bei dem das Betragsmittel des Winkels der Rohrachse zur Horizontalebene größer als 10 Grad ist; und/oder mindestens zwei Reaktoren, von denen mindestens einer mit einem Rühr- oder Mischsystem ausgestattet ist oder ein Höhen-Durchmesser-Verhältnis von mindestens 2 : 1 hat.

Der Wärmetauscher der Anlage weist die oben bereits beschriebenen Merkmale auf.

Die erfindungsgemäße Anlage umfasst vorzugsweise ferner eine Entspannungsvorrichtung, wobei die Entspannungsvorrichtung einen Reaktor mit einem Temperierungssystem oder einen Wärmetauscher oder eine Kombination aus beiden umfassen kann.

Die Aufgabe wird ferner durch ein Verfahren zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente gelöst, bei dem das Fest-Flüssig-Gemisch bei einer Temperatur von über 100°C und einem Druck von über 5 bar behandelt wird, wobei das Fest-Flüssig-Gemisch mindestens zwei parallel geschaltete Reaktoren und mindestens einen vorgeschalteten und/oder mindestens einen nachgeschalteten Reaktor durchläuft.

Erfindungsgemäß bevorzugt wird das Fest-Flüssig-Gemisch in mindestens einem vorgeschalteten Reaktor erhitzt, zerkleinert, durchmischt und/oder aufgewirbelt. In weiterer vorteilhafter Ausgestaltung des erfindungsgemäßen Verfahrens wird das Fest-Flüssig-Gemisch in mindestens einem vorgeschalteten Reaktor chemisch behandelt, vorzugsweise auf einen bestimmten pH-Wert eingestellt, und/oder in mindestens einem vorgeschalteten Reaktor aufkonzentriert, vorzugsweise durch Abziehen von Flüssigkeit.

Vorzugsweise wird das Fest-Flüssig-Gemisch in mindestens einem nachgeschalteten Reaktor entspannt, vorzugsweise durch Abkühlen des Gemisches, und/oder in mindestens einem nachgeschalteten Reaktor erhitzt, zerkleinert, durchmischt und/oder aufgewirbelt. Das Fest-Flüssig-Gemisch kann ferner in mindestens einem nachgeschalteten Reaktor auch chemisch behandelt, vorzugsweise auf einen bestimmten pH-Wert eingestellt, werden. In einem nachgeschalteten Reaktor kann das Fest-Flüssig Gemisch aber auch aufkonzentriert werden, vorzugsweise durch Abziehen von Flüssigkeit.

Die Aufgabe wird auch durch eine Vorrichtung zur Behandlung eines Fest-Flüssig-Gemischs aus Wasser und einer kohlenstoffhaltigen Komponente bei einer Temperatur von über 100°C und einem Druck von über 5 bar gelöst, welche einen ersten Reaktor und mindestens einen weiteren Reaktor umfasst, wobei der weitere Reaktor mit dem ersten Reaktor parallel geschaltet ist und wobei mindestens ein vorgeschalteter und/oder mindestens ein nachgeschalteter Reaktor vorgesehen ist/sind.

Vorzugsweise ist der vorgeschaltete Reaktor ein Rohrreaktor, ein Membranreaktor und/oder ein Reaktor, der mindestens einen senkrecht stehenden Grundkörper umfasst.

Der nachgeschaltete Reaktor ist vorzugsweise ebenfalls ein Rohrreaktor, ein Membranreaktor und/oder ein Reaktor, der mindestens einen senkrecht stehenden Grundkörper umfasst.

Das Höhen:Durchmesser-Verhältnis des zylindrischen Grundkörpers ist vorzugsweise 1:0,5, 1:2, 1:5 oder kleiner.

In besonders vorteilhafter Ausgestaltung der Erfindung weist der nachgeschaltete Reaktor ein anderes Volumen als der erste Reaktor auf, vorzugsweise ein größeres Volumen zum Entspannen des Fest-Flüssig-Gemisches. Vorzugsweise wird das Gemisch in dem nachgeschalteten Reaktor zur Entspannung zusätzlich abgekühlt.

In weiterer vorteilhafter Ausgestaltung der Erfindung ist vorgesehen, dass der nachgeschaltete Reaktor eine geringere Wandstärke als der erste Reaktor aufweist.

Die Aufgabe wird ferner durch ein Verfahren zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente gelöst, bei dem das Fest-Flüssig-Gemisch bei einer Temperatur von über 100°C und einem Druck von über 5 bar behandelt wird. Erfindungsgemäß wird das Fest-Flüssig-Gemisch kontinuierlich mindestens einem ersten Reaktor zugeführt, in mindestens einem zweiten Reaktor behandelt und mindestens einem dritten Reaktor entnommen.

In besonders vorteilhafter Ausgestaltung der Erfindung ist vorgesehen, dass das Zuführen, Behandeln und Entnehmen des Fest-Flüssig-Gemisches in den einzelnen Reaktoren zeitgleich erfolgt.

Vorzugsweise ist mindestens ein Parallelreaktor, der mit mindestens einem der ersten, zweiten und/oder dritten Reaktoren parallel geschaltetet ist, vorgesehen, in dem das Zuführen, Behandeln und/oder Entnehmen des Fest-Flüssig-Gemisches zeitgleich erfolgt.

Das Fest-Flüssig-Gemisch wird vorzugsweise in mindestens einem ersten und/oder dritten Reaktor erhitzt, zerkleinert, durchmischt und/oder aufgewirbelt. Alternativ oder zusätzlich kann das Fest-Flüssig-Gemisch in mindestens einem ersten und/oder dritten Reaktor auch chemisch behandelt, vorzugsweise auf einen bestimmten pH-Wert eingestellt, werden.

In weiterer vorteilhafter Ausgestaltung der Erfindung ist vorgesehen, dass das Fest-Flüssig-Gemisch in mindestens einem ersten und/oder dritten Reaktor aufkonzentriert wird, vorzugsweise durch Abziehen von Flüssigkeit.

Vorzugsweise wird das Fest-Flüssig-Gemisch dann in mindestens einem dritten Reaktor, vorzugsweise durch Abkühlen, entspannt.

Die Aufgabe wird auch durch eine Vorrichtung zur Behandlung eines Fest-Flüssig-Gemischs aus Wasser und einer kohlenstoffhaltigen Komponente bei einer Temperatur von über 100°C und einem Druck von über 5 bar gelöst, welche mindestens drei Rektoren umfasst, wobei mindestens ein erster Reaktor zur Aufnahme des Fest-Flüssig-Gemischs, mindestens ein zweiter Reaktor zur Behandlung des Fest-Flüssig-Gemischs und mindestens ein dritter Reaktor zur Entnahme des Fest-Flüssig-Gemischs vorgesehen sind.

Vorzugsweise ist dabei mindestens ein Parallelreaktor, der mit mindestens einem der ersten, zweiten und/oder dritten Reaktoren parallel geschaltetet ist, vorgesehen.

In besonders vorteilhafter Ausgestaltung der Erfindung ist vorgesehen, dass der erste Reaktor zur Aufnahme des Fest-Flüssig-Gemisches ein vorgeschalteter Reaktor im Sinne der vorherigen Beschreibung ist.

In besonders vorteilhafter Ausgestaltung der Erfindung ist ferner vorgesehen, dass der dritte Reaktor zur Entnahme des Fest-Flüssig-Gemischs ein nachgeschalteter Reaktor im Sinne der vorherigen Beschreibung ist.

### Beschreibung beispielhafter bevorzugter Ausführungsformen der Erfindung

Ein beispielhaftes erfindungsgemäßes Verfahren sieht vor, dass das kohlenstoffhaltige Fest-Flüssig-Gemisch und/oder die Ausgangsstoffe vor und/oder während der Behandlung zusätzlich bearbeitet wird und/oder die Reaktions-, Zwischen-, Neben- und/oder Endprodukte aufgearbeitet beziehungsweise prozessiert werden. Durch gezielte Vorbereitung beziehungsweise Vorbehandlung des Fest-Flüssig-Gemisches und weitere Bearbeitung des Fest-Flüssig-Gemisches während der Behandlung beziehungsweise des Reaktionsprozesses und/oder die Aufarbeitung der Reaktions-, Zwischen-, Neben- und/oder Endprodukte kann die Ausbeute an Brennstoffen, Humus, kohlenstoffhaltigen Werkstoffen und/oder Maillard- beziehungsweise Maillard-ähnlichen Reaktionsprodukten auf wirtschaftliche Weise erheblich gesteigert werden.

Bei der energetischen Verwertung von Biomasse wird nur so viel Kohlendioxid in die Atmosphäre freigesetzt, wie die lebenden Pflanzen zuvor zum Wachstum benötigen. Die Nutzung von Brennstoffen aus Biomasse ist daher Kohlendioxid-neutral und damit klimaverträglich. Weiter kann die Herstellung von Humus, der zum Beispiel auf landwirtschaftlichen Nutzflächen ausgebracht wird, als CO2-Senke dienen. Ohne solche Maßnahmen und ohne den verstärkten energetischen Einsatz nicht-fossiler Brennstoffe aus Biomasse sind Klimaschutzziele wie sie zum Beispiel im Kyoto-Protokoll festgelegt wurden, nur schwer zu erreichen.

Bei den erfindungsgemäßen Verfahren und Vorrichtungen zur Verwertung von Biomasse zur Herstellung von Brennstoffen ist der Anteil des Kohlenstoffs, der beim Umsetzungsprozess verloren geht, wesentlich geringer als bei anderen Verfahren. Bei sachgerechter Umsetzung geht wenig oder gar kein Kohlenstoff verloren. Der Kohlenstoffverlust liegt bei der alkoholischen Gärung über 30 Prozent, bei der Umsetzung zu Biogas bei etwa 50 Prozent, bei der Holzverkohlung bei etwa 70 Prozent und bei der Kompostierung über 90 Prozent. Dabei entweicht der Kohlenstoff als Kohlendioxid oder auch als Methan, die jeweils als klimaschädlich angesehen werden. Dies ist bei dem erfindungsgemäßen Verfahren nicht oder nur in sehr geringem Ausmaß der Fall.

Das erfindungsgemäße Verfahren hat einen hohen Wirkungsgrad. Die alkoholische Gärung hat dagegen nur einen geschätzten effektiven Wirkungsgrad von drei bis fünf Prozent der in den Pflanzen gespeicherten Primärenergie. Bei dem Verfahren gemäß der Anmeldung wird kein oder nur sehr wenig CO2 freigesetzt. Bei der Umwandlung von Biomasse in Biogas wird etwa die Hälfte des Kohlenstoffs wieder als CO2 freigesetzt. Außerdem sind nur wenige Substrate für einen wirtschaftlichen Betrieb einer Biogasanlage geeignet.

Anders als bei den bekannten Verfahren braucht bei dem Verfahren gemäß der Anmeldung die freigesetzte Wärme nicht weitgehend ungenutzt bleiben. Eine besondere Schwierigkeit besteht in der energetischen Verwertung von Biomasse mit einem hohen Feuchtigkeitsgehalt. Beim Verfahren der Anmeldung ist jedoch die Anwesenheit von Wasser Voraussetzung für den chemischen Umsetzungsvorgang. Bisherige Verfahren sind dagegen durch mangelnde Effizienz, geringere energetischen Nutzbarkeit und Wirtschaftlichkeit in ihrer Anwendung begrenzt.

Bei der Behandlung von Fest-/Flüssiggemischen wie beispielsweise Biomasse unter hohem Druck und bei hohen Temperaturen können die Reaktoren, in denen die Behandlung erfolgt, besondere Merkmale aufweisen. So kann die innere Oberfläche des Reaktors aufgrund der extremen Bedingungen korrosionsbeständig oder mit einer entsprechenden Beschichtung versehen sein. Darüber hinaus kann eine Einrichtung zur Durchmischung des Fest-Flüssig-Gemisches vorhanden sein.

Die Erfindung betrifft beispielsweise ein Verfahren zur Herstellung von Werk- und/oder Brennstoffen, Humus und/oder Maillard- beziehungsweise Maillard-ähnlichen Reaktionsprodukten aus kohlenstoffhaltigen Fest-Flüssig-Gemischen, bei dem das Fest-Flüssig-Gemisch bei einer Temperatur von über 100 Grad Celsius und einem Druck von über 5 bar für eine Behandlungsdauer von mindestens 30 bis 60 Minuten behandelt wird. In einer weiteren Ausgestaltung des Gegenstands der Anmeldung wird das Verfahren semikontinuierlich oder kontinuierlich durchgeführt. Das bedeutet, dass die Behandlung des Fest-Flüssig-Gemisches, insbesondere während des Reaktionsprozesses, nicht diskontinuierlich, das heißt im Batch-Verfahren, durchgeführt wird. Vielmehr werden zur optimalen Reaktionsraumausnutzung und zur Minimierung der Verweilzeiten Temperatur- und Druckverhältnisse weitgehend im Betriebsbereich gehalten. Gleichzeitig können während des laufenden Prozesses Ausgangsstoffe als auch Katalysatoren zeitversetzt in den Reaktionsraum eingebracht, Prozesswasser und nicht umgesetzte Ausgangsstoffe sowie andere zugeführte Medien entnommen und nach Bedarf recykliert sowie Störstoffe, Reaktions-, Zwischen-, Neben- und/oder Endprodukte abgezogen werden. Parallel dazu können weitere Verfahrensschritte, wie beispielsweise die Aufarbeitung und/oder Reinigung von Prozesswasser, Abwasser, Abluft, Reaktions-, Zwischen-, Neben- und/oder Endprodukte kontinuierlich oder in Intervallen durchgeführt werden.

In weiterer Ausgestaltung des Gegenstands der Anmeldung ist vorgesehen, dass die Temperatur auf über 160 Grad Celsius, vorzugsweise zwischen 160 und 300 Grad Celsius, besonders bevorzugt zwischen 185 und 225 Grad, eingestellt und/oder dass die Temperatur automatisch gesteuert wird. In weiterer Ausgestaltung des Gegenstands der Anmeldung ist vorgesehen, dass der Druck auf mindestens 7 bar, oder zwischen 10 und 34 bar, oder zwischen 10 und 17 bar, 17 und 26 bar oder 26 und 34 bar, eingestellt wird. In weiterer Ausgestaltung des Gegenstands der Anmeldung ist vorgesehen, dass die Behandlungsdauer mindestens mindestens 30 bis 60 Minuten, 1 - 3, 3 - 6 oder 6 - 24 Stunden, in einigen Fällen auch 24 - 60 Stunden beträgt. In weiterer Ausgestaltung des Gegenstands der Anmeldung ist vorgesehen, dass die Behandlungsdauer in Abhängigkeit von der Art der Ausgangsstoffe und/oder des Fest-Flüssig-Gemisches und/oder dem gewünschten Reaktionsprodukt gewählt wird.

In weiterer vorteilhafter Ausgestaltung der Erfindung ist vorgesehen, dass anfallendes Abwasser mechanisch, chemisch und/oder biologisch gereinigt wird.

Erfindungsgemäß ist beispielsweise auch vorgesehen, dass bei der Behandlung, Bearbeitung und/oder Aufarbeitung anfallende Abluft mechanisch, chemisch und/oder biologisch gereinigt wird.

Die Erfindung betrifft insbesondere ein Verfahren, vorzugsweise einen kontinuierlichen oder semikontinuierlichen Prozess, zur industriellen Herstellung von verschiedenen Reaktions-, Zwischen-, Neben- und/oder Endprodukten. Die Reaktions-, Zwischen-, Neben und Endprodukte können beispielsweise Brennstoffe von Torf, über Braunkohle bis zu Steinkohle-ähnliche Brennstoffe, Humus, Maillard- oder Maillard-ähnliche Reaktionsprodukte, kohlenstoffhaltige Werkstoffe wie Dämmstoffe, Nanoschwämme, - kügelchen, -fasern, -kabel, Aktiv- oder Sorptionskohle, Grillkohleersatzstoff, hochverdichtete Kohlenstoffprodukte und Werkstoffe und insbesondere auch Ausgangsstoffe für Graphit und graphithaltige oder -artige Produkte sowie Kohlenstofffasern und Ausgangsstoffe für Verbund- oder Faserverbundwerkstoffe umfassen.

In weiterer Ausgestaltung des Gegenstands der Anmeldung ist vorgesehen, dass das Fest-Flüssig-Gemisch zumindest teilweise aus Biomasse besteht. Dabei wird durch Zufuhr von Druck und Hitze das Grundprinzip der hydrothermalen Karbonisierung genutzt, um in dem effizienten und äußerst wirtschaftlichen anmeldungsgemäßen Verfahren feuchte Biomasse unter Freisetzung von Wärmeenergie zunächst zu depolymerisieren und hydrolysieren. Die Polymerisation der entstandenen Monomere führt innerhalb weniger Stunden zum Aufbau kohlenstoffhaltiger Reaktionsprodukte. Gewünschte Reaktionsprodukte werden in Abhängigkeit von den Reaktionsbedingungen hergestellt. Beispielsweise entsteht nach kürzerer Reaktionsdauer unter anderem zunächst Humus und im weiteren Reaktionsverlauf Brennstoffe mit steigendem Kohlenstoffgehalt, die zur Energiegewinnung geeignet sind. Die Anmeldung sieht auch die Herstellung von verschiedenen Reaktions-, Zwischen, Neben- und/oder Endprodukten nach dem anmeldungsgemäßen Verfahren vor, einschließlich der Herstellung von Brennstoffen von Torf, über Braunkohle bis zu Steinkohle-ähnlichen Brennstoffe, Humus, Maillard- oder Maillard-ähnlichen Reaktionsprodukte, kohlenstoffhaltige Werkstoffe wie Dämmstoffe, Nanoschwämme, kügelchen, -fasern, -kabel, Aktiv- oder Sorptionskohle, Grillkohleersatzstoff, hochverdichtete Kohlenstoffprodukte und Werkstoffe und insbesondere auch Ausgangsstoffe für Graphit und graphithaltige oder -artige Produkte sowie Kohlenstofffasern und Ausgangsstoffe für Verbund- oder Faserverbundwerkstoffe.

In beispielhafter Ausgestaltung der Erfindung ist vorgesehen, dass der Reaktor ein Kaskaden-, Rohr-, Kreislauf-, Schlaufen- und/oder Rührreaktor, und/oder vorzugsweise ein Membran- und/oder Wirbelschichtreaktor ist. Bevorzugt besitzt mindestens ein Reaktor oder eine Kombination verschiedener Reaktoren mindestens eine Eigenschaft und vorzugsweise Kombinationen verschiedener Eigenschaften eines Kaskaden-, Rohr-, Kreislaufreaktors und bevorzugt eines Schlaufen- oder Rührreaktors oder besonders bevorzugt eines Membran- oder eines Wirbelschichtreaktors. Besonders bevorzugt umfasst mindestens ein Reaktor mindestens ein Membranteil und/oder mindestens eine Einrichtung zur Erzeugung einer zirkulierenden Wirbelschicht.

In weiterer beispielhafter Ausgestaltung der Erfindung ist vorgesehen, dass die Vorrichtung zur Behandlung der Biomasse mindestens einen Reaktor zur Aufnahme der Biomasse und mindestens eine Einrichtung zur Bearbeitung der Biomasse und/oder Aufarbeitung der Reaktionsprodukte und/oder der Nebenprodukte aufweist. In weiterer Ausgestaltung des Gegenstands der Anmeldung ist vorgesehen, dass der Reaktor ein Rohrreaktor, Kreislaufreaktor und besonders vorteilhaft ein Schlaufenreaktor oder Rührreaktor, und/oder vorzugsweise ein Membran- und/oder Wirbelschichtreaktor. Vorzugsweise umfasst mindestens ein Reaktor mindestens ein Membranteil und/oder mindestens eine Einrichtung zur Erzeugung einer zirkulierenden Wirbelschicht . Gleichzeitig ist der Reaktor für Temperaturen von mindestens 100 Grad Celsius und mindestens einem Druck von über 5 bar ausgelegt.

Um die Kapazität beziehungsweise den Durchsatz der anmeldungsgemäßen Anlage zu erhöhen, können mehrere Reaktoren zur Aufnahme und Behandlung der Biomasse vorgesehen sein. Diese können dann in Serie geschaltet sein.

Der erfindungsgemäße Werk- und/oder Brennstoff, wird aus Biomasse hergestellt und weist einen im Vergleich zur Biomasse um 1 bis 300 Prozent höheren Kohlenstoffanteil bezogen auf den prozentualen Massenanteil der Elemente (Trockenmasse) auf. Der erfindungsgemäße Werk- und/oder Brennstoff umfasst Brennstoffe von Torf, über Braunkohle bis zu Steinkohle-ähnliche Brennstoffe, Humus, Maillard- oder Maillard-ähnliche Reaktionsprodukte, sowie kohlenstoffhaltige Werkstoffe wie Dämmstoffe, Nanoschwämme, -kügelchen, -fasern, -kabel, Rein-, Reinst- und Ultrareinkohle-, bzw. Aktiv- oder Sorptionskohle -ähnliche Stoffe, Grillkohleersatzstoff, hochverdichtete Kohlenstoffprodukte und -Werkstoffe und insbesondere auch Ausgangsstoffe für Graphit und graphithaltige oder-artige Produkte sowie Kohlenstofffasern und Ausgangsstoffe für Verbund- oder Faserverbundwerkstoffe.

Der erfindungsgemäße Werk- und/oder Brennstoff kann einen im Vergleich zur Biomasse um 10 bis 300 Prozent, auch 50 bis 300 Prozent, oder auch 100 bis 300 Prozent, und insbesondere 200 bis 300 Prozent erhöhten Kohlenstoffanteil bezogen auf den prozentualen Massenanteil der Elemente (Trockenmasse) aufweisen. Alternativ kann der erfindungsgemäße Werk- und/oder Brennstoff einen im Vergleich zur Biomasse um 5 bis 200 Prozent, auch 10 bis 150 Prozent, auch 10 bis 120 Prozent, und insbesondere 50 bis 100 Prozent erhöhten Kohlenstoffanteil bezogen auf den prozentualen Massenanteil der Elemente (Trockenmasse) aufweisen.

Der erfindungsgemäße Werk- und/oder Brennstoff weist einen Kohlenstoffanteil im Vergleich zum Ausgangsstoff von 50 bis 90 Prozent, auch von 55 bis 80 Prozent, und auch von über 98 Prozent, jeweils bezogen auf den prozentualen Massenanteil der Elemente (Trockenmasse) auf. In weiterer Ausgestaltung des Gegenstands der Anmeldung ist der Wasserstoffanteil des Werk- und/oder Brennstoffs im Vergleich zur Biomasse um 1 bis 300 Prozent, auch 5 bis 200 Prozent, und auch um 20 bis 100 Prozent jeweils bezogen auf den prozentualen Massenanteil der Elemente (Trockenmasse) vermindert. In weiterer Ausgestaltung des Gegenstands der Anmeldung ist der Sauerstoffanteil des Werk- und/oder Brennstoffs im Vergleich zum Ausgangsstoff um 1 bis 300 Prozent, auch um 5 bis 200 Prozent, und auch um 15 bis 100 Prozent jeweils bezogen auf den prozentualen Massenanteil der Elemente (Trockenmasse) vermindert.

In weiterer Ausgestaltung des Gegenstands der Anmeldung ist der Stickstoffanteil des Werk- und/oder Brennstoffs im Vergleich zum Ausgangsstoff um 1 bis 300 Prozent, bevorzugt 5 bis 200 Prozent, besonders bevorzugt um 15 bis 100 Prozent jeweils bezogen auf den prozentualen Massenanteil der Elemente (Trockenmasse) vermindert. Der anmeldungsgemäße Werk- und/oder Brennstoff kann mindestens oder mehr als 65 Prozent des ursprünglichen Brennwertes der Ausgangsstoffe und insbesondere der Biomasse bezogen auf die Trockenmasse aufweisen. Der anmeldungsgemäße Werk- und/oder Brennstoff kann aufgrund seiner Zusammensetzung und Struktur im Vergleich zu Biomasse bzw. alternativen fossilen oder Biomasse-Brennstoffen deutlich günstigere und umweltfreundlichere Verbrennungseigenschaften haben, zum Beispiel aufgrund verminderter Ascheanteile, geringerem Chlor-, Nitrat-, Schwefel- und Schwermetallgehalt sowie geringerer Emissionen von Staub, Feinstaub und gasförmigen Schadstoffen einschließlich Stick- und Schwefeloxiden.

Der erfindungsgemäße Werk- und/oder Brennstoff kann ferner im Vergleich zu Biomasse bzw. alternativen festen fossilen oder Biomasse-Brennstoffen auch eine höhere Reaktivität und eine niedrigere Selbstentzündungstemperatur aufweisen. Wenn er eine Porosität aufweist, dann lässt sich der anmeldungsgemäße Werk- und/ oder Brennstoff mit geringerem Energieaufwand zerkleinern als feste fossile Brennstoffe mit vergleichbarem Brennwert bzw. Kohlenstoffgehalt. Eine große Oberfläche ergibt sich bei einer geringen Partikelgröße des anmeldungsgemäßen Werk- und/oder Brennstoffs, insbesondere ein Partikelgröße von etwa 2 Nanometer bis 50 Mikrometer, auch unter einem Mikrometer und auch unter 200 Nanometer. Der anmeldungsgemäße Werk- und/oder Brennstoff lässt sich dann aufgrund der kleinen Partikelgröße und seiner großen Oberfläche gut trocknen.

Der erfindungsgemäße Werk- und/oder Brennstoff enthält Maillard- oder Maillard-ähnliche Reaktionsprodukte. In einer Ausgestaltung des Gegenstands der Anmeldung wird der Werk- und/oder Brennstoff aus Biomasse nach einem Verfahren hergestellt, das zumindest die folgenden Schritte umfasst: Behandlung der Biomasse bei einer Temperatur von über 100 Grad Celsius und einem Druck von über 5 bar für eine Behandlungsdauer von mindestens 1 Stunde sowie Bearbeitung der Biomasse und/oder Aufarbeitung der Reaktions -, Zwischen-, Neben- und/oder Endprodukte. Die Temperatur kann auf über 160 Grad Celsius, auch zwischen 160 und 300 Grad Celsius, und auch zwischen 185 und 225 Grad, eingestellt werden. Der Druck kann auf mindestens 7 bar, auch zwischen 10 und 34 bar, und auch zwischen 10 und 17 bar, 18 und 26 bar oder 27 und 34 bar, eingestellt werden. Die Behandlungsdauer kann bei mindestens 2 Stunden, vorzugsweise 3 bis 60 Stunden liegen, auch bei 5 bis 30 Stunden oder bei 31 bis 60 Stunden, insbesondere bei 6 bis 12 Stunden oder bei 13 bis 24 Stunden. Nach der Behandlung der Biomasse werden die Reaktionsprodukte mit einem Trockner, auch mit einem Konvektions- oder Kontakttrockner, mit einem Strom- und/oder Band-, und/oder mit einem Wirbelschichttrockner, bis zu einem gewünschten Restfeuchtigkeitsgehalt von 6 bis 25 Prozent, auch 10 bis 20 Prozent, oder auch 12 bis 15 Prozent, getrocknet.

Die Reaktions-, Zwischen-, Neben und Endprodukte des oben beschriebenen Verfahrens umfassen Brennstoffe von Torf, über Braunkohle bis zu Steinkohle-ähnliche Brennstoffe, Humus, Maillard- oder Maillard-ähnliche Reaktionsprodukte, sowie kohlenstoffhaltige Werkstoffe wie Dämmstoffe, Nanoschwämme, -kügelchen, - fasern, -kabel, Aktiv- oder Sorptionskohle, Grillkohleersatzstoff, hochverdichtete Kohlenstoffprodukte und - Werkstoffe und insbesondere auch Ausgangsstoffe für Graphit und graphithaltige oder - artige Produkte sowie Kohlenstofffasern und Ausgangsstoffe für Verbund- oder Faserverbundwerkstoffe. Die Anmeldung betrifft ferner die Verwendung des anmeldungsgemäß hergestellten Werk- und/oder Brennstoffs zur Erzeugung von Energie aus Biomasse.

Biomasse umfasst im Gegensatz zu fossilen Brennstoffen nachwachsende Rohstoffe, die als heimische Energieträger langfristig verfügbar sind, sowie alle flüssigen und festen organischen Stoffe und Produkte biologischer und biochemischer Vorgänge und deren Umwandlungsprodukte, die für dieses Verfahren einen ausreichend hohen Kohlenstoffanteil besitzen und auch sonst in Ihrer Zusammensetzung und Beschaffenheit zu wirtschaftlich nutzbaren Reaktions-, Zwischen-, Neben und Endprodukten durch das anmeldungsgemäße Verfahren einschließlich Brennstoffen verarbeitet werden können. Zum Beispiel zählen zu den Ausgangsstoffen Kohlenhydrate, Zucker und Stärken, land- und forstwirtschaftliche Erzeugnisse, auch speziell angebaute Energiepflanzen (schnell wachsende Baumarten, Schilfgräser, Getreideganzpflanzen u.ä.), Soja, Zuckerrohr und Getreidestroh sowie biogene Rest-, Abfallstoffe und Nebenprodukte, Pflanzen und Pflanzenreste anderer Herkunft (Straßenbegleitgrün, Landschaftspflegegut u.ä.), landwirtschaftliche Abfälle einschließlich Stroh, Zuckerrohrblätter, Abputzgetreide, unverkäufliche Partien an landwirtschaftlichen Erzeugnissen wie zum Beispiel Kartoffeln oder Zuckerrüben, verdorbene Silagepartien sowie sonstige Futterreste, Rasenschnittgut, Getreidestroh, Rübenblatt, Zuckerrohrblätter, kohlenstoffhaltige Rest- und Abfallstoffe einschließlich Biomüll, heizwertreiche Fraktionen von Haus- und Gewerbeabfällen (Restmüll), Klärschlamm, verschiedene Holzarten und -klassen einschließlich Waldholz, Bauholz, Paletten, Altmöbel, Sägemehl, Reste und Abfälle aus der Ernährungsindustrie einschließlich Küchen- und Speiseabfälle, Abfallgemüse, Altfette sowie Papier und Zellstoff, Textilien insbesondere aus Naturfasern und natürlichen Polymeren und tierische Exkremente einschließlich Gülle, Pferdemist und Geflügelkot. Kadaver und insbesondere Tierkadaver können auch zu Biomasse gerechnet werden.

Unter Behandlung der Ausgangsstoffe und/oder des Fest-Flüssig-Gemisches im Sinne der Anmeldung werden alle Einwirkungen auf das Fest-Flüssig-Gemisch verstanden, die der Umwandlung des FestFlüssig-Gemisches in die Reaktionsprodukte dienen, insbesondere die Zufuhr von Energie zur Ingangsetzung und Aufrechterhaltung der Umsetzungsreaktion, einschließlich der Behandlung des Fest-Flüssig-Gemisches bei einer Temperatur von über 100 Grad Celsius und einem Druck von über 5 bar. Bearbeitung der Biomasse und/oder des Fest-Flüssig-Gemisches im Sinne der Anmeldung ist die Bearbeitung der Ausgangsstoffe, Reaktions- und/oder Zwischenprodukte in verschiedenen Schritten vor und nach dem chemischen Umsetzungsprozess. Bearbeitung umfasst sämtliche Schritte, Vorgänge und Einwirkungen auf die Reaktionspartner einschließlich der Vorbehandlung und/oder Nachbehandlung.

Unter Vorbehandlung werden alle Einwirkungen verstanden, die bis zum Abschluss des Befüllungsvorgangs des Reaktionsraums und dem Beginn der Zufuhr von Energie zur Ingangsetzung der Umsetzungsreaktion auf das Fest-Flüssig-Gemisch einwirken. Insbesondere zählt zur Vorbehandlung auch eine Vorwärmung der Ausgangsstoffe sowie eine Zerkleinerung mit vorwiegender, d.h. mehr als zwei Drittel der Bestandteile des Reaktionsgemischs, Partikelgröße von unter 10 mm innerhalb oder außerhalb des Reaktionsraums.

Fest-Flüssig-Gemische im Sinne der Anmeldung sind alle Suspensionen, Dispersionen und sonstigen dispersen Systeme, einschließlich flüssigkeitshaltiger Feststoffe, insbesondere Biomasse. Das anmeldungsgemäße Verfahren findet insbesondere Anwendung für solche Fest-Flüssig-Gemische, die während des Reaktionsverlaufs auf physikalischem oder chemischem Wege zur Erhöhung des Gehalts der flüssigen Phase beziehungsweise an Lösungsmittel und/oder zur physikalischen oder chemischen Veränderung des Feststoffs führen, die eine verbesserte Fest-Flüssig-Trennung oder veränderte Verhältnisse mit höheren Feststoffanteilen ermöglichen. Ausgangsstoffe sind in diesem Zusammenhang flüssigkeitshaltige oder nicht-flüssigkeitshaltige Feststoffe, die zur Herstellung des Fest-Flüssig-Gemisches eingesetzt werden.

Aufarbeitung und/oder Konditionierung der Reaktionsprodukte und/oder Nebenprodukte im Sinne der Anmeldung umfasst alle Einwirkungen auf die Neben- und/oder Endprodukte der Umsetzungsreaktion, mittels derer diese in die gewünschte oder erforderliche Form gebracht werden.

Unter semikontinuierlichem oder kontinuierlichem Verfahren im Sinne der Anmeldung ist die Herstellung von Reaktions-, Zwischen-, Neben und Endprodukten im Technikums- und/oder industriellem Maßstab zu verstehen, bei der mindestens ein Kriterium, oder auch zwei oder auch mehrere der unten angeführten Kriterien erfüllt sind:
1. Die Temperatur, insbesondere in mindestens einem Druckbehälter, Reaktor oder Anlagenbestandteil, liegt über mindestens zwei Reaktionszyklen hinweg kontinuierlich oberhalb von 40 bis 90 Grad Celsius, bevorzugt von 60 bis 70 Grad Celsius und/oder oberhalb der Siedetemperaturen des Prozesswassers bei einem bar Absolutdruck, so dass ein längerer unmittelbarer und folgenloser händischer Kontakt mit der direkt mit dem Reaktionsgemisch in Berührung stehenden Behälterwand von über einer Minute nur mit Hilfsmitteln, isolierenden Stoffen oder zusätzlichen Vorrichtungen möglich ist.
2. Der Druck, insbesondere in mindestens einem Druckbehälter, Reaktor oder Anlagenbestandteil, liegt über mindestens zwei Reaktionszyklen hinweg kontinuierlich oberhalb von einem bar Absolutdruck. Mindestens zwei Behälter, davon mindestens ein Reaktor, sind in einer Weise miteinander verbunden, dass ein Transport, Druckausgleich oder die Speicherung von komprimierten Medien realisiert werden kann.
3. Die Bearbeitung der Ausgangsstoffe, Fest-Flüssig-Gemische, Reaktions-, Neben-, Zwischen- und/oder Endprodukte oder andere Reaktionsteilnehmer wird in mehr als einem Behälter innerhalb der Anlage durchgeführt.
4. Das Gesamtvolumen der Behälter, in denen diese Bearbeitung stattfindet und die gleichzeitig jeweils feste Bestandteile der Anlagen sind, beträgt mindestens 500 Liter wobei mindestens einer dieser Behälter, nicht allein händisch sondern nur mit zusätzlichen Hilfsmitteln zu bewegen ist.
5. Es wird ein vorbehandeltes kohlenstoffhaltiges Fest-Flüssig-Gemisch und/oder unterschiedliche Arten von Ausgangsstoffen, Biomassen oder Kohlenstoffverbindungen, insbesondere von unterschiedlicher Beschaffenheit und Konsistenz, während eines Reaktionszyklus eingesetzt.
6. Verschiedene Ausgangsstoffe der Fest-Flüssig-Gemische, Reaktions-, Neben-, Zwischen- und/oder Endprodukte und/oder andere Reaktionsteilnehmer, einschließlich Katalysatoren und/oder Treib- oder Temperierungsmittel wie zum Beispiel Wasser, insbesondere Prozesswasser und/oder Gas wie Prozess/Synthesegas, werden während eines Reaktionszyklus gleichzeitig, zeitversetzt, kontinuierlich oder diskontinuierlich dem Reaktionsgemisch zugeführt oder abgezogen. Die Vorgänge unter 6. finden statt, während die Temperatur von Druckbehälter, Reaktor oder anderen Anlagenbestandteilen oberhalb von 60 bis 70 Grad Celsius oder oberhalb der Siedetemperaturen des Prozesswassers bei einem bar Absolutdruck oder während der Druck mindestens eines Anlagenbestandteils oberhalb von einem bar Absolutdruck liegt.
7. Das Reaktionsgemisch wird innerhalb eines zusammenhängenden Prozesses, insbesondere innerhalb einer Anlage, behandelt.
8. Vor und/oder während des Reaktionszyklus werden die Ausgangsstoffe oder das Reaktionsgemisch in Bewegung versetzt durch Einbringung von kinetischer Energie, insbesondere durch mindestens ein Rühr- oder Mischsystem oder eine Kombination von Rühr- oder Mischsystemen gleich welcher Art, bevorzugt unter Beteiligung mindestens eines nicht mechanischen Rühr- oder Mischsystems, wobei bei Verwendung eines einzelnen Systems, dieses keine magnetische Kupplung mit nur einer Welle aufweist und gleichzeitig auch nicht elektrisch betrieben wird.
9. Vor und/oder während des Zyklus wird den Ausgangsstoffen oder dem Reaktionsgemisch thermische Energie zu- und/oder abgeführt wird, insbesondere unter Verwendung mindestens eines Temperierungssystems oder einer Kombination aus verschiedenen Systemen oder Vorrichtungen, wobei bei Verwendung eines einzelnen Systems dieses vorzugsweise kein handelsüblicher Ofen ist und/oder keine wandständige Wärmeübertragung durch ein mit wenigen Handgriffen trennbares beheiztes Mantelgefäß, das elektrisch betrieben wird, aufweist.
10. Das kontinuierliche Verfahren wird insbesondere durch die in der Beschreibung enthaltenen Merkmale und Merkmalskombinationen der für die Umsetzung des kontinuierlichen Verfahrens eingesetzten Vorrichtungen und Einrichtungen charakterisiert. Aus den darin enthaltenen Merkmalen lassen sich weitere Kriterien für ein kontinuierliches Verfahren ableiten, bei dem kohlenstoffhaltige Ausgangsstoffe über einen Wärmetauscher kontinuierlich einem ersten Reaktor zugeführt und das Reaktionsgemisch chargenweise von einem zum folgenden Reaktor weitergeleitet wird und Reaktionsprodukte kontinuierlich aus einem letzten Reaktor abgeführt werden.

Unter Behälter wird ein nach oben offener oder geschlossener Gegenstand verstanden, der in seinem Inneren einen Hohlraum aufweist, der insbesondere dem Zweck dient, seinen Inhalt von seiner Umwelt zu trennen. Ein Behälter, in dem die Umsetzungsreaktion, d. h. die Behandlung des Fest-Flüssig-Gemisches, und/oder die Bearbeitung des Fest-Flüssig-Gemisches durchgeführt wird, beispielsweise ein Druckbehälter oder ein Reaktor, wird durch einen nach außen abgeschlossenen Reaktionsraum oder Druckbehälterraum gebildet.

Als Reaktor wird insbesondere ein Behälter bezeichnet, in dem entscheidende Reaktionsschritte stattfinden. Als entscheidende Reaktionsschritte sind insbesondere die Schritte zu verstehen, die zum großen Teil zum Beispiel in einem Temperatur- und Druckbereich ablaufen, der im Durchschnitt vorliegen muss, um mindestens 10 bis 30 Prozent der Ausgangsstoffe in eines der genannten Reaktions-, Zwischen-, Neben und Endprodukte umwandeln zu können.

Reaktionsräume oder Druckbehälterräume werden definiert durch das Vorliegen von räumlichen Bereichen auch innerhalb nur eines Reaktions- oder Druckbehälterraums, in denen messbare voneinander abweichende Reaktionsbedingungen herrschen. Eine abweichende Reaktionsbedingung kommt dabei durch eine konstruktive, mechanische, strömungs- und/oder phasenbedingte, chemische, elektrische, oder elektrochemische oder anders geartete Einwirkung zustande. Die zu diesem Zweck verwendete Vorrichtung geht in der Regel über ein elektrisch betriebenes Rühr- oder Mischsystem mit einer einzigen Welle mit magnetischer Kupplung sowie über eine wandständige Wärmeübertragung einer druckbelasteten glatten Innenseite der äußeren Reaktorwand durch ein mit wenigen Handgriffen trennbares beheiztes Mantelgefäß, das elektrisch betrieben wird, eines Autoklaven für Laborzwecke hinaus.

Als Reaktionszyklus, Zyklus oder Reaktion wird die Dauer einer einzelnen Umsetzungsreaktion verstanden, die mit der Einbringung der Ausgangsprodukte in den Reaktionsraum und der Zufuhr von Energie beginnt, die der Ingangsetzung der Umsetzungsreaktion dient. Ein Zyklus dauert vom Start des Reaktionsprozesses bis zum Vorliegen des gewünschten Reaktionsprodukts im Reaktionsgemisch ohne Nachbehandlung oder Konditionierung beziehungsweise bis zur Beendigung des Reaktionsprozesses.

Zu Rühr- oder Mischsystemen zählen Vorrichtungen, die die Energie mechanisch oder mittels Ultraschall, strömungsbedingt, thermisch oder konstruktionsbedingt auf das Reaktionsgemisch übertragen und dadurch eine Bewegung des Reaktorinhalts durch Durch- oder Aufmischen bewirken. Dazu zählt auch die Bewegung des Reaktionsgemischs durch Vorrichtungen wie Pumpen, Flüssigkeitsstrahlmischer, Düsen sowie mechanische und thermische Mischer oder die Führung des Reaktionsgemischs entlang von Druckgradienten.

Eine Anlage besteht aus mindestens zwei Vorrichtungen oder Einrichtungen zur Durchführung des anmeldungsgemäßen Verfahrens. Mindestens zwei Behälter, davon mindestens ein Reaktor, können in einer Weise miteinander verbunden sein, dass ein Druckausgleich oder die Speicherung von komprimierten Medien realisiert werden kann. Ein fester Bestandteil der Anlage ist eine Vorrichtung beziehungsweise ein Behälter, dann wenn im Falle eines Ausfalls dieses Bestandteils, die Effizienz des Verfahrens insbesondere in wirtschaftlicher Hinsicht um mindestens zwei, bevorzugt um fünf und besonders bevorzugt um mindestens zehn Prozent eingeschränkt ist.

Ein zusammenhängender Prozess liegt vor, wenn Vorrichtungen oder Einrichtungen einer Anlage gemeinsam genutzt werden. In einer solchen Anlage können mehr als 200 Kilogramm eines Ausgangsstoffes pro Woche bezogen auf die Trockensubstanz verarbeitet werden. Eine Anlage wird dann gemeinsam genutzt, wenn Vorrichtungen oder Einrichtungen miteinander oder durch Leitungsverbindungen oder räumlich durch Wege miteinander verbunden sind, die einen Austausch von Ausgangs, Zwischen-, Neben- und Reaktionsprodukten sowie anderen Reaktionsteilnehmern beziehungsweise die gemeinsame Nutzung desselben innerhalb eines Radius von 50 km erlauben.

Der Beginn oder das Einsetzen der Reaktion oder des Reaktionsprozesses ist durch das Erreichen mindestens eines Zielparameters der Reaktionsführung einschließlich Druck oder Temperatur gekennzeichnet, bei denen die Umsetzungsreaktion der hydrothermalen Karbonisierung über einen Zeitraum von mindestens einer Stunde stattfinden kann. Das Ende des Reaktionsprozesses ist durch das kontinuierliche Verlassen mindestens eines der Zielparameter der Reaktionsführung vor der Entleerung des Reaktionsraums charakterisiert. Reaktions-, Zwischen- oder Nebenprodukte oder -partner im Sinne der Anmeldung sind alle festen, flüssigen und gasförmigen Stoffe, die sich unabhängig von ihrer Aufenthaltsdauer im Reaktionsraum unter Betriebsbedingungen (Druck größer 5 bar, Temperatur größer 100 Grad) befinden oder befunden haben.

Fest-Flüssig-Gemische im Sinne der Anmeldung sind alle Suspensionen, Dispersionen und sonstigen dispersen Systeme, einschließlich flüssigkeitshaltiger Feststoffe, insbesondere Biomasse. Die anmeldungsgemäße Vorrichtung findet insbesondere Anwendung für solche Fest-Flüssig-Gemische, die während des Reaktionsverlaufs auf physikalischem oder chemischem Wege zur Erhöhung des Gehalts der flüssigen Phase beziehungsweise an Lösungsmittel und/oder zur physikalischen oder chemischen Veränderung des Feststoffs führen, die eine verbesserte Fest- Flüssig-Trennung oder veränderte Verhältnisse mit höheren Feststoffanteilen ermöglichen.

Suspensionen und Dispersionen sind beides heterogene Fest-Flüssig-Gemische. Unter Suspension wird ein heterogenes (nicht mischbar) Stoffgemisch aus einer Flüssigkeit und einem Feststoff verstanden. Eine Suspension besitzt mindestens eine feste Phase und mindestens eine flüssige Phase. Zu dispersen Systemen, d.h. binäre Mischungen aus kleinen Partikeln und einem kontinuierlichen Dispersionsmedium, zählen kolloidale Dispersionen, Mizellen, Vesikel, Emulsionen, Gele u. Aerosole wie beispielsweise Anstrichfarben, Emulsionen und Schäume.

Unter Maillard-ähnlichen Reaktionsprodukten werden im Sinne der Anmeldung Verbindungen verstanden, die Zwischen-, Neben-, Endprodukte oder Reaktionspartner von Maillard-Reaktionsprodukten sind und über ähnliche chemische, physikalische oder biologische Eigenschaften verfügen können. Zu diesen Verbindungen zählen zum Beispiel die Advanced Glycation Endproducts (AGE) die durch Umlagerung der primären Amadori-Produkte entstehen und weiter zu den Endprodukten der Maillard-Reaktion, den Advanced Glycation Endproducts (AGE) reagieren. Durch Umlagerung und Polymerisation können die AGEs Quervernetzungen mit anderen Proteinen ausbilden. Aufgrund des Entstehungsweges gibt es sehr viele verschiedene und komplexe Formen von AGEs, wobei Nε(carboxymethyl)Lysin (CML), Furosin und Pentosidin bisher am intensivsten untersucht wurden.

Unter Polytetrafluorethylen (PTFE)-ähnlichen Stoffen werden Stoffe und Verbindungen ähnlicher, verwandter oder nicht-verwandter Klassen verstanden, die mindestens eine oder mehrere Eigenschaften von Polytetrafluorethylen wie zum Beispiel Reaktionsträgheit, sehr geringen Reibungskoeffizienten, sehr niedrige Brechzahl, hohe Wärmebeständigkeit, geringe Haftbeständigkeit von Oberflächenverschmutzungen oder glatte Oberfläche besitzen.

Brennstoffe sind Stoffe, die zur Energieerzeugung dienen und beispielsweise mittels thermischer, chemischer, elektrischer oder anderer Verfahren in Energie umgesetzt werden. Werkstoffe sind Stoffe, die durch Weiterverarbeitung, Behandlung oder Konditionierung in ein Produkt weiterverarbeitet werden oder als Arbeitsgegenstände in ein Endprodukt eingehen.

Die Eigenschaften des Reaktionsprodukts wie Reinheitsgrad, Form, Struktur, Dichte, Festigkeit, Partikelgröße, Oberflächenstruktur, Zusammensetzung, Verbrennungseigenschaften, Brennwert und Energiegehalt sind abhängig von den Verfahrens- beziehungsweise Reaktionsbedingungen, also von den Parametern, die für die Steuerung des anmeldungsgemäßen Verfahrens, das heißt für die Prozessführung, verantwortlich sind.

In verschiedenen Schritten vor und nach dem chemischen Umsetzungsprozess werden die Ausgangsstoffe sowie die Reaktions-, Zwischen-, Neben- und/oder Endprodukte bearbeitet. Die Bearbeitungsschritte zielen auf eine Stoffumsetzung im industriellen oder Technikumsmaßstab ab. So ist unter Bearbeitung mehr als ein händisches Zerlegen oder eine manuelle Zerkleinerung mit einer Schere zu verstehen. Die Bearbeitung der Biomasse und/oder Aufarbeitung der Reaktionsprodukte und/oder der Nebenprodukte geht beim anmeldungsgemäßen Verfahren über ein elektrisch betriebenes Rühr- oder Mischsystem mit einer einzigen Welle mit magnetischer Kupplung sowie über eine wandständige Wärmeübertragung einer druckbelasteten glatten Innenseite der äußeren Reaktorwand durch ein mit wenigen Handgriffen trennbares beheiztes Mantelgefäß, das elektrisch betrieben wird, hinaus. Sie umfasst auch die unter Punkt 9 und 10 der für das semikontinuierliche oder kontinuierliche Verfahren genannten Kriterien zum Rühr- oder Mischsystem und/oder Temperierungssystem.

Die Biomasse kann in der Regel bereits vor der Lagerung und besonders vor dem eigentlichen Umsetzungsprozess, insbesondere vor und/oder nach dem Einfüllen in den Reaktionsraum, zerkleinert werden. Die Zerkleinerung erfolgt insbesondere auf mechanischem Wege bevorzugt durch Häckseln. In der Regel wird eine Vorrichtung zum Mahlen beispielsweise einer Schrotmühle oder eine Naßmühle eingesetzt. Je nach Ausgangsstoff und gewünschter Partikelgröße kommen unterschiedliche Häcksler-, Mühlen- und/oder Naßmühlentypen zum Einsatz. Die Partikelgröße hat einen Einfluss auf den Reaktionsverlauf. Denn je kleiner die Partikelgröße desto größer ist die Oberfläche der Ausgangsstoffe. Je größer die Oberfläche der Reaktionspartner, desto schneller die chemische Umsetzung. Daher kann die Partikelgröße der zerkleinerten Biomasse unter 10 cm, auch unter 1 cm und auch unter 2 mm liegen.

Der Energie-, Zeit-, und Materialaufwand beim Zerkleinerungsprozess ist dabei von der Prozessführung und insbesondere von der Beschaffenheit des Ausgangsstoffs, Partikelgröße und Verweildauer abhängig.

Teil der Vorbehandlung ist auch die Inkubation in einem sauren Milieu oder Medium bei einem pH-Wert, der unter 6, auch unter 5, und auch unter 4, insbesondere unter 3 und dabei auch unter 2 liegt. Die erforderliche Zeitdauer dieses Schrittes nimmt mit zunehmender Zerkleinerung und mit sinkendem pH-Wert ab. Die Inkubation bei saurem pH-Wert kann beispielsweise nach dem Zerkleinern erfolgen. Die Inkubation findet in einem isolierten und mit einer Doppelwand oder einem anderen Temperierungssystem ausgestattetem Inkubationsbehälter statt. Das Temperierungssystem wird im Wesentlichen über Prozesswärme oder Abwärme aus dem erfindungsgemäßen Herstellungsprozess oder einem anderen Prozess oder mit zumindest teilweise aufgereinigtes und erhitztes Prozesswasser genutzt. Die Inkubationsdauer beträgt mindestens 10 bis 60 Minuten, 1 bis 10 oder 10 bis 60 Stunden. Eine Vorinkubation kann die Reaktionszeit in Abhängigkeit von den Ausgangsstoffen und anderen Vorbehandlungsschritten erheblich verkürzen. Bei optimalen Bedingungen liegt die Zeitersparnis bei über 3 - 10, 10 - 20 Prozent oder mehr.

Da während der Umsetzungsreaktion chemisch Wasser erzeugt und von den Ausgangsstoffen abgespalten wird, erhöht sich mit Fortschreiten des Prozessverlaufs das Wasservolumen. Durch das Abziehen von Prozesswasser verringert sich das erforderliche Reaktionsvolumen für den zum Beispiel in nachfolgenden Reaktionsbehältern erforderlichen Reaktionsraum. Im Sinne einer Reaktorkaskade nimmt somit das Volumen jedes einzelnen Reaktors im Verlauf der Reaktion ab. Prozesswasser kann während oder nach Abschluss der Umsetzungsreaktion gewonnen werden. Das Abziehen von Prozesswasser während des Prozesses erfolgt bei einer Temperatur von über 180 Grad Celsius und einen Druck von über 5 bar. Dies stellt besondere Anforderungen an die Vorrichtungen und Verfahren zur Fest-Flüssig-Trennung. Zu den letztgenannten Verfahren zählen verschiedene Siebungsvorgänge (Grobsiebung, Feinsiebung), Filtrationsprozesse und/oder die Fliehkraftabscheidung mittels Zyklon, dynamische, statische, Vakuum-, Druck und Sterilfiltration, darunter insbesondere die Cross-FlowFiltration einschließlich Mikro-, Ultra-, Nanofiltration- und Umkehrosmoseverfahren. Es werden bevorzugt Vorrichtungen verwendet, bei denen das zugrunde liegende Verfahrens- oder Funktionsprinzip von Hydrozyklonen, Zentrifugen, kraftfeldunterstützten Trenngeräten und/oder Filtrationsverfahren angewandt wird. Zu den bevorzugten Filtrationsverfahren zählen insbesondere diejenigen, die sich auch bei den Reaktionsbedingungen der hydrothermalen Karbonisierung einsetzen lassen. Bevorzugt werden für die Fest-Flüssig-Trennungen insbesondere bei Betriebsbedingungen Rotationsscheibenfilter oder Zentrifugalmembranfilter eingesetzt.

Verschiedene Verfahren der Fest-Flüssig-Trennung können miteinander kombiniert werden. Jeder dem ersten Reaktor folgende Reaktor kann mit einer Vorrichtung zur Fest-Flüssig-Trennung verbunden werden. Die Fest-Flüssig-Trennung findet kontinuierlich oder intermittierend über einen Zeitraum von mindestens einem Zwanzigstel der Verweilzeit in einem Reaktor statt. Sie kann je nach Bedarf und Leistungsfähigkeit der verwendeten Vorrichtung den Erfordernissen angepasst werden. Das abgezogene Prozesswasser wird in einem isolierten, korrosionsfesten Behälter oder Druckbehälter unter Luftabschluss aufbewahrt.

Zur Aufkonzentration des Prozesswasser wird dieses entweder direkt aus dem laufenden Prozess aus einem Reservoir für unbehandeltes Prozesswasser entnommen. Die Aufkonzentration von Prozesswasser wird zum einen durch eine oder mehrere in dieser Patentschrift genannten Vorrichtungen zur Fest-Flüssig-Trennung und/oder zum anderen durch Verdampfen von Wasser zum Beispiel in einem Verdampfer durchgeführt. Der aus dem Verdampfungsprozess gewonnene Wasserdampf wird an anderer Stelle im Prozess eingesetzt zum Beispiel zur Erhitzung der Ausgangsstoffe vor Eintritt in einen Wärmetauschers, Erwärmung von Thermoöl über einen Wärmetauscherprozess oder zum Betreiben einer Vorrichtung zum Trocknen von Reaktionsprodukt wie einer Luftwirbelmühle oder einer an anderer Stelle dieser Schrift benannten Trocknungsvorrichtung.

Zur Aufkonzentration des Prozesswassers werden mindestens 1 - 5, 5 - 20 oder 20 - 70 Prozent des Wassers entfernt. Dazu werden auch andere in dieser Patentschrift genannte Verfahren angewandt werden wie zum Beispiel die Umkehrosmose, allerdings mit dem Nachteil, dass aufgrund temperaturempfindlicher Membrane die Tempertur stärker gesenkt werden muss. Das Prozesswasser wird in einem isolierten und korrosionsfesten Behälter oder als Druckbehälter ausgelegten Prozesswasserreservoir möglichst unter Luftabschluss aufbewahrt.

Aufkonzentriertes Prozesswasser wird teilweise zur Vorinkubation, Vorwärmung von Ausgangsstoffen, Herstellung eines pumpfähigen Fest-Flüssig-Gemischs, zur Übernahme in das Reaktionsgemisch, zur Überschichtung von oder zur Beimischung zu vorgelegtem Ausgangsstoff in einem Reaktor der Anlage, zur Rückführung in den laufenden Prozess, als Wärmeträgermedium für weitere Prozesse innerhalb oder außerhalb einer Anlage und/oder als Düngemittelbestandteil eingesetzt. Das Prozesswasser wird bei Temperaturen von 1 bis 50 Grad Celsius über den Temperaturen für den jeweiligen Verwendungszweck gewonnen.

Zur Vorinkubation, Vorwärmung von Ausgangsstoffen, Herstellung eines pumpfähigen Fest-Flüssig-Gemischs oder zur Überschichtung von oder zur Beimischung zu vorgelegtem Ausgangsstoff in einem Reaktor der Anlage ist es vorteilhaft, Prozesswasser oder aufkonzentriertes Prozesswasser mit einer Temperatur von 25 bis 50, 50 - 70 oder 70 - 99 Grad Celsius eizusetzen. Der pH-Wert liegt für diese Verwendungszwecke vorteilhafterweise unter 6 oder unter 4 oder unter 2. Als Wärmeträgermedium für weitere Prozesse innerhalb oder außerhalb einer Anlage ist es vorteilhaft, Prozesswasser oder aufkonzentriertes Prozesswasser mit einer Temperatur von 25 bis 50, 50 - 70 oder 70 - 99 Grad Celsius eizusetzen. Allerdings können auch Temperaturen für diese Verwendungen von über 100 oder 200 Grad Celsius von Vorteil sein ebenso wie für die Beimischung zu vorgelegtem Ausgangsstoff in einem Reaktor der Anlage, zur Rückführung in den laufenden Prozess.

Der erforderliche pH-Wert wird zum einen durch die Menge an verdampftem oder auf andere Weise eliminiertem Wasser erreicht und zum anderen durch Verwendung von Säure als Katalysatoren, deren Siedepunkt über dem des Wassers liegt. Aufkonzentriertes Prozesswasser enthält Katalysatorbestandteile insofern diese einen Siedepunkt besitzen, der über dem von Wasser liegt. So besitzt beispielsweise Schwefelsäure einen Siedepunkt von 279 Grad Celsius. Bei Phosphorsäure liegt der Zersetzungspunkt bei 213 Grad Celsius. Durch kontinuierliches Verdampfen von Wasser bei Temperaturen unter dem Siedepunkte der Säuren wird eine Aufsäuerung, das heißt ein abnehmender pH-Wert erreicht, auch wenn sich kaum verhindern lässt, dass mit dem Prozesswasserdampf auch Katalysatorbestandteile trotz eines höheren Siedpunkts aus dem Prozesswasser entweichen. Vergleichbares gilt auch für metallische Katalysatoren wie Eisen(II)-sulfat mit einem Schmelzpunkt beziehungsweise einem Zersetzungspunkt oberhalb von 400 °C, Eisen(III)-chlorid mit einem Siedepunkt oberhalb von 120 °C (Sublimation) oder Eisen(II)-chlorid mit einem Siedepunkt von 1026 °C. Durch die Aufkonzentration von Prozesswasser können ein oder mehrere Katalysatorkomponenten eingespart werden.

Der Prozesswasserdampf wird an anderer Stelle im Prozess eingesetzt zum Beispiel zum Erhitzen der Ausgangsstoffe vor Eintritt in einen Wärmetauscher, Erwärmung von Thermoöl über einen Wärmetauscherprozess oder zum Betreiben einer Vorrichtung zum Trocknen von Reaktionsprodukten wie einer Luftwirbelmühle und/oder einer an anderer Stelle dieser Schrift benannten Trocknungsvorrichtung. Je nach Verwendungszweck findet vorher eine Aufreinigung des Prozesswasserdampfs statt. Aufkonzentriertes Prozesswasser kann mit verschiedenen in dieser Schrift erwähnten Pumpen gefördert werden bei Temperaturen auch über 250 Grad Celsius, zum Beispiel durch eine Spiralverdrängerpumpe. Bei Umgebungsdruck oder vor Zuführung in eine drucklose Vorrichtung oder einen Mischer wird die Temperatur zum Beispiel über einen Wärmetauscher abgesenkt, so dass das Fest-Flüssig-Gemisch eine Temperatur von 50 - 60 oder 60 - 80 Grad aufweist.

Insbesondere metallische, anorganische oder sandähnliche Stoffe und andere Störstoffe werden von der Biomasse getrennt. Es werden Verfahren und Prozesse angewandt, wie sie im Rahmen der Behandlung von Biomasse und Biomüll zum Beispiel in Biogasanlagen etabliert sind. Nach Vorinkubation im sauren Medium aber auch zu einem früheren oder späteren Zeitpunkt kann ein Katalysator mit oder ohne Zugabe von Wasser und/oder in einer wässrigen Lösung zugeführt werden.

Die Biomasse wird gründlich mit dem Katalysator beziehungsweise Katalysatorgemisch vermischt. Der Katalysator bildet dann mit der Biomasse gemeinsam ein Reaktionsgemisch. Alternativ findet der Vermischungsvorgang innerhalb eines Reaktors statt. Die Verdichtung des Reaktionsgemischs kann in einem oder mehreren Schritten sowohl außerhalb als auch innerhalb eines Reaktors erfolgen. Vorteilhaft ist eine hohe Verdichtung, die wiederum eine bessere Ausnutzung des Reaktionsraums bedeutet. Das Maß der Verdichtung ist abhängig von der Förderbarkeit in einen Reaktor, vom gewünschten Reaktionsprodukt und von der Prozessführung. Das Reaktionsgemisch kann nach der Vorbehandlung beispielsweise auch in einen Reaktor eingeführt werden. Eine Vorwärmung kann beispielsweise vor der Einführung von Reaktionsbe- standteilen in den Druckbehälterraum stattfinden. Es können sämtliche Reaktionspartner vorgewärmt werden. Unter den Ausgangsstoffen können alle aber insbesondere die Biomasse bis zu etwa 60 - 90 Grad Celsius erwärmt werden. Die Vorwärmung erfolgt zum Beispiel durch Zuführung von Wärmeenergie und insbesondere durch Zugabe von fast siedendem Prozesswasser, vorgewärmter Biomassesuspension oder anderem Wasser bei etwa einem bar Absolutdruck oder durch Zuführung von Wasser- oder Prozessdampf oder anderen Wärmeenergieträgern. Alternativ oder ergänzend kann dazu Wärmeenergie aus Wärmetauscherprozessen eingesetzt werden.

Die Reaktionszeit liegt je nach gewünschtem Reaktionsprodukt zwischen einer bis 60 Stunden, bevorzugt zwischen drei und 40 Stunden, besonders bevorzugt zwischen fünf und 18 Stunden. Die Reaktionszeit gilt als abgelaufen beziehungsweise die Reaktion als abgeschlossen, wenn keine nennenswerte Enthalpie mehr freigesetzt wird. Eine minimale Vorbehandlung und/oder die Auslassung einzelner Vorbehandlungsschritte kann die Reaktionszeit auf über 60 Stunden erhöhen. Die Reaktionszeit ist insbesondere abhängig von der Zusammensetzung und den Eigenschaften des jeweiligen Ausgangsstoffs. Je größer die Oberfläche, je kleiner die Partikelgröße, je geringer der Lignin- oder Celluloseanteil und je höher der Kohlenhydratanteil, desto schneller wird die Wärmeenergie in der Depolymerisationsphase freigesetzt und desto schneller wird die Stabilisierungsphase erreicht und die Reaktionsbeziehungsweise Verweilzeit reduziert sich. Je kürzer die Umsetzungszeit des jeweiligen Ausgangsstoffs ist, desto später kann dieser zum Beispiel in eine bereits angelaufene Reaktion im Reaktor eingebracht werden. Eine kürzere Reaktionszeit wird auch bei relativ hohen Anteilen an Fett und nichtpflanzlicher, nicht vernetzter zum Beispiel tierischer oder bakterieller Proteine erzielt. Das Auslaufen der Wärmeenergiefreisetzung während des Reaktionsprozesses ist ein Zeichen für den Abschluss des Umsetzungsprozesses.

Anmeldungsgemäß können Temperaturen von bis zu 300, 400 oder 500 Grad Celsius erzeugt werden. Vorteilhaft sind jedoch Temperaturen zwischen 185 bis 205 Grad Celsius und insbesondere bis 215 Grad Celsius und besonders bevorzugt bis 225 Grad Celsius. Anmeldungsgemäß wird unter Luftabschluss ein Druck aufgebaut, der beispielsweise zwischen 7 und 90 bar liegt. Vorteilhaft ist ein Druck zwischen 11 und 18 bar, auch zwischen 18 und 26 bar, und auch zwischen 26 und 34 bar.

Die erfindungsgemäße Vorrichtung umfasst ferner einen Reaktor, der in Abhängigkeit von den darin ablaufenden Prozessen, der eingesetzten Menge und Art der Feststoffe und/ oder vom gewünschten Reaktionsprodukt unterschiedlich ausgestaltet sein kann. Mindestens einer der anmeldungsgemäßen Reaktoren kann beispielsweise ein Kaskaden-, Rohr-, Kreislauf-, Schlaufen-, Membran-, Wirbelschicht- und/oder ein Rührkessel- beziehungsweise Rührkesselreaktor sein oder einzelne Eigenschaften oder eine Kombination verschiedener Eigenschaften dieser Reaktoren aufweisen. Die Wirbelschicht des Reaktors ist vorzugsweise eine zirkulierende. Der anmeldungsgemäße Reaktor oder eine Kombination der verschiedenen Reaktoren können für unterschiedliche Behandlungszeitpunkte und Bearbeitungsschritte innerhalb einer Anlage verwendet werden. Weiter kann der Reaktor aufgrund des erforderlichen Drucks als Druckbehälter ausgelegt sein. Die Auslegung der Druckbehälterform ist von der Prozessführung und von der angewandten Mischtechnik abhängig.

In weiterer Ausgestaltung des Gegenstands der Anmeldung ist der Reaktor als eine Art Multimembran-Wirbelschichtreaktor mit zirkulierender Wirbelschicht ausgebildet. Ein solcher reaktor vereinigt die vorteilhaften Eigenschaften verschiedener Membran- und Wirbelschichtreaktortypen.

Der anmeldungsgemäße Reaktor kann eine oder mehrere der folgenden Eigenschaften aufweisen. Der Reaktor kann mindestens einen Druckbehälter und mindestens eine Vorrichtung zur Fest-Flüssig-Trennung aufweisen und wird dann auch als Membranreaktor bezeichnet. Der Reaktor kann über mindestens eine Grob- und/oder eine Feinfiltration oder eine Kombination aus beiden Vorrichtungen verfügen, die auch in einer Filtrationsvorrichtung kombiniert werden kann. Mindestens einer der Druckbehälter kann über ein Rühr- und/oder Mischsystem verfügen, der dadurch als Rührkesselreaktor bezeichnet werden kann. Die Summe aller Reaktionsräume der Druckbehälter oder Reaktoren kann über ein Volumen von 0,5 bis 10.000 Kubikmeter verfügen, auch über 5 bis 2.000 Kubikmeter und auch von 50 bis 500 Kubikmeter.

Die Summe aller Behältnisse einer Anlage einschließlich der Reaktionsräume der Druckbehälter oder Reaktoren, Silos und Lagerräume kann über ein Volumen von 0,5 bis 1.000.000 Kubikmeter verfügen, auch 10.000 bis 700.000 Kubikmeter und auch 50.000 bis 500.000 Kubikmeter. Je nach Ausgangsstoff und Biomasse kann der Wasseranteil der Biomasse bis zu 95 Prozent oder mehr des Gesamtgewichts betragen. Aus diesem Grund kann die Integration eines Entwässerungsprozesses, der der Umsetzungsreaktion vorgeschaltet ist, sinnvoll sein. Aufgrund des hohen Feuchtigkeitsgehalt und des geringen Schüttgewichts vieler Biomassen ist die Förderbarkeit begrenzt, so dass der initiale Feststoffanteil im Reaktionsraum etwa zwischen 5 und 30 Prozent liegen kann. Daher kann der Ertrag des Reaktionsprodukts im einstelligen Prozentbereich bezogen auf das gesamte Reaktionsraumvolumen liegen. Weiter ist dann der Einsatz relativ großer Reaktionsraumvolumina erforderlich. Dies kann durch eine Zusammenschaltung mehrerer Druckbehälter erfolgen.

Durch eine Zusammenschaltung mehrerer Druckbehälter bzw. Reaktoren, zum Beispiel im Sinne einer Kaskade, und/oder die Kombination verschiedener Reaktortypen kann eine günstigere Verweilzeitverteilung und somit höhere Umsätze durch eine verbesserte Steuerung des Prozessablaufs realisiert werden. Gleichzeitig kann den unterschiedlichen Anforderungen der verschiedenen Reaktionsphasen und Teilschritte Rechnung getragen werden. Beispielsweise kann in einem Rohrreaktor ein günstigerer Wärmeaustausch stattfinden, in einem Rührkessel beziehungsweise Rührreaktor eine bessere Durchmischung und Rückvermischung. Durch die Aufteilung des Gesamtvolumens des Reaktors auf mehrere Druckbehälter wird die Transportfähigkeit einzelner Anlagenbestandteile einschließlich des Druckbehälters verbessert. Gleichzeitig wird durch die Zusammenschaltung mehrerer Druckbehälter bzw. Reaktoren die Realisierung eines kontinuierlichen oder semikontinuierlichen Prozesses erleichtert. Mindestens ein Druckbehälter zur Aufnahme des in den Reaktoren gebildeten oder enthaltenen komprimierten Prozessgases kann eingesetzt und in die Anlage integriert werden. Das Prozessgas wird in einem eigenen Aufreinigungsprozess zum Beispiel in einer Luftreinigungsanlage aufgereinigt bevor es in die Umgebungsluft abgegeben wird oder es wird der Verbrennungsluft in einem eigenen Verbrennungsprozess innerhalb oder außerhalb der Anlage zugeführt. Im Rahmen einer Nassoxidation, die mit komprmierter Luft arbeitet, wird das Prozessgas in dem Oxidationsprozess zugeführt. Ist mit diesem Prozess eine Wärmerückgewinnung verbunden, ergibt sich der Vorteil, dass oxidierbare Bestandteile im Prozessgas in Wärmeenergie umgesetzt und über einen Wärmetauscherprozess zurück gewonnen wird.

Durch die kontinuierliche Abtrennung beziehungsweise den Abzug einzelner Reaktanden wie zum Beispiel Wasser während des Prozessverlaufs kann der Feststoffanteil während des Verfahrens erhöht werden. Der Feststoffgehalt kann von ursprünglich zum Beispiel 15 Prozent auf 20 bis 30 Prozent, bevorzugt auf 31 bis 45 oder und besonders bevorzugt von 46 bis 70 Prozent in Abhängigkeit von der Reaktionsführung ansteigen. Gleichzeitig kann das Volumen pro Reaktor im Reaktionsverlauf abnehmen, schneller umsetzbare Ausgangsstoffe zugeführt werden oder ein höherer Durchsatz bezogen auf das Reaktorvolumen erzielt werden. Weiter ermöglicht eine Schaltung mehrerer Reaktoren in Serie, die voneinander zum Beispiel durch Ventile getrennt sind, eine gezieltes Befüllen beziehungsweise Nachfüllen einzelner Druckbehälter mit frischen Ausgangstoffen, Reaktanden oder Katalysatoren zwecks Erhöhung der Durchsatzraten. Die Überführung des Reaktionsgemischs von einem in den anderen Druckbehälter findet im Sinne einer kontinuierlichen Prozessführung im Wesentlichen bei Betriebsbedingungen statt.

Der anmeldungsgemäße Reaktor kann einen senkrecht stehenden zylindrischen Grundkörper umfassen. Das Durchmesser-Höhen-Verhältnis ist mindestens 1:0,5, 1:2, 1:5 oder größer. Der obere Boden kann als Klöpperboden ausgebildet sein. Es kann im oberen Teil bevorzugt der oberen Hälfte und besonders bevorzugt in den oberen zwei Dritteln eine leicht kegelförmige Form aufweisen mit leicht wachsendem Durchmesser nach unten hin. Der kegelförmige Boden kann einen Winkel zur Reaktorachse von maximal 45 Grad, bevorzugt kleiner 40 Grad und besonders bevorzugt kleiner 35 Grad aufweisen. Die Übergänge zum Beispiel vom Wand- zum Bodenbereich können abgerundet sein, um Störungen des Strömungsflusses zu minimieren. Die Platzierung des Stutzens für die Zufuhr des Reaktionsgemischs kann variabel sein und befindet sich beispielsweise in der oberen Hälfte, bevorzugt im oberen Drittel des Druckbehälters. Die Zufuhr kann über ein Ventil über gemeinsam über den Auslassstutzen stattfinden, der sich etwa im Zentrum des Bodens beziehungsweise Kegelbodens befindet. Die Bauteile und Stutzen des Reaktors können durch Schweißen miteinander verbunden werden. Der Deckel kann angeflanscht sein. Bei einem vorrangigen Einsatz von Flüssigkeitsstrahlmischer und Vollstrahldüsen kann das Verhältnis von Durchmesser zur Höhe etwa bei eins zu zwei bis eins zu drei liegen, auch bei eins zu vier bis ein zu fünf und auch bei eins zu fünf bis eins zu sechs.

Ein Membranreaktor ist eine Vorrichtung, die die Kombination mit mindestens einer chemischen Reaktion mit einem Membranverfahren oder einer Fest-Flüssig-Trennung erlaubt. Dabei sind beide Prozesse integral miteinander gekoppelt, so dass Synergien entstehen können. Gleichzeitig können beide Prozesse in einem einzigen Gehäuse oder einer Anlage untergebracht sein. Bei der chemischen Reaktion wird mindestens eine Komponente des Reaktionsgemisches umgesetzt. Durch den Einsatz eines Membranreaktors können Reaktions-, Zwischen-, Neben- und Endprodukten selektiv aus dem Reaktionsgemisch entfernt werden, Edukte kontrolliert zugegeben oder der Kontakt der Edukte intensiviert werden. Reaktions-, Zwischen-, Neben und Endprodukten und insbesondere Wasser wird durch eine Fest-Flüssig-Trennung kontinuierlich oder in Intervallen aus dem Reaktionsgemisch entfernt. Dadurch lässt sich eine deutliche Umsatzerhöhung erzielen.

Die Kombination, Positionierung, Auslegung und Steuerung des jeweiligen Temperierungssystems ergibt sich aus der Prozessführung und sind insbesondere von der Zusammensetzung der Ausgangsstoffe abhängig. Sämtliche Prozesswassersysteme außerhalb und innerhalb des Reaktors können für den Temperierungsprozess eingesetzt werden. Dies kann zum einen durch externe, das heißt außerhalb des Reaktors gelegene Wärmetauschprozesse und zum anderen durch die Einbringung von temperiertem Prozesswasser als Verdünnungs-, Temperierungs-, Ansaugmedium oder Treibmittel für Mischer, Pumpen und/oder Düsen und/oder als angesaugtes Medium für die Flüssigkeitsstrahlpumpen geschehen. Eine Vermischung von Prozess- und Frischwasser kann ebenfalls einer optimierten Reaktortemperierung dienen. Zusätzlich kann dadurch auch die Prozessführung optimiert werden, indem zum Beispiel die Konzentrationen bestimmter anorganischer Stoffe und Störstoffe gesenkt wird. Vorteilhaft kann die Zuführung eines Temperierungsmediums sein, insbesondere durch Eindüsen von temperiertem Wasser oder recyceltem Prozesswasser an temperaturkritischen Punkten. Ergänzend wird die Temperierung über die Prozessführung gesteuert. Neben der Kombination von Ausgangsstoffen, pH-Wert, Probenvorbereiten und Katalysatoren ist die zeitversetzte Einbringung von Ausgangsstoffen in Abhängigkeit von ihren Umsetzungseigenschaften ein wesentliches Element der Temperatursteuerung. Während des Verfahrensverlaufs ändern sich die Viskosität, Dichte und Größe und andere Eigenschaften der Ausgangsstoffe beziehungsweise, des Reaktionsgemischs. Diese Veränderungen sind auf chemische Reaktionen und Strukturveränderungen der kohlenstoffhaltigen Ausgangsstoffe, die auch auf die Depolymerisation und später auf die Restrukturierung der Ausgangsstoffe zurückzuführen sind. Daraus ergeben sich unterschiedliche Anforderungen an den Mischvorgang in Abhängigkeit vom Prozessverlauf. Eine möglichst gleichmäßige und homogene Vermischung und/oder Strömungsverteilung ist vom Stadium des Prozesses, von den Ausgangsstoffen, Feststoffkonzentrationen und Anforderungen, die an das Reaktionsprodukt gestellt werden, abhängig.

Die im Prozesswasser enthaltenen Stoffe sind abhängig von der Mischung der Ausgangsstoffe und der Prozessführung einschließlich der Katalysatoren. Durch die verfahrensbedingte Desintegration gehen vorher in der Biomasse gebundene Stoffe in Lösung. Zahlreiche Elemente einschließlich Chlor, Schwefel, Nitrat und Ihre Salze sowie Metalle insbesondere Schwermetalle und Mineralien sowie Alkalien wie zum Beispiel Kalium oder Natrium und ihre Salze gehen zu einem bestimmten Anteil während des chemischen Umsetzungsprozesses in die wässrige Phase über. Ein Anteil wird wieder in der Festphase gebunden. Der restliche Anteil verbleibt in der flüssigen Phase. Die Anteile der Stoffe, die in der flüssigen Phase übergehen, sind auch abhängig vom Konzentrationsgefälle, das heißt der bereits in der flüssigen Phase vorhandenen Konzentration. Bei steigenden Konzentrationen tritt eine Sättigung bis hin zum Ausfallen bestimmter Stoffe ein. So können anorganische Stoffe und Verbindungen zum Beispiel Sulfate und Chloride als Salze ausfallen und dadurch die Prozessführung und Reaktorbestandteile nachteilig beeinflussen. Der Anteil organischer Kohlenstoffverbindungen in der flüssigen Phase kann über 50g pro Liter liegen. Der CSB-Wert des Prozesswassers liegt bereits ohne Wiederverwertung im höheren fünfstelligen Bereich (mg O2/I) und überschreitet damit die gesetzlichen Einleitungsgrenzwerte deutlich. Unter dem chemischen Sauerstoffbedarf CSB versteht man im umfassenden Sinne die Menge an Sauerstoff, die erforderlich ist, alle organischen Inhaltsstoffe einer definierten Stoffmenge chemisch zu oxidieren.
In Abhängigkeit vom Feuchtigkeitsgehalt der Ausgangsstoffe und der Prozessführung einschließlich der Fest-Flüssig-Verhältnisse wird ein Prozesswasseranteil von 10 bis 35 Prozent, auch von 35 bis 60 Prozent oder auch von 60 bis 85 Prozent wiederverwertet. Eine nahezu vollständige Rückführung des Prozesswassers, das heißt eine Kreislaufschließung oder -einengung des Prozesswasserkreislaufs, mit dem Ziel, Frischwasser einzusparen und das Abwasservolumen zu senken, ist nur begrenzt möglich. Denn es kommt neben einer Akkumulation organischer Kohlenstoffverbindungen zu einer Anreicherung anorganischer Stoffe wie Sulfat, Nitrat, Calcium Chlor, Phosphor oder ihrer Verbindungen. Anorganische Störstoffkonzentrationen beschleunigen die Korrosion. Kalkablagerungen stören den Strömungsfluss im Reaktor und schädigen ebenfalls Armaturen wie Pumpen, Ventile und Düsen. Damit steigen die Anforderungen an die Auslegung des Reaktors. Sulfate können ausfallen. Die Geschwindigkeit der Akkumulation beziehungsweise Aufsättigung ist abhängig von der stofflichen Zusammensetzung der Ausgangsstoffe und der Prozessführung.

Der chemische Umwandlungsprozess dauert in der Regel mehrere Stunden. In dieser Zeit gehen komplexe chemische Vorgänge verbunden mit stofflichen Veränderungen einher, die zur Optimierung der Prozessführung zu berücksichtigen sind. Unterschiedliche Arten von Biomasse werden in den ersten zwei bis drei Prozessphasen in Intervallen zugeführt. Je nach gewünschtem Reaktionsprodukt werden zum Beispiel gegen Ende der letzten beiden Prozessphasen Reaktionsprodukte abgezogen. Treib- oder Temperierungsmittel wie zum Beispiel ein Gas, Wasser, insbesondere Prozesswasser und/oder Prozess-/Synthesegas sowie Katalysatoren werden während des laufenden Prozesses abgezogen oder zugeführt. Reaktanden und insbesondere Nebenprodukte werden entfernt, die sowohl den Ablauf der chemischen Reaktion, die Durchmischung als auch die Strömung stören.

Zur Abscheidung der festen Stoffe und insbesondere der Reaktionsprodukte im Reaktionsgemisch können verschiedene Verfahren zum Einsatz kommen. Die Fest-Flüssig-Trennung dient zur Abtrennung der flüssigen Phase, wodurch eine Aufkonzentration der Feststoffanteile erreicht wird. Zur Abtrennung der Feststoffe können verschiedene Siebungsvorgänge (Grobsiebung, Feinsiebung), Filtrationsprozesse und/oder die Fliehkraftabscheidung mittels Zyklon miteinander verknüpft werden. Um den Aufwand einer Filtration oder Siebung während des Prozesses zu verringern, werden im Rahmen der Vorbehandlung bereits eine oder mehrere Filtrations- oder Siebungsvorgänge durchgeführt.

Es kann mindestens eine Grob- oder eine Feinfiltration oder eine Kombination aus diesen beiden Verfahren erfolgen. Durch Filtrationsverfahren, insbesondere Mikro- und/oder Ultrafiltrationsverfahren oder eine Kombination der beiden, kann ein Drittel bis zwei Drittel der gesamten organischen Kohlenstoffverbindungen aus dem Prozesswasser entfernt werden. Die Fest-Flüssig-Trennung wird vorzugsweise bei Betriebsbedingungen betrieben und geht in der Regel über die Nutzung einfacher Papierfilter wie sie beispielsweise im Labormaßstab verwendet werden hinaus. Die Auswahl der verwendeten Methoden ist unter anderem abhängig von der chemischen Zusammensetzung, Partikelgrößenverteilung, Dichte, Partikelform, Festigkeit sowie Löslichkeit und schließt die Ausnutzung elektrischer Ströme und Ladungen, unterschiedliche Dichten und Fliehkräfte sowie verschiedene Partikelgrößen ein.
Zu den eingesetzten Vorrichtungen zur Fest-Flüssig-Trennung zählen die dynamische, statische, Vakuum-, Druck und Sterilfiltration, darunter insbesondere die Cross-FlowFiltration einschließlich verfügbarer Mikro-, Ultra-, Nanofiltration- und Umkehrosmoseverfahren. Es werden bevorzugt Vorrichtungen verwendet, bei denen das zugrunde liegende Verfahrens- oder Funktionsprinzip von Hydrozyklonen, Zentrifugen, kraftfeldunterstützten Trenngeräten und/oder Filtrationsverfahren angewandt wird. Zu den bevorzugten Filtrationsverfahren zählen insbesondere diejenigen, die sich auch bei den Reaktionsbedingungen der hydrothermalen Karbonisierung einsetzen lassen. Bevorzugt werden für die Fest-Flüssig-Trennungen insbesondere bei Betriebsbedingungen Rotationsscheibenfilter oder Zentrifugalmembranfilter eingesetzt. Das bevorzugte Material, das für die Ausbildung der Poren verantwortlich ist, besteht aus Metall und besonders aus Keramik. Die Form des porenbildenden Materials ist bevorzugt scheibenförmig. Je nach angewendetem Filtrationsverfahren und dabei eingesetzten Materialien liegt nicht immer ein proportionales Verhältnis von Porengröße des Filters und der Feststoffmenge im Filtrat vor. Dies trifft insbesondere auf den Einsatz keramischer Werkstoffe für die Filterelemente zu. Die wässrige Phase wird einem Prozesswasserreservoir oder gefiltert oder ungefiltert der Prozesswasseraufbereitung zugeführt. Die Eigenschaften der abzutrennenden Feststoffe und damit die Wahl der zur Abtrennung gewählten Verfahren hängen von der Prozessführung und von den Eigenschaften des gewünschten Reaktionsprodukts ab. Je weiter fortgeschritten der Prozess und je höher die Dichte des Reaktionsprodukts ist, desto einfacher lässt es sich abtrennen. Bevorzugt erfolgt die Abtrennung nah an den Betriebsbedingungen. Die Feststoffmenge im Filtrat sinkt in der Regel proportional zur Porengröße und kann durch den Einsatz eines Ultrafiltrationsverfahrens deutlich ansteigen und über zwei Drittel bis vier Fünftel betragen. In den Prozess sind ein oder mehrere Vorrichtungen zur Fest-Flüssig-Trennung integriert zur Elimination von Sand und anderen Störstoffen mit hoher Dichte oder hohem Gewicht, die im Laufe der Behandlung der Biomasse abtrennbar werden. Insbesondere zur Aufreinigung des Prozesswassers, das als Treibstrahlmittel verwendet wird, ist die Anwendung des Prinzips der Fliehkraftabscheidung von Feststoffen vorteilhaft, um Pumpen, Mischer und Düsen zu schonen.

Während des Prozesses wird an ein oder mehreren Stellen aus der oberen Hälfte, bevorzugt aus dem oberen Drittel, besonders bevorzugt aus dem oberen Viertel, des Reaktors Prozesswasser zur Aufbereitung abgezogen. Aufbereitetes Prozesswasser wird in den Wasserkreislauf der Anlage zur Wiederverwertung zurückgeführt. Mindestens ein und bevorzugt mehrere Prozesswasserreservoirs können für jeden einzelnen Reaktor oder für mehrere zusammengeschaltete Reaktoren und für andere Vorrichtungen der Anlage genutzt werden. Den einzelnen Prozesswasserreservoirs sind verschiedene Reinigungsschritte vorgeschaltet. Das Volumen einzelner oder eines gemeinsamen Prozesswasserreservoirs beträgt in ihrer Summe etwa 35 bis 85 Prozent des Gesamtvolumens aller Reaktoren. Das Prozesswasserreservoir ist für die Temperatur- und Druckbelastung der Reaktoren ausgelegt, so dass Druckminderungsund Wärmeaustauschvorrichtungen nicht zwingend erforderlich sind. Eine Prozesswasserreinigung ist in den Wasserkreislauf der beschriebenen Anlage integriert. In Abhängigkeit von der Verwendung des aufbereiteten Prozesswassers sind unterschiedliche Reinigungs- beziehungsweise Aufbereitungsverfahren notwendig. Dazu kommen verschiedene mechanische, chemische und biologische Verfahren und Vorrichtungen einzeln oder in Kombination zum Einsatz: Aerobe und anaerobe Hochleistungsbioreaktoren, Biomembranreaktoren, Anaerob- und Belebtschlammverfahren. In den Prozesswasserkreislauf integrierte oder angeschlossene oben genannte Verfahren und Vorrichtungen sollen den Gehalt an organischen Verbindungen im Kreislaufwasser zwar erheblich senken; das Maß der Rückführung des Prozesswassers muss jedoch von den Konzentrationen von nicht ausreichend abgebaute organische Substanzen und hohen Alkalimetall- beziehungsweise Mineralstoffkonzentrationen wie zum Beispiel Calcium abhängig gemacht werden. Um einen möglichst hohen Anteil des Prozesswassers zurückführen zu können, soll eine besonders leistungsfähige Kombination unterschiedlicher Verfahren und Vorrichtungen zum Einsatz kommen.

Die Vorrichtung zur mechanischen Abwasserreinigung ist ein Filter, bevorzugt ein Mikrofilter und besonders bevorzugt ein Ultrafiter, und kann mit den oben beschriebenen Verfahren zur Fest-Flüssig-Trennung deckungsgleich sein. Die Vorrichtung zur Fest-Flüssig-Trennung, in dem der oder die Filter eingebaut sind, ist bevorzugt ein Rotationsscheibenfilter und besonders bevorzugt ein Zentrifugalmembranfilter. Zur biologischen Reinigung des Prozess- beziehungsweise Abwassers kommt eine Vorrichtung zum Einsatz, die den komplexen Anforderungen zur Reinigung am ehesten gerecht wird. Zum Beispiel soll bevorzugt eine Vorrichtung in Stahlbauweise verwendet werden, zum Beispiel ein Hochleistungsbioreaktor im Biomembranverfahren, bevorzugt eine aerobe Prozesswasserbehandlung, besonders bevorzugt ein Schlaufenreaktor. Der Schlaufenreaktor soll in seiner Auslegung über eine leistungsfähige Düse zur Vermischung der festen und flüssigen Phase verfügen. Alternativ oder zusätzlich zum aeroben Verfahren kann ein Reaktor zur anaeroben Prozesswasserbehandlung oder auch reverse Elektrodialyse (Electrodialysis Reversal) insbesondere zur Nitratrückgewinnung, Destillations- Verdampfungs- und/oder lonenaustauscherverfahren sowie Aktivkohle eingesetzt werden.

Die Abkühlung des Reaktionsprodukts insbesondere unterhalb der Siedetemperatur bei einem bar Absolutdruck erfolgt in der Regel außerhalb des Reaktionsraums, auch in einer Vorrichtung zur Entspannung. Die dabei freigesetzte Wärmeenergie kann über Wärmetauscherprozesse für andere Prozesse verfügbar gemacht werden. Vor, während oder nach diesem Prozess finden ein oder mehrere Zerkleinerungsschritte statt. Dazu werden bevorzugt Mühlen oder Pressverfahren eingesetzt.

Die Abtrennung der festen Phase aus dem Reaktionsgemisch erfolgt im ersten Schritt in der Regel in mechanischen und im zweiten Schritt in thermischen Trennvorrichtungen. Ein statischer Eindicker wird zur Verminderung des Wassergehalts unter Einwirkung der Schwerkraft mit oder ohne mechanische, sich drehende Vorrichtung beziehungsweise Krählwerk, zum Beispiel ein Standeindicker oder Durchlaufeindicker verwendet. Die Regelung der Zulaufmenge kann von einem Dosierapparat übernommen werden. Bei entsprechend großen Volumina ermöglicht der Apparat das eingedickte Gemisch, dosiert und auf mehrere Maschinen, gleichmäßig abzugeben. Der Eindicker kann auch direkt in die Trocknungsvorrichtung integriert werden. Eine vorteilhafte Auslegung der Konus-Konstruktion ermöglicht, dass die Trocknungsvorrichtung direkt mit dem Gemisch beschickt wird. Bei entsprechender Anpassung der Prozessgrößen kann somit auf externe Installationen verzichtet werden. Alternativ kann das einzudickende Gemisch wird unter Druck auf eine gewölbte Siebfläche beziehungsweise auf ein Bogensieb aufgegeben werden. Die entstehende Zentrifugalkraft drückt einen Teil der Flüssigkeit durch die Siebschlitze. Das eingedickte Gemisch wird am Ende der Siebbahn zusammengefasst und der Trocknungsvorrichtung zugeführt. Ein weiteres vorteilhaftes mechanisches Trennverfahren bietet ein Hydrozyklon, in dem Feststoff und Flüssigkeit durch Zentrifugalbeschleunigung getrennt werden. Das eingedickte Gemisch im Unterlauf wird der Trocknungsvorrichtung zugeführt und die prozessierte beziehungsweise geklärte Flüssigkeit verlässt im Überlauf den Hydrozyklon. Durch vorgeschaltete und abgestimmte Eindickapparate und zwischengeschaltete Dosiervorrichtungen kann ein kontinuierlicher und optimierter Zulauf zur Trocknungsvorrichtung gewährleistet werden. Dies ist insbesondere bei Verwendung einer Schubzentrifuge zur Trocknung von Bedeutung. Schubzentrifugen verfügen über eine hohe eine Betriebssicherheit und sind zum Entfeuchten und Waschen körniger Feststoffe geeignet.

Neben mechanischen Vorrichtungen, die der Trocknung zumeist aus energetischen Gründen vorzuschalten sind, werden thermische Trennverfahren zur Trocknung bevorzugt eingesetzt. Die der Trocknung zugeführten Mengen liegen über einem Kilogramm Gewicht. Einem Chargenbetrieb ist ein kontinuierlicher Betrieb vorzuziehen. Die Trocknung erfolgt durch mindestens einen oder mehrere Trockner oder durch eine Kombination verschiedener Vorrichtungen zur Trennung und/oder Trocknung. Zur Trocknung der Reaktions- und/oder Nebenprodukte wird zum Beispiel ein Konvektionstrockner verwendet. Dabei kommt d as Trockengut mit heißem Trocknungsgas in Kontakt. Nachteilig ist dabei, dass das verwendete Gas abzuführen ist und in der Regel mit Staubabscheidern gereinigt werden muss. Gegebenenfalls wird das Gas nach Kondensieren der Feuchtigkeit zurückgeführt. Als Konvektionstrockner kann beispielsweise ein Wirbelschichttrockner eingesetzt werden. Ebenso können Sprüh-, Düsenturm- oder Stromtrockner in Abhängigkeit von der vorliegenden beziehungsweise erwünschten Partikelgröße verwendet werden. Vorteilhaft ist ein kontinuierlicher Prozess, bei dem ein oder mehrere Horden-, Trommel- oder Tunneltrockner eingesetzt werden. Bei der Verwendung eines Kontakttrockners steht im Wesentlichen nur die Kontaktfläche für den Wärmeübergang zur Verfügung. Es wird ein Band-, Vakuumband-, Trommel-, Schnecken-, Zylinder-, Walzen- oder Bandtrockner und bevorzugt ein Vakuumtrommelfilter oder -trockner eingesetzt. Zur Erzielung geringerer Feuchtigkeitsgehalte kann je nach Durchsatzrate alternativ oder zusätzlich zum Beispiel auch ein Tellertrockner verwendet werden. Die Trocknung kann mittels eines heißen gasförmigen Mediums wie zum Beispiel Luft bei Temperaturen zwischen 61 und 95 Grad Celsius, bevorzugt zwischen 65 und 90 Grad Celsius und weiter bevorzugt zwischen 70 und 85 Grad Celsius, erfolgen. Alternativ wird vor allem in den thermischen Trocknungsvorrichtungen als Gas neben Luft bevorzugt überhitzter Wasserdampf und besonders bevorzugt Wasserdampf mit einer Temperatur von 130 bis 180 Grad Celsius eingesetzt.

Es kann ein kombiniertes mechanisch-thermisches Verfahren zur Trennung beziehungsweise Trocknung angewendet werden. Der Vorteil eines mechanischthermischen Prozesses im Vergleich zu den konventionellen Verfahren liegt in einer deutlich geringeren Restfeuchte des Produkts, wodurch gerade bei feinen Partikel- oder Nanosystemen eine verbesserte Förderfähigkeit des Produkts erreicht wird. Ein weiterer Vorteil ist, dass gleichzeitig eine teilweise Auswaschung von Verunreinigungen aus dem Reaktionsprodukt durch den kondensierenden Dampf erfolgt. Der Einsatz von Dampf als weiteres treibendes Entfeuchtungspotential bringt eine Steigerung der Leistung für filtrierend arbeitende Zentrifugen mit sich. Der Mechanismus der ebenen mechanischen Verdrängung durch eine Kondensationsfront wirkt zusammen mit der Massenkraft und führt auch bei kleinsten Reaktionsprodukten bis hin zum Nanobereich praktisch zu einer vollständigen Entleerung des Grobkapillarsystems. Zu den Verfahren, die diesen Mechanismus ausnutzen zählt beispielsweise die Dampf-Druckfiltration. Sie wendet anstelle von Druckluft gesättigten oder überhitzten Dampf für eine Gasdifferenzdruckentfeuchtung an. Besonders bevorzugt wird eine Dampf-Drucküberlagerte Zentrifugalentfeuchtung angewendet. Der Prozess der kombinierten Dampfdruck- und Zentrifugalentfeuchtung überführt den feindispersen Feststoff des Reaktionsprodukts von der Suspension direkt in einem Ver- fahrensraum in ein trockenes, reines, rieselfähiges anmeldungsgemäßes Endprodukt. Der Restfeuchtigkeitsgehalt der anmeldungsgemäßen Reaktionsprodukte liegt in vorteilhafter Weise bei ungefähr 6 bis 25 Prozent, auch 10 bis 20 Prozent oder auch 12 bis 15 Prozent. Nach der Umwandlungsreaktion liegt das Reaktionsgemisch als Suspension vor. In Abhängigkeit von den Ausgangsstoffen und der Prozessführung entstehen aus Biomasse unter anderem folgende Reaktions-, Zwischen-, Neben- und/oder End- produkte : Brennstoffe von Torf, über Braunkohle bis zu Steinkohle-ähnlichen Brennstoffe, Humus, Maillard- oder Maillard-ähnlichen Reaktionsprodukte, kohlenstoffhaltige Werkstoffe wie Dämmstoffe, Nanoschwämme, -kügelchen, -fasern, -kabel, Aktiv- oder Sorptionskohle, Grillkohleersatzstoff, hochverdichtete Kohlenstoffprodukte und Werkstoffe und insbesondere auch Ausgangsstoffe für Graphit und graphithaltige oder -artige Produkte sowie Kohlenstofffasern und Ausgangsstoffe für Verbund- oder Faserverbundwerkstoffe. Auch Rein-, Reinst- und Ultrareinkohle-ähnliche Stoffe gehören zu den anmeldungsgemäßen Produkten. Sie verfügen über vorteilhafte Eigenschaften, die vor allem auf der Verminderung mineralischer Stoffe gegenüber den Ausgangsstoffen zurückzuführen ist. Unter Reinkohle wird vor allem der brennbare Anteil der Kohle und unter Reinstkohle wird auch Aktivkohle verstanden. Bei Ultrareinkohle liegt beispielsweise der Minderalgehalt unter 0,1 Gewichtsprozent verfügen.

Aus den Ausgangsstoffen werden im Verlauf der Prozessführung auch organische als auch anorganische Stoffe herausgelöst beziehungsweise leichter verfügbar und zugänglich gemacht. Dies geschieht zum Teil dadurch, dass die Stoffe in die wässrige Phase gehen, in der sie zum Teil in Lösung gehen. Dies hängt wiederum von den Reaktionsbedingungen ab. Zu den herausgelösten beziehungsweise leichter verfügbaren und zugänglichen Stoffen zählen neben den organisch gelösten und nicht- gelösten Stoffen auch anorganische Stoffe, wie Alkalien, Metalle, Salze und Säuren einschließlich huminsäureähnliche Stoffe, Calcium, Magnesium, Chlor, Eisen, Aluminium, Phosphor, Kalium, Natrium, Stickstoff und deren Verbindungen.

Die festen kohlenstoffhaltigen Bestandteile des Reaktionsprodukts, die nach der Umwandlungsreaktion als Werk- und/oder Brennstoffe vorliegen, weisen unter anderem folgende Eigenschaften auf: Die Zusammensetzung der Werk- und/oder Brennstoffe lässt sich durch die Reaktionsführung steuern. Die Konzentration einzelner Stoffe kann nicht ohne weiteres selektiv und unabhängig von anderen Stoffen variiert werden. Es lassen sich vielmehr verschiedene Stoffgruppen und Parameter gleichsinnig verändern. Beispielsweise wird bei einer Verminderung des Schwefelgehalt gleichzeitig auch der Chlor- und Aschegehalt vermindert.

In verschiedenen Messungen mittels Elementaranalyse lag der Kohlenstoffanteil für Gras, Heckenschnitt (Tuja) und Zuckerrübe bei über 50 bis 63 Prozent des prozentualen Massenanteil der Elemente (Trockenmasse) und lag damit um etwa 20 bis 60 Prozent über dem Massenanteil des Ausgangsstoffs. Der Sauerstoffanteil war um bis zur Hälfte und der Stickstoffanteil um etwa ein Viertel reduziert und der Wasserstoffanteil war auf bis zu etwa einem Viertel vermindert. Der Kohlenstoffanteil der Werk- und/oder Brennstoffe ist im Vergleich zum Ausgangsstoff um 10 bis 300 Prozent, auch 50 bis 300 Prozent, oder auch 100 bis 300 Prozent, ins- besondere um 200 bis 300 Prozent höher. Der Kohlenstoffanteil der Werk- und/oder Brennstoffe ist im Vergleich zum Ausgangsstoff um 5 bis 200 Prozent, vorzugsweise 10 bis 150 Prozent, besonders bevorzugt 10 bis 120 Prozent, insbesondere 50 bis 100 Prozent höher. Der Kohlenstoffanteil der Werk- und/oder Brennstoff liegt in der Regel zwischen 40 bis 95 Prozent, auch 50 bis 90 Prozent oder auch bei 55 bis 80 Prozent. Der Kohlenstoffanteil kann in Abhängigkeit von der Reaktionsführung und vom Ausgangsstoff aber auch höhere Reinheitsgrade erreichen von über 98 Prozent. Der Wasserstoffanteil des Werk- und/oder Brennstoffs ist bis auf ein neun Zehntel bis ein Drittel, auch ein Drittel bis auf ein Zwanzigstel oder auch bis auf ein Zwanzigstel bis ein Fünfzigstel im Vergleich zum Ausgangsstoff vermindert. Der Sauerstoffanteil des Werk- und/oder Brennstoffs ist bis auf ein neun Zehntel bis ein Drittel, auch ein Drittel bis auf ein Zwanzigstel oder auch bis auf ein Zwanzigstel bis ein Hundertstel im Vergleich zum Ausgangsstoff vermindert.

Der Stickstoffanteil des Werk- und/oder Brennstoffs ist bis auf ein neun Zehntel bis ein Drittel, auch ein Drittel bis auf ein Zwanzigstel oder auch bis auf ein Zwanzigstel bis ein Hundertstel im Vergleich zum Ausgangsstoff vermindert. Der Schwefelanteil des Werk- und/oder Brennstoffs kann einen Bruchteils der Biomasse ausmachen und ist bis auf ein neun Zehntel bis ein Drittel, auch ein Drittel bis auf ein Fünfzigstel oder auch bis auf ein Fünfzigstel bis ein Tausenstel im Vergleich zum Ausgangsstoff vermindert. Der Ascheanteil des Werk- und/oder Brennstoffs kann einen Bruchteils der Biomasse ausmachen und ist bis auf ein neun Zehntel bis ein Drittel, auch ein Drittel bis auf ein Fünfzigstel oder auch bis auf ein Fünfzigstel bis ein Tausenstel im Vergleich zum Ausgangsstoff vermindert. Der Feinstaubanteil des Werk- und/oder Brennstoffs kann einen Bruchteils der Biomasse ausmachen und ist bis auf ein neun Zehntel bis ein Drittel, auch ein Drittel bis auf ein Fünfzigstel oder auch bis auf ein Fünfzigstel bis ein Tausendstel im Vergleich zum Ausgangsstoff vermindert.

Eine Verminderung der Mineralanteile sowie des Asche- und Feinstaubanteils bei der Verbrennung auf ein Mehrfaches zum Beispiel von deutlich über 300 Prozent kann durch einen hohen Anteil an Prozesswasser ermöglicht werden. Durch Erhöhung des Prozesswasseranteils tritt eine Verdünnung der genannten Anteile aber auch zahlreicher anderer Stoffe ein, die ursprünglich im Ausgangsstoff enthalten waren und während der Umsetzungsreaktion herausgelöst werden und in Lösung gehen. Man könnte sagen, dass diese Stoffe herausgewaschen werden, so dass praktisch der Anteil der löslichen Stoffe proportional zum zugeführten Prozesswasser in der festen Phase gesenkt werden kann. Selbst bei Auslassung eines Katalysatorbestandteils oder suboptimalen Reaktionsbedingungen kann immer noch ein höherer Kohlenstoffanteil erreicht werden, der um über 5 bis 10 Prozent über dem des Ausgangsstoffs liegt. Bei sachgerechter Behandlung der Biomasse und Prozessführung kann ein Kohlenstoffanteil von 55 bis 77 Prozent erreicht werden. Bei sachgerechter Prozessführung, günstigen Ausgangsstoffen einschließlich Abstimmung des Katalysatorgemischs lassen sich auch Kohlenstoffwerte von 78 Prozent und mehr erzielen und ist damit dem fossiler Brennstoffe vergleichbar. Nach Abschluss der Umsetzungsreaktion ist der Kohlenstoffanteil des Werk- und/ oder Brennstoffs zwar angestiegen, der Energiegehalt beziehungsweise der Brennwert kann aber um bis zu 36 Prozent gesunken sein. Denn es wird während der Reaktion Wärme freigesetzt, da es sich um eine exotherme Reaktion handelt. Im Umkehrschluss bleiben insgesamt mindestens 65 Prozent des ursprünglichen Brennwertes der trockenen Biomasse erhalten bezogen auf das Massengewicht des Ausgangsstoffs. Wird als Ausgangsstoff kohlehydrathaltige Biomasse verwendet wie Korn, Mais oder Zucker beträgt der Brennwert des Werk- und/oder Brennstoffs etwa 65 bis 85 Prozent oder in einem anderen Ausführungsbeispiel 70 bis 80 Prozent im Vergleich zum Ausgangsstoff. Je weniger Kohlenhydrate der Ausgangsstoff enthält, desto geringer die Energiefreisetzung während der Umsetzungsreaktion. Dies bedingt gleichzeitig auch einen höheren Brennwert des Reaktionsprodukts im Vergleich zum Ausgangsstoff. In beispielhafter Weise können die Energiegehalte des Reaktionsprodukts in Abhängigkeit von der verwendeten Biomasse wie folgt beschrieben werden: Wird als Ausgangsstoff lignocellulosehaltige Biomasse verwendet wie Schnittgrün oder Ernteabfälle, beträgt der Brennwert des Werk- und/oder Brennstoffs etwa 70 bis 90 Prozent und auch 75 bis 85 Prozent bezogen auf das Massengewicht des Ausgangsstoffs. Wird als Ausgangsstoff Biomasse mit geringem Kohlehydrat-, Zellulose- oder Ligninanteil verwendet wie zum Beispiel Klärschlamm, beträgt der Brennwert des Werk- und/oder Brennstoffs etwa 80 bis 95 Prozent und auch 85 bis 90 Prozent bezogen auf das Massengewicht des Ausgangsstoffs. Rein-, Reinstkohle oder ultrareine Kohle kann vielseitig Anwendung finden, zum Beispiel als chemischer Grund- und Ausgangsstoff zur Weiterverarbeitung in der chemischen Industrie oder als Brennstoff für eine Kohlenstoff-Brennstoffzelle. Während des Reaktionsverlauf sind zahlreiche Stoffe aus der festen Phase herausgelöst worden. Sie liegen nun zu in der wässrigen Phase vor und sind im Prozesswasser gelöst. Aus dem Prozesswasser können verschiedene Mineralien wie Phosphor, Schwefel aber auch Nitrat zurück gewonnen werden. Diese können dann als Dünger, Roh- oder Werkstoff für andere Prozesse verwendet werden. Im Sinne eines natürlichen Kreislaufs ist die Isolierung mineralischer Bestandteile insbesondere aus der flüssigen Phase von Interesse, denn diese können als Dünger wieder zum natürlichen Aufbau von Biomasse wieder auf Flächen ausgebracht werden. Dadurch kann ein annähernd geschlossener Kreislauf dargestellt werden, indem den Flächen, denen vorher Biomasse für den Produktionsprozess entnommen wurde, nun wieder die Nährstoffe, die in dieser Biomasse enthalten waren, zurückgeführt werden.

Durch Depolymerisations- und Restrukturierungsprozesse bilden sich völlig neue chemische Kohlenstoffverbindungen und Strukturen, insbesondere bilden sich Agglomerate, die mit geringerem Energieaufwand zerkleinert werden können als die meisten bekannten Brennstoffe. Weiter kommt es in Abhängigkeit vom Ausgangsstoff es zu einer bräunlich-schwarzen Färbung, wahrscheinlich durch Bildung von Maillard-Reaktionsprodukten. Die Dichte vieler Ausgangsstoffe liegt vor Reaktionsbeginn unter der von Wasser. Während des Reaktionsverlaufs nimmt die Dichte kontinuierlich zu und erreicht in Abhängigkeit der Ausgangsstoffe und Reaktionsführung eine Dichte vergleichbar mit Steinkohle erreichen. Während die Dichte der meisten Ausgangsstoffe bei 200 bis 600 kg/m3 und gelegentlich bis 800 kg/m3 (Trockengewicht) liegt, kann die Dichte des Reaktionsprodukt über 900 bis 1200 kg/m3, gelegentlich sogar Werte von 1250 bis 1350 kg/m3 erreichen unter der Voraussetzung, dass die Luft zwischen den Partikeln des Reaktionsprodukts herausgepresst wird. Durch die geringe Partikelgröße des Reaktionsprodukts weist es im Vergleich zum Ausgangsstoff eine größere Oberfläche auf. Dies erleichtert die Trocknung bei gleichem Feuchtigkeitsgehalt leichter möglich als bei natürlich vorkommenden Kohlenstoffverbindungen mit vergleichbarem Kohlenstoffgehalt. Gleichzeitig trägt die große Oberfläche zu einer niedrigen Zündtemperatur bei.

Zu den Unterscheidungsmerkmalen der Reaktionsprodukte zählt
- das Vorliegen von Maillard- oder Maillard-ähnlichen Reaktionsprodukten sowohl in der flüssigen als auch in der festen Phase.
- Die starke und intensive Geruchsbildung variiert mit den Ausgangsstoffen. Die Geruchsbildung hängt ursächlich mit der Bildung von Maillard-Reaktionsprodukten zusammen.
- Verbesserte elektrische Leitfähigkeit im Vergleich zu anderen natürlich vorkommenden
- Kohlenstoffverbindungen mit vergleichbarem Kohlenstoffgehalt.
- Torf- bis Steinkohle-ähnlicher Brennstoff.
- Weniger flüchtige Bestandteile als gebräuchliche oder fossile Brennstoffe mit
- gleichem Kohlenstoffanteil.
- Geringere Aschebildung durch Verbrennung, niedrigerer Gehalt an Stickstoff,
- Schwefel, Nitrat, Schwermetalle und reaktiver, das heißt niedrigere Selbstentzündungstemperaturen als bei vergleichbaren fossilen Brennstoffen mit ähnlich hohem Kohlenstoffanteil.
- Vorteilhafte und weniger schädliche Zusammensetzung der Rauchgase durch Verbrennung als vergleichbarer fossiler Brennstoff mit ähnlich hohem Kohlenstoffanteil.

Insgesamt ergeben sich aus den oben aufgeführten Charakteristika des neuen Reaktionsprodukts zahlreiche Vorteile gegenüber herkömmlichen Brennstoffen sowie umwelt- und klimafreundliche Eigenschaften. Gegenüber den gebräuchlichen Verfahren zur Energiegewinnung aus Biomasse ist das Behandlungsverfahren zum Zweck einer industriellen Herstellung von Werk- und/oder Brennstoffen aus Biomasse effizienter und wirtschaftlicher. Bei der stofflichen Umwandlung der Biomasse braucht praktisch kein Kohlenstoff verloren gehen. In der Regel geht über 95 Prozent des Kohlenstoffs, der im Ausgangsstoff enthalten ist, in die festen Bestandteile des Reaktionsprodukts über, der zur Energiegewinnung genutzt werden kann. In der flüssigen Phase findet sich der Rest der Kohlenstoffverbindungen. Während der Umwandlungsreaktion im Reaktor werden praktisch kaum nennenswerte Mengen von Kohlendioxid oder andere klimaschädliche Gase freigesetzt. In der flüssigen Phase können sich etwa 1 - 4 Prozent des Kohlenstoffs der Ausgangsstoffe finden. Der Anteil hängt dabei von der Prozessführung, insbesondere vom Kohlenstoffgehalt des Ausgangsstoffs und vom Flüssig-Fest-Verhältnis des Reaktionsgemischs ab.

Durch die Reaktionsführung und insbesondere durch die Auswahl und Zusammensetzung der Ausgangsstoffe und Katalysatoren werden kohlenstoffhaltige Nanowerkstoffe und - strukturen geformt. Diese Werkstoffe weisen zum Teil nützliche Material- und Oberflächeneigenschaften auf. Dazu gehören zum Beispiel Nanoschwämme, die als Wasserspeicher oder Dämmstoffe eingesetzt werden können. Die so genannte Maillard-Reaktion findet bei Erhitzungsverfahren wie Backen, Braten, Rösten, Grillen und Frittieren von eiweißhaltigen und kohlenhydratreichen Lebensmitteln bei Temperaturen über 130°C statt. Im Verlauf der so genannten Maillard-Reaktion entstehen aus Kohlenhydraten und Aminosäuren neben einer Vielzahl von Aromastoffen rot- bis gelbbraune, manchmal fast schwarz gefärbte Polymere - die Melanoidine. Durch hohe Temperaturen, wie sie beim Backen und Rösten auftreten, aber auch durch höhere Drücke wird die Reaktion beschleunigt und besonders viele und dunkle Melanoidine gebildet. Sie stellen deshalb in Produkten wie Brot, Kaffee, Malz, Nüssen oder Cornflakes einen nicht unerheblichen Anteil am Lebensmittel dar - in Kaffee sind es beispielsweise bis zu 30 Prozent.

Maillard- oder Maillard-ähnliche Reaktionsprodukte werden beim erfindungsgemäßen Verfahren in hohen Konzentrationen gebildet. Sowohl in der festen (v.a. Feststoffe) als auch in der flüssigen Phase (z.B. Prozesswasser) finden sich relativ hohe Konzentrationen der Indikatorsubstanz CML, die in der Regel zwischen 0,3 - 2 mmol/ mol Lysin liegen. In der flüssigen Phase, das heißt im Prozesswasser liegen in der Regel höhere Konzentrationen vor, als in der festen Phase des Reaktionsprodukts. Die Konzentrationen beziehungsweise Konzentrationsverhältnisse sind vom Fest-Flüssig-Verhältnis sowie von der Zusammensetzung der Ausgangsstoffe sowie der Prozessführung abhängig. CML werden antioxidative und chemopräventive Eigenschaften zugesprochen. Es ist daher davon auszugehen, dass vergleichbare oder ähnliche Eigenschaften auch bei anderen Zwischen-, Neben- oder Reaktionsprodukten der hydrothermalen Karbonisierung einschließlich der Maillard- oder Maillardähnliche Reaktionsprodukte zu finden sind. Isolation und Aufreinigung der Maillard- oder Maillard-ähnlichen Reaktionsprodukte erfolgen unter anderem über Filtration, Ultrafiltration und/oder chromatographische Verfahren insbesondere über Säulenchromatographie.

Der mit dem anmeldungsgemäßen Verfahren hergestellte Humus entsteht im Vergleich zu Reaktionsprodukten mit höherem Brennwert durch eine vergleichsweise kürzere Verweilzeit. Erweist in der Regel noch faserhaltiges Material (v.a. Lignin und Cellulose) der Ausgangsstoffe auf. Die Vernetzung der Biopolymere ist nicht vollständig aufgehoben. Der anmeldungsgemäß hergestellte Humus besitzt einen Kohlenstoffanteil von mindestens 30 bis 45 Prozent und einen Heizwert von mindestens 15 bis 24 MJ/kg und ist gut brennbar. Der anmeldungsgemäß hergestellte Humus kann z.T. über ähnliche Eigenschaften wie natürlicher Humus und teilweise auch Torf verfügen.

Für die Verbrennungseigenschaften treffen die vorgenannten Eigenschaften zu den Reaktionsprodukten der hydrothermalen Karbonisierung zu. Durch optimierte Prozessführung, insbesondere durch Konzentrationsgefälle zwischen fester und flüssiger Phase innerhalb des Reaktionsgemischs, können bestimmte Stoffe im Humus angereichert werden. Dies ist bei der Verwertung des Humus als CO2-Bindungsstoff beziehungsweise Dünger erwünscht. Im Gegensatz dazu wird bei der Verarbeitung oder Beimischung von anmeldungsgemäß hergestelltem Humus zu Produkten, bei denen eine Anreicherung bestimmter Stoffe nicht erwünscht ist, durch die Prozessführung eine Anreicherung von mineralischen und für die Produktverwertung schädlichen Stoffen und Alkalien vermieden. Der anmeldungsgemäß hergestellte Humus ist ein einheitlicher Humus und Brennstoff, dessen Eigenschaften sich über die Zusammensetzung der Ausgangsstoffe und der Katalysatoren sowie
die Prozessführung berechnen und steuern lassen. anmeldungsgemäß hergestellter Humus kann innerhalb von Stunden hergestellt werden. Das anmeldungsgemäße Verfahren ist damit wesentlich schneller als andere bekannte Produktionsverfahren von Humus, die in der Regel Wochen und Monate in Anspruch nehmen.

Die anmeldungsgemäß hergestellten Werk- und/oder Brennstoffe einschließlich Torf beziehungsweise Torf-ähnliche Stoffe haben folgende vorteilhafte Eigenschaften:
- Aus Biomasse entsteht durch Anwendung des anmeldungsgemäßen Verfahrens ein Torf- bis Steinkohle-ähnlicher Brennstoff.
- Der Brennwert ist abhängig von der Prozessführung, insbesondere von der Reaktionsdauer. Der Brennwert steigt mit der Reaktionsdauer beziehungsweise Verweilzeit im Reaktor.
- Weniger flüchtige Bestandteile als gebräuchliche oder fossile Brennstoffe mit gleichem Kohlenstoffanteil.
- Die Energieausbeute bis zur Kohle ist 0,7 - 0,95. Je geringer der Kohlehydratanteil, desto höher der Energieerhalt.
- 90 - 95 %: Lignine bzw. bakterielle Biomasse.
- Die Brennstoffe sind reaktiver und besitzen niedrigere Selbstentzündungstemperaturen als vergleichbarer fossiler Brennstoff mit ähnlich hohem Kohlenstoffanteil.
- Fossile Brennstoffe wie Braunkohle oder Steinkohle weisen im Vergleich zu Brennstoffen, die mittels hydrothermaler Karbonisierung im anmeldungsgemäßen Verfahren hergestellt werden (Brennstoffe), zwar ähnliche Heizwerte auf, unterscheiden sich von Brennstoffen aber deutlich im Hinblick auf die Zusammensetzung und Eigenschaften.

Die unterschiedlichen Arten und Sorten von fossiler Kohle haben je nach Herkunftsort und Abbaugebiet sehr unterschiedliche chemische Zusammensetzungen und Eigenschaften, so dass jede Kohlesorte einzigartige und unverwechselbare charakteristische Merkmale besitzt. Beispielsweise liegt der Heizwert von fossiler Lausitzer Rohbraunkohle bei 8.700 kJ/kg, der Wassergehalt bei ca. 56 Prozent, Schwefelgehalt bei ca. 0,7 Prozent und der Aschegehalt bei ca. 4,5 Prozent. Sowohl Wasser-, Schwefel- und Aschegehalt des Brennstoffs sind geringer während der Brennwert in der Regel deutlich 20.000 kJ/kg liegt. Unabhängig vom Wassergehalt kann a us 1 Kilogramm fossiler Lausitzer Rohbraunkohle in der Lausitz 1 Kilowattstunde Strom erzeugt werden kann. Dagegen kann aus der gleichen Menge Brennstoff mehr als das Doppelte an Strom erzeugt werden.

Im Gegensatz zu fossiler Kohle finden sich im anmeldungsgemäßen Werk- und/ oder Brennstoff gut nachweisbare Konzentrationen an Maillard-Reaktionsprodukten. Als Indikator hat sich Nε-(carboxymethyl)Lysin (CML) etabliert. Sowohl in der flüssigen als auch in der festen Phase der Reaktionsprodukte wird diese Verbindung nachgewiesen. Es wurden Konzentrationen von 0,2 bis über 1,5 mmol/mol Lysin gemessen wobei in der flüssigen Phase höhere Anteile als in der festen gemessen wurden. Die Verteilung der Konzentrationen ist jedoch abhängig von den Ausgangsstoffen, den Reaktionsbedingungen und der Prozessführung. Fossile Kohle liegt nach dem Abbau in Klumpen beziehungsweise je nach Abbautiefe in relativ hochverdichteten Agglomeraten vor, die unter hohem Energieaufwand zerkleinert werden müssen. Weiter muss sie getrocknet und in Kohlemühlen zu feinem Braunkohlenstaub zermahlen werden. Im Gegensatz dazu liegen Werk- und/oder Brennstoffe nach Abschluss des Prozesses als kleine Partikel in der Regel unter 1 Millimeter bis unter 30 Nanometer Größe vor und sind aufgrund ihrer großen Oberfläche leichter zu trocknen. Damit ist der Energieaufwand zur Konditionierung und insbesondere Trocknung von Brennstoffen wesentlich geringer im Vergleich zu fester fossiler Kohle.

Insbesondere sind die Verbrennungseigenschaften des Brennstoffs nicht nur gegenüber fossilen Kohlesorten sondern auch gegenüber den meisten bisher verfügbaren Brennstoffen aus nachwachsenden Rohstoffen günstiger. Mindestens einer meist aber mehrere oder alle der folgenden Parameter fallen bei Brennstoffen insbesondere gegenüber den Ausgangsstoffen beziehungsweise alternativen fossilen oder Biomasse-Brennstoffen günstiger aus: verminderter Ascheanteile, weniger Chlor, Nitrat, Schwefel, Schwermetalle sowie geringere Emissionen von Staub, Feinstaub und gasförmigen Schadstoffen einschließlich Stick- und Schwefeloxide. Dies gilt auch für die gepressten Formen von Brennstoffen wie Briketts und Pellets.

Die Qualität des Brennstoffs und die Verbrennungseigenschaften ist abhängig vom
- Ausgangsstoff beziehungsweise dem Gemisch der Ausgangsstoffe, von der Prozessführung, vom Katalysatorgemisch und von der Zusammensetzung des Prozesswassers,
- Ausgangsstoffe mit hohen Anteilen an Fett und Energiegehalt führen zu
- Brennstoffen mit höheren Heizwerten. Beispielsweise kann bei der Verarbeitung besonders geeigneter Klärschlämmen Heizwerte von 34 - 36 MJ/kg erzielt werden.
- Der Aschegehalt nach Verbrennung des Brennstoffs mit einem Brennwert von 30 - 33 MJ/kg ist im Vergleich zum Ausgangsstoff mit einem Brennwert von 17 - 20 MJ/kg um bis zu 75 Prozent und mehr vermindert.
- Der Schwefelgehalt nach Verbrennung des Brennstoffs mit einem Brennwert von 30 - 33 MJ/kg ist im Vergleich zum Ausgangsstoff mit einem Brennwert von 17 - 20 MJ/kg um bis zu 50 Prozent und mehr geringer.
- Die Feinstaub- und Gasemissionen sind im Vergleich zum Ausgangsstoff geringer.
- Das Verbrennungsergebnis wir durch die Einheit von Prozessführung, aufbereitungsabhängiger Brennstoffqualität und Feuerungstechnik bestimmt.
- Der Brennstoff ist ein einheitlicher Brennstoff, dessen Eigenschaften sich über die Zusammensetzung der Ausgangsstoffe und der Katalysatoren sowie die Prozessführung berechnen und steuern lassen.
- Neben den bereits angeführten Unterschieden bei den Verbrennungseigenschaften sind dies zusätzliche Unterscheidungsmerkmale zu fossilen Brennstoffen wie Steinkohle, Braunkohle oder Torf.
- Auch Rein-, Reinst- und Ultrareinkohle-ähnliche Stoffe gehören zu den anmeldungsgemäßen Produkten. Sie verfügen über vorteilhafte Eigenschaften, die vor allem auf der Verminderung mineralischer Stoffe gegenüber den Ausgangsstoffen zurückzuführen ist. Unter Reinkohle wird vor allem der brennbare Anteil der Kohle und unter Reinstkohle wird auch Aktivkohle verstanden. Bei Ultrareinkohle liegt beispielsweise der Mineralgehalt unter 0, 1 Gewichtsprozent verfügen.

Je nach Ausführungsform einer erfindungsgemäßen Vorrichtung können verschiedene Prozessschritte in einer Einheit zusammengefasst werden. Zum Beispiel kann das Zerkleinern und Vermischen in einer einzelnen Mühle ablaufen oder das Trocknen und Zerkleinern in einer Luftwirbelmühle erfolgen. Sämtliche in dieser Patentschrift erwähnten Vorrichtungen oder Einrichtungen, sind soweit dies prozesstechnisch sinnvoll, wirtschaftlich darstellbar und technisch möglich ist, mit einer Steuerung, Regelung, weitgehenden Automatisierung versehen oder ausgestattet. Gleiches gilt für sämtliche erwähnte Vorgänge, Verfahrens- oder Prozesssch ritte.

Doppelsträngige Hydrolyse oder Reaktorbeschickung für HTC und TDH:
Die Erfindung wird im Weiteren anhand der nachfolgend beschriebenen Abbildungen beispielhaft näher erläutert.

### Kurze Beschreibung der Abbildungen

Figur 1 zeigt beispielhaft eine schematische Darstellung einer Anlage unter besonderer Berücksichtigung einer doppelsträngigen Beschickungsvorrichtung.
Figur 2 zeigt beispielhaft eine schematische Darstellung parallel angeordneter Reaktoren mit jeweils einem nachfolgenden Reaktor.
Figur 3 zeigt beispielhaft eine schematische Darstellung einer Anlage zur thermisch-induzierten-Hydrolyse mit doppelsträngiger Zuführung.

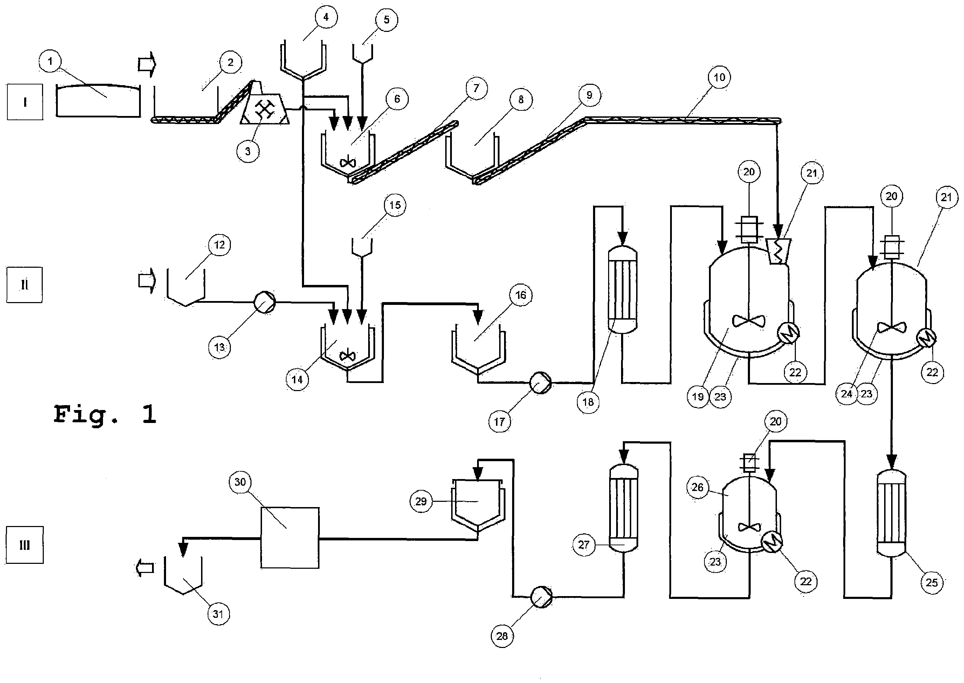

Figur 1 zeigt beispielhaft eine schematische Darstellung einer Anlage unter besonderer Berücksichtigung einer doppelsträngigen Beschickungsvorrichtung für das erfindungsgemäße Verfahren. Die Vorrichtung besteht aus den Fördersträngen I und II sowie dem Entspannungsstrang III. Der Strang I dient zur Förderung von Ausgangsstoffen mit einem hohen Feststoffanteil von zum Beispiel 3 bis 50 Prozent bezogen auf das Gesamtvolumen. Dazu wird die "trockene" Biomasse in einem Silo (1) bevorratet und von dort in einen Container (2), vorzugsweise einen Schubbodencontainer, verbracht. Über eine Fördervorrichtung, die zum Beispiel eine Förderschnecke oder ein Förderband sein kann, werden die Ausgangsstoffe in eine Zerkleinerungsvorrichtung (3), zum Beispiel ausgeführt als Nass- oder Trockenmühle oder als andere geeignete mechanische Zerkleinerungseinheit, und von dort aus in einen Mischbehälter (6) gefördert. Im Mischbehälter (6) wird die trockene Biomasse mit aufkonzentriertem Prozesswasser aus dem Reservoir (4) und mindestens einem Katalysator aus dem Behältnis (5) mittels eines Rührwerkes im an anderer Stelle dargestellten Mischverhältnis gründlich durchmischt. Über die Fördereinrichtung (7) wird das Gemisch dem Inkubationsbehälter (8) zugeführt. Der Inkubationsbehälter (8) ermöglicht eine Einwirkzeit des Katalysators auf das Material. Die Behälter (6) und (8) sind doppelwandig ausgeführt und haben einen Heizwasseranschluss, um eine Vorwärmung des Materials auf 50 - 60 Grad Celsius zu ermöglichen. Über die Fördereinrichtungen (9) und (10), die zum Beispiel als Schneckenförderer oder als Förderbänder ausgelegt sind, wird das inkubierte Material der "trockenen" Ausgangsstoffe über eine Einbringvorrichtung (21) aus dem ersten Förderstrang I in einen ersten Reaktor (19) unter Druck oberhalb des Dampfdrucks des Prozesswassers eingebracht. Die Einbringvorrichtung (21) besteht aus einem Zwangsförderer, der zum Beispiel ein Injektor, Doppelschrauben-Extruder, eine Exzenterschneckenpumpe, eine Kolbenpumpe, eine Spiralverdrängerpumpe, die jeweils mit oder ohne Verdichterschnecken ausgestattet sind, oder ein Doppelschneckenverdichter ist. Die Einbringvorrichtung (21) kann zusätzlich mit einer Absperrvorrichtung versehen sein. Die Einbringvorrichtung (21) stellt sicher, dass das inkubierte Material aus dem Strang I mit einem Druckniveau oberhalb des Reaktorinnendrucks in den Reaktor (19) eingebracht wird und verhindert Rückwirkungen in die Zuführeinrichtung.

Über den Förderstrang II werden pumpfähige Ausgangsstoffe mit einem Feststoffgehalt von 3 bis 50 Prozent bezogen auf das Gesamtvolumen aus einem Vorratsbehälter (12) mittels einer Fördervorrichtung (13) in eine Mischvorrichtung (14) überführt und in der Mischvorrichtung (14) mit Prozesswasser aus dem Reservoir (4) und Katalysator aus einem Behältnis (15) angemischt, in einem Inkubationsbehälter (16) inkubiert und mittels einer geeigneten Fördervorrichtung (17), die zum Beispiel als Kolben-, Spiralverdränger-, oder Exzenterschneckenpumpe ausgelegt sein kann, dem Reaktor (19) zugeführt. Über die Wärmetauschereinheit (18) wird das Material auf mindestens 160 - 180, 200 - 220 oder 220 bis 250 Grad Celsius aufgewärmt. Die so vorbehandelten Ausgangsstoffe aus Förderstrang II werden über die beschriebenen oder andere geeignete Fördereinrichtungen über die vorher, parallel oder nachher in den Reaktor (19) geförderten oder vorgelegten Ausgangsstoffe aus Förderstrang I geleitet. Das Verhältnis des Massendurchsatzes von Förderstrang I zuFörderstrang II oder von vorgelegten zu zugeleiteten Ausgangsstoffen beträgt zum Beispiel 1 : 20, 1 : 5, 1 : 1 oder 10 : 1. Im ersten Reaktor (19) findet eine gleichmäßige Durchmischung über eine Misch- oder Rührvorrichtung (20) des vorgelegten beziehungsweise des zugeführten Materials statt. Das Aufheizen und das Abführen von bei der Reaktion auftretender Exothermie erfolgt über eine Wärmetauschervorrichtung (22) in Verbindung mit der Doppelwand (23) des Reaktors (19) und/oder anderer in den Reaktor (19) eingebrachten oder mit dem Reaktionsgemisch in Berührung stehenden Wärmetauschern. Diese können zum Beispiel als Spiral-, Rohr-, Bündel- oder Spiralwärmetauscher ausgebildet sein. Nach der notwendigen Verweilzeit wird der Inhalt des Reaktors (19) unter Ausnutzung eines Druckgefälles in einen zweiten Reaktor (24) überführt.

Zusätzlich kann ein Fördermittel zur Beschleunigung von Flüssigkeiten eingesetzt werden. Der in Durchflussrichtung hinter dem ersten Reaktor (19) liegende zweite Reaktor (24) verfügt über ein kleineres Volumen. Denn über eine an anderer Stelle beschriebene Vorrichtung zur Fest-Flüssig-Trennung wird Prozesswasser abgezogen, wodurch sich das Volumen des Reaktionsgemischs verkleinert. Dadurch werden im weiteren Prozessverlauf geringere Reaktorvolumina beziehungsweise kleinere Reaktionsräume benötigt. Gleichzeitig ermöglicht das Abziehen von Prozesswaser auch das Zusammenführen der verkleinerten Reaktionsvolumina aus verschiedenen parallel angeordneten Reaktoren beziehungsweise von Reaktionsgemischen, die parallel oder zeitversetzt mit einem um bis zu 50 Prozent der gesamten Reaktionszeit voneinander abweichenden Reaktionsstadium oder mit einer um bis zu 50 Prozent abweichenden Restreaktionszeit, in einen einzelnen Reaktor zusammengeführt wird. Das Volumen dieses Reaktors liegt zum Beispiel 5, 10 oder 20 Prozent unter dem Volumen der Summe aller Reaktorvolumina, von denen der Reaktor das Reaktionsgemisch empfängt.

Der Reaktor (24) ist ebenfalls mit einer Wärmetauschervorrichtung (22), einer Rührvorrichtung (20) und einer Doppelwand (23) ausgestattet und hält die Temperatur über die Verweilzeit konstant auf dem für die Reaktion notwendigen Niveau. Die freiwerdende Reaktionswärme wird über die Wärmetauschervorrichtung (22) abgeführt, wodurch eine Kühlung erreicht wird. Nach Ablauf der Verweilzeit für Reaktor (24) findet eine Entspannung des Materials über die Wärmetauschereinheit (25) in den Entspannungsbehälter (26) statt. Auch hier kann über Rührvorrichtung (20), Wärmetauschervorrichtung (22) und Doppelwand (23) das Material thermisch behandelt werden. Der Wärmetauscher (27) sorgt für eine Abkühlung des Materials auf Temperaturen unterhalb der Verdampfungstemperatur von Wasser. Der Durchfluss und die Druck-Entspannung werden dabei über eine rückwärtsgerichtete Entspannungspumpe (28), die als Zwangsförder-, Exzenterschnecken-, Spiralverdränger-, oder Kolbenmembranpumpe ausgebildet ist, gesteuert.

Das nasse Ausgangsmaterial wird in einem Entspannungsbehälter (29) gelagert. Über dessen Doppelwand kann anfallende Wärme abgeführt werden. Über die nachgeschaltete Fest-Flüssig-Trennvorrichtung (30), die als Dekanter, Zentrifuge, Zyklon, Filterkammerpresse, Filtrationsvorrichtung oder eine demselben Zweck der Trennung oder Trocknung dienende oder eine an anderer Stelle erwähnte Vorrichtung ausgelegt ist, wird überschüssiges Prozesswasser abgetrennt und dieses zu mindestens 2, 20 oder 80 Prozent wieder für andere Prozesse innerhalb des erfindungsgemäßen Verfahrens zur Verfügung gestellt. Das Endprodukt wird im Lager (31) zur weiteren Verwendung zwischengelagert.

Die Beschickung eines ersten oder mehrerer erster Reaktoren kann auch über einen einzelnen Förderstrang, das heißt über den Förderstrang I oder II allein beziehungsweise unabhängig von einem zweiten Förderstrang erfolgen. Werden "feuchte" Ausgangsstoffe gefördert, ist dies unproblematisch. Ist ein erster Reaktor allerdings mit "trockenem" und schüttfähigem Ausgangsstoff befüllt, muss auf eine ausreichende Zufuhr von Wasser geachtet werden. Vorteilhaft ist dazu die Verwendung von Prozesswasser oder aufkonzentriertem Prozesswasser bei Temperaturen von über 60, 100, 160 oder 200 Grad Celsius, wobei eine Befüllung kurz, das heißt bis zu 5, 10, 40 oder 60 Prozent, unterhalb des Schütthaufens beziehungsweise des Füllstands des "trockenen" Ausgangsstoffs ausreichend ist. Die Befüllungshöhe mit Prozesswasser innerhalb des Reaktors hängt unter anderem von der Schüttdichte und sonstigen Beschaffenheit des Ausgangsstoffes ab.

Um den Durchsatz der Ausgangsstoffe beziehungsweise die Ausbeute des erfindungsgemäßen Brenn- oder Werkstoffs zu erhöhen, ist die Einstellung eines möglichst hohen Feststoffgehalts erforderlich. Der limitierende Faktor zur Maximierung des Feststoffgehalts ist zum einen die Pumpfähigkeit für die überwiegend feuchte Biomasse und zum anderen die Förderfähigkeit unabhängig von einer Pumpe von eher trockener Biomasse verbunden mit der Einbringung in einen Reaktor. Gleichzeitig muss berücksichtigt werden, dass eine Vorinkubation auch für die trockene Biomasse durchzuführen ist. Dabei ist eine Benutzung der Ausgangsstoffe mit möglichst geringer Partikelgröße wie sie an anderer Stelle dieser Schrift beschrieben ist in der Regel ausreichend. Die Abnahme der Viskosität im Verlauf des Beschickungsverfahrens kann als Maß des Fortschreitens der Vorbehandlung angesehen werden. Die Viskosität des Fest-Flüssig-Gemischs nimmt beim Durchlauf durch die Beschickungsvorrichtung ab und ist zum Ende des Prozesses mindestens auf über drei Viertel, auf über die Hälfte oder auf über ein Fünftel der Viskosität des Ausgangsmaterials vermindert. Allerdings gilt für die Viskositätsmessung, dass während des Umsetzungsprozesses, also zwischen den Messungen, kein Wasser abgezogen oder verdampft wurde.

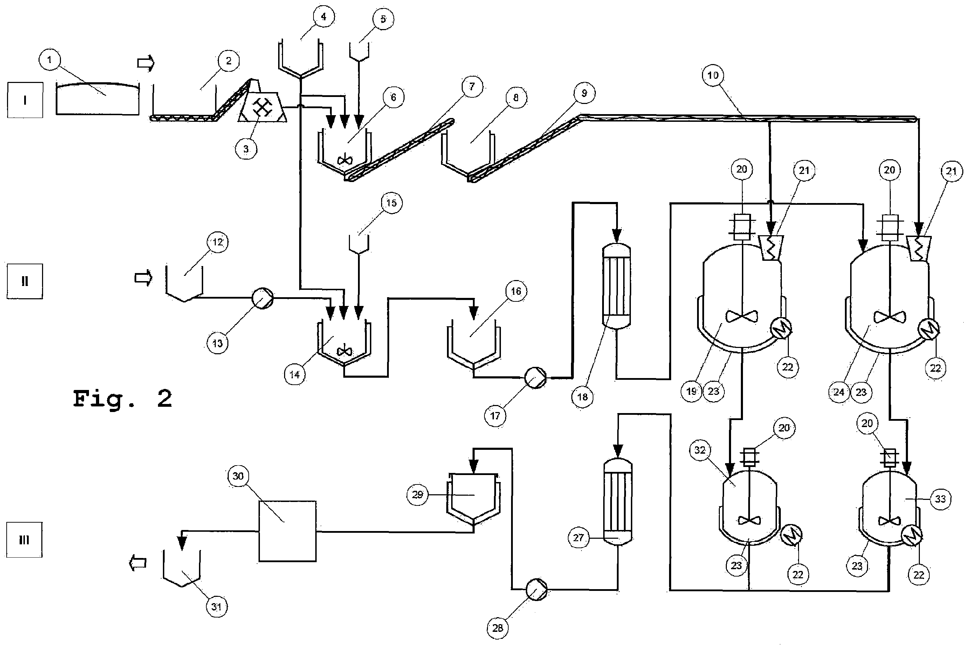

Figur 2 zeigt beispielhaft eine schematische Darstellung parallel angeordneter Reaktoren (19) und (24) mit jeweils einem nachfolgenden Reaktor (32) und (33). Die Elemente der Anlage stimmen sonst mit Figur 1 überein und sind daher jeweils mit gleichen Bezugsziffern versehen. Unter parallel angeordneten Reaktoren (19, 24 bzw. 32, 22) wird eine Reaktorkonfiguration verstanden, bei der mehrere Reaktoren parallel befüllt oder entleert werden, so dass ein kontinuierlicher Zulauf- und Austragsstrom realisiert wird. Ein Zulauf- und Austragsstrom ist dann kontinuierlich, wenn mindestens 10 - 30, 30 - 60 oder 60 - 90 Prozent der Reaktionszeit die mindestens einem Reaktor vor- oder nachgeschalteten Einrichtungen durchflossen werden. Zu diesen Einrichtungen zählen Wärmetauscher zum Aufheizen und Abkühlen des Reaktionsgemischs.

Durch eine parallele Anordnung wird ermöglicht, dass jeder Reaktor unabhängig von einem anderen befüllt oder entleert werden kann. Während ein erster Reaktor befüllt wird und ein zweiter Reaktor entleert wird, wird in einem dritten Reaktor das Reaktionsvolumen unter Betriebsbedingungen für einen Zeitraum von 10 - 100, 100 - 300 oder 300 - 1.600 Minuten gehalten werden. Ist ein erster Reaktor gefüllt, wird er zu einem dritten Reaktor, d.h. er übernimmt die Funktion eines dritten Reaktors, in dem eine Verweilzeit von mindestens 1 - 9, 10 - 30, 30 - 60 oder 60 - 99 Prozent der Reaktionszeit ermöglicht wird. Ist ein zweiter Reaktor entleert, wird er zu einem ersten Reaktor, d.h. er übernimmt die Funktion eines ersten Reaktors, der wieder befüllt wird. Ein dritter Reaktor kann auch aus unendlich vielen Reaktoren bestehen.

Zulauf- und Austragsströme können auch in Teilströme zerlegt werden, so dass mehrere Reaktoren gleichzeitig, zeitversetzt oder intermittierend befüllt oder entleert werden können. Somit kann es auch beliebig viele erste und zweite Reaktoren geben. Bei einem zeitlich versetzten Teilstrom im Zulauf wird nach Befüllung eines ersten Reaktors der Zulaufstrom umgeschaltet auf einen zweiten zu befüllenden Reaktor. Genauso wird bei einem zeitlich versetzten Teilstrom im Zulauf wird nach Befüllung eines ersten Reaktors der Zulaufstrom umgeschaltet auf einen zweiten zu befüllenden Reaktor. Im Ergebnis wird dadurch der Zulauf- und Austragsstrom aufrecht erhalten.

Ein paralleler Teilstrom besteht aus einem Teilstrom der gleichen Charge oder einem behandelten Reaktionsgemisch, dessen Reaktionsdauer nicht mehr als 1 bis 5 Prozent, 5 bis 10, 10 - 30, 30 - 60 oder 60 bis 80 Prozent voneinander abweichen. In Analogie zum Kaskadenreaktor, bei dem mehrere Reaktoren hintereinandergeschaltet sind, so dass der Austragsstrom des einen Reaktors dem Zulaufstrom des nächsten Reaktors entspricht, können mehrere parallel angeordnete Reaktoren als Parallelreaktor bezeichnet werden.

Eine Reaktorfüllung wird als Charge bezeichnet. Eine Charge kommt die Einleitung von Reaktionsgemisch oder eines Teilstroms in einen in sich abgeschlossenen Reaktorraum zustande. Werden dem Fest-Flüssig-Gemisch Bestandteile entzogen, verringert sich dadurch das Volumen einer Charge. Um Reaktionsraum zu sparen wird es einem nachfolgenden Reaktor mit geringerem Volumen zugeführt, als der vorausgehende Reaktor. Reaktionsströme aus mehr als einem Reaktor können in einem Reaktor zusammengeführt werden. Dabei ist das Reaktorvolumen des Zielreaktors, in dem Chargen aus mindestens zwei Reaktoren zusammengeführt werden, kleiner als die Summe der vorgeschalteten Reaktoren. Diese Reaktorkonfiguration wird als Decrescendo-Kaskadenreaktor bezeichnet. Alle eingesetzten Reaktoren sind parallel und in einer Weise miteinander verbunden, dass Zulauf- und Ausgangsströme auch als Teilströme aus jedem Reaktor in jeden Reaktor geleitet werden kann. Durch getrennt gesteuerte Ventile an allen Zulauf- und Austragsstellen sind die Reaktionsräume voneinander abtrennbar.

Bedingt durch die energetische Nutzung von biogenen Reststoffen und landwirtschaftlichen Erzeugnissen und den damit verbundenen Hygienisierungsauflagen gewinnt eine thermische Vorbehandlung von Biomasse zunehmend an Bedeutung. Durch die Hydrolyse und insbesondere die sogenannte Thermo-Druck-Hydrolyse oder Thermisch-Induzierte-Hydrolyse, die einer Vergärung oder anderen Verfahren zur Energieerzeugung aus Biomasse vorgeschaltet ist, wird ein besserer Aufschluss insbesondere von lignocellulosehaltiger Biomasse wie Holz, Gras und Grünschnitt erreicht, so dass diese für die Mikroorganismen und die Brennstofferzeugung besser, schneller und vollständiger zugänglich ist. Weiter wird hochinfektiöses Material hygienisiert und bietet damit eine kostengünstige und sichere Alternative zum Beispiel zur Tiermehlherstellung. Durch Anwendung dieses Hydrolyseverfahrens fällt kein Tiermehl mehr an, das möglicherweise nur schwierig und kostspieliger zu entsorgen wäre.

Die Behandlung organischer Abfälle durch Vergärung führt nach Anwendung des erfindungsgemäßen Hydrolyseverfahrens zu einer Verminderung des Biomasseeinsatzes um 10 bis 20 oder 20 bis 30 oder mehr Prozent bezogen auf den organischen Feststoffgehalt zur Erzeugung der gleichen Energiemenge. Verschiedene Verfahren zur Vorbehandlung von Biomassen vor Einleitung in einen Fermenter einer Biogasanlage wurden vorgeschlagen. Darunter wurde vor einigen Jahren eine sogenannte Thermo. Druck-Hydrolyse entwickelt, bei der die Ausgangsstoffe durch einen Schlaufenreaktor (DE19723519) oder Hydrolysereaktor (DE3928815) geleitet werden und auf eine Temperatur von 180 Grad Celsius erhitzt werden. Die Durchführung einer mikrobiologischen Hydrolyse wurde in einem Rohrreaktor vorgeschlagen (DE4403391). Bei der sogenannten Thermo-Druck-Hydrolyse oder thermisch-induzierten-Hydrolyse wird Biomasse über einen Zeitraum von etwa 20 Minuten behandelt. Dies ist im Gegensatz zur hydrothermalen Karbonisierung ein deutlich kürzerer Zeitraum.

In den letzten Jahren wurden mehrere Anlagen zur Thermo-Druck-Hydrolyse bei 180 Grad Celsius als Rohrreaktor gebaut. Trotz erwarteter hoher Effizienzgewinne blieb eine breite Anwendung in der Praxis aus. Mehrere Testanlagen haben die angestrebten Feststoffgehalte nicht dauerhaft erreichen können, da es immer wieder zu Anbackungen und Verstopfungen im als Rohrreaktor ausgebildeten Wärmetauscher kam. Diese über Jahre andauernden Probleme konnten nur durch Herabsetzung der Feststoffgehalte vermieden werden, die die Ausbeute an hydrolysiertem beziehungsweise erhitztem Material soweit herabsetzte, dass eine wirtschaftliche Nutzbarkeit dieser Technologie praktisch nicht erreicht werden konnte.

Wahrscheinlich wurde sowohl das Sedimentationsverhalten von Biomassen als auch das Quellverhalten von Polymerstrukturen in lignocellulosehaltiger Biomasse und von Stärke in landwirtschaftlichen Erzeugnissen beim Erhitzen unterschätzt. Quellung ist eine reversible Volumenzunahme eines Festkörpers bei Einwirkung von Flüssigkeiten, Dämpfen und Gasen. Denn die Polymerstruktur quillt durch Wassereinlagerung auf. Es wird ein physikalischer und chemischer Quellungsprozess unterschieden. Bei der physikalischen Quellung sucht sich das Wasser zum Beispiel einen Platz in den Poren des Holzes und der Zwischenräume. Die entstehende Oberflächenspannung zwischen dem Wasser und dem Holz wird auch als Kapillarkraft bezeichnet. Neben diesem physikalischen Vorgang gibt es einen chemischen Quellungsprozess, bei dem Wasser sich durch seine hydratisierende Wirkung über Wasserstoffbrücken an hydrophilen Strukturen, wie zum Beispiel OH-Gruppen bei Aminosäuren anlagert. Bei pflanzlichen Strukturen wird Wasser zwischen Polysacchariden in der Zellwand eingelagert. Während des Quellungsprozesses kommt es vorübergehend zur Ausbildung von gallertartigen im weiteren Verlauf auch kolloidalen Strukturen, die sich bei weiterer Erhitzung im Prozessverlauf wieder auflösen. Auch bestimmte Eiweißsubstanzen wie zum Beispiel leimähnliche Substanz aus Knochen und Hautabfällen können in Wasser quellen.

Stärke kommt in der Natur in Form von Stärkekörnern vor, die sich in kaltem Wasser aufschlämmen, beziehungsweise suspendieren lassen. Wird eine solche Suspension erhitzt, beginnen die Stärkekörner zu quellen. Dies geschieht vor allem zwischen 47 und 57 °C. Bei höheren Temperaturen zwischen 55 - 86 °C lösen sich die Stärkekörner auf. Die Stärke, die aus Amylose und Amylopektin aufgebaut ist, tritt zum Beispiel bei Kartoffelstärke bei 62,5 °C und Weizenstärke bei 67,5 °C nach und nach aus. Dabei nimmt die Viskosität der Lösung stark zu und es bildet sich ein Gel. Gele werden traditionell auch Kleister genannt, weil sie sich oft wie Kleister verhalten. Den ganzen Prozess der Stärkequellung und Gelbildung bezeichnet man deshalb als "Verkleisterung". Der Stärkekleister besitzt je nach der Stärkesorte verschiedene Steifungsvermögen. Das Quellverhalten wird durch Druck und Hitze noch verstärkt und läuft unter den Bedingungen einer Thermisch-Induzierten-Hydrolyse beschleunigt ab.

Aus der Literatur ist bekannt, dass der Stärkeanteil in verschiedenen Biomassen stark variieren kann. In Maissilage kann er zum Beispiel zwischen 1,2 und 44,4 Gewichtsprozent bezogen auf die Trockensubstanz betragen. Das Steifungsvermögen im Maisstärkekleister ist größer als Weizenstärkekleister und dieses wiederum größer als Kartoffelstärkekleister. Da Maissilage eine häufig eingesetzte Biomasse zur Erzeugung von Biogas ist, ist bei Hydrolysevorgängen das hohe Steifungsvermögen besonders zu beachten, um Verstopfungen von Wärmetauschsystemen zu vermeiden. Es ist zu bedenken, dass ein geringer Stärkeanteil von zum Beispiel unter 5 Prozent unter bestimmten Bedingungen und insbesondere bei konstanten Temperatur- und Druckverhältnissen die Pumpfähigkeit verbessern kann. Da bei der Thermisch-Induzierten-Hydrolyse der Druck und die Temperatur aber schnell ansteigen, ist mit einer Volumenzunahme und damit auch mit einer Zunahme des Fließwiderstandes zu rechnen. Biomasse oder Ausgangsstoffe mit hohen Stärkeanteilen von zum Beispiel über 10-30, 30 - 50 oder über 50 Prozent bezogen auf die Trockenmasse werden über den Strang für "trockene" Biomasse, also dem Förderstrang I direkt in den ersten Reaktor eingeleitet und dort mit flüssiger erhitzter Biomasse aus dem Förderstrang II überschichtet und/oder vermengt. Biomasse oder Ausgangsstoffe mit niedrigem Stärkegehalt unter 3, 5, oder 10 Prozent bezogen auf die Trockenmasse, die gleichzeitig mit oder ohne Vorbehandlung pumpfähig sind, werden durch den Förderstrang II geleiteten.

Die Ursache der verstärkten Bildung von Ablagerungen und Verstopfungen liegt wahrscheinlich an einer Kombination verschiedener Faktoren. Für die Volumenzunahme spielt die Prozessgasbildung im Wärmetauscher ebenso wie die Stärkequellung eine Rolle. Idealisiert geht man bei einem Rohrreaktor von einer Pfropfenströmung aus. Bei einer Volumenzunahme durch Gasbildung oder Quellung ist daher mit einer Druckerhöhung zu rechnen. Diese wird durch die Zunahme der Viskosität durch Stärkequellung des Fördergutes zusätzlich erhöht. Damit steigt auch der Flusswiderstand an.

Bei allen gebauten Anlagen zur Thermo-Druck-Hydrolyse wurden die als Rohrreaktor ausgebildeten Wärmetauscher aufgrund der beträchtlichen Längen der geraden Rohrstücke waagerecht, also senkrecht zur Schwerkraft verbaut. Um die thermisch-induzierte-Hydrolyse beziehungsweise den Erhitzungsvorgang von Biomasse zu verbessern, insbesondere hinsichtlich der höherer Ausbeuten bezogen auf den Feststoffgehalt wird mit der vorliegenden Erfindung ein Verfahren zur Hydrolyse beziehungsweise zum Erhitzen von Biomasse vorgeschlagen, welches dadurch gekennzeichnet ist, dass das Fest- Flüssig-Gemisch zum Aufheizen einen Wärmetauscher durchläuft und das Fest- Flüssig-Gemisch zur Vermeidung von Anbackungen und/oder Verstopfungen im Wesentlichen parallel zur Gravitationskraft durch die nicht gebogenen Rohranteile geleitet wird.

Innerhalb des Wärmetauschers soll sich das fließfähige Fördergut eigenständig und ohne wesentliche Einwirkungen anderer Kräfte als der Gravitationskraft nach unten bewegen, um Anbackungen und Verstopfungen zu verhindern. Daher ist der Wärmetauscher so ausgelegt, dass das Betragsmittel des Winkels der Rohrachse zur Horizontalebene größer als 4 oder 7 oder in Ausführungsform größer als 10 Grad ist. Der Wärmetauscher besteht aus mindestens 20, 40 oder 60 Prozent senkrechten Rohranteilen. Senkrechte Rohranteile sind die Anteile der medienführenden Rohre, deren Betragsmittel des Winkels der Rohrachse zur senkrechten Ebene höchstens 70 oder 50 oder 45 Grad beträgt. Senkrecht bedeutet in einem Winkel von unter 45 Grad zur Senkrechten wobei in Ausführungsform der Winkel der senkrechten Rohranteile höchstens 10 Grad zur Senkrechten beträgt.

Der Wärmetauscher besteht zum Beispiel aus einem Rohrreaktor oder einem Rohrbündel- oder Plattenwärmetauscher oder einer Kombination dieser Vorrichtungen. Der Wärmetauscher ist modular aufgebaut und kann aus verschiedenen Modulen, Einheiten oder Abschnitten bestehen. Die modularen Einheiten sind in räumlicher Nähe so zueinander angeordnet, dass mehrere Wärmetauschereinheiten hintereinander geschaltet werden können.

Das Temperierungssystem des Wärmetauschers besteht aus einer Doppelwand, deren Zwischenraum von einem Wärmeenergieträgermedium durchströmt wird. Das Wärmeenergieträgermedium ist zum Beispiel ein Thermoöl, Wasserdampf oder Prozesswasser aus dem erfindungsgemäßen Verfahren oder einem anderen Prozess. Es können auch verschiedene Wärmeträgermedien kombiniert werden. Die Zieltemperatur dieses Mediums liegt zwischen 60 und 350 Grad Celsius. Die Temperatur in einem ersten Abschnitt oder Modul liegt beispielsweise bei 60 - 100 oder 80 - 120 Grad Celsius, in einem zweiten Abschnitt oder Modul zwischen 100 und 140 oder 120 und 160 Grad Celsius, in einem dritten Abschnitt zwischen 140 und 180 oder 160 und 200 Grad Celsius und in einem vierten Abschnitt zwischen 180 und 220, 200 und 240 oder 240 und 350 Grad Celsius. Die Temperaturen des Wärmeträgermediums können auch um bis zu 20, 40 oder 60 Grad Celsius variiert werden. Die Einheiten, Module oder Abschnitte des Wärmetauschers sind so hintereinander geschaltet, dass die Temperatur des Fest-Flüssig-Gemischs nach Erreichen einer Höchst- oder Peaktemperatur von zum Beispiel 220 bis 260 Grad die Temperatur wieder auf eine niedrigere Ein- oder Ausleittemperatur gebracht wird. Der Wärmetauscher wird mit einem Hydrolysereaktor ausgestattet, der das Material auf einem Niveau von zum Beispiel +/- 2 bis 8 Grad Celsius hält und eine Verweilzeit von zum Beispiel mindestens 20 Minuten entsprechend den regionalen Hygienevorschriften garantiert.

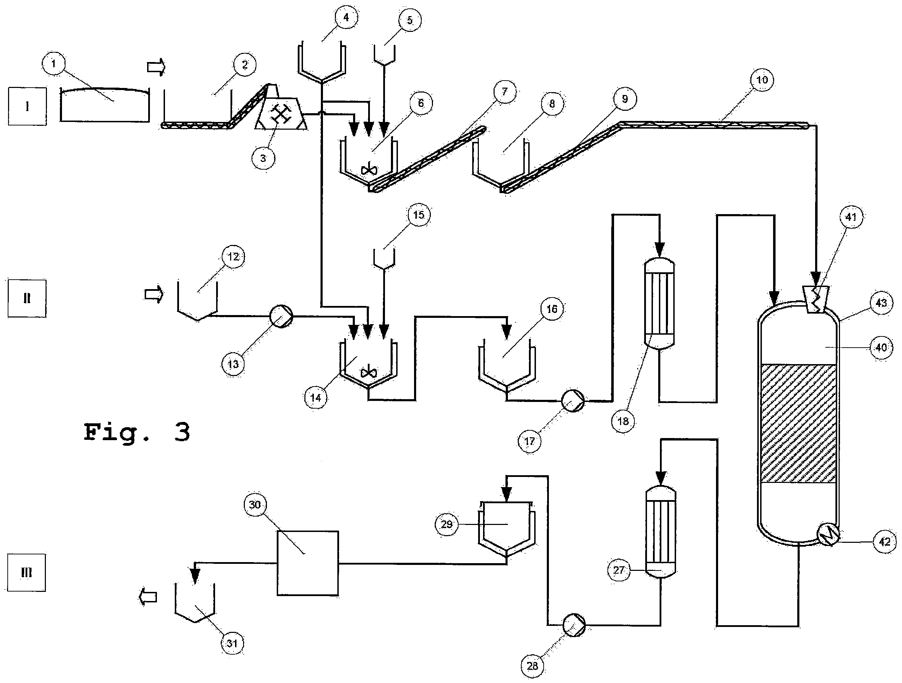

Figur 3 zeigt beispielhaft eine schematische Darstellung einer Anlage zur thermisch-induzierten-Hydrolyse mit doppelsträngiger Zuführung. Die Vorrichtung zur Hydrolyse besteht aus den Fördersträngen I und II sowie dem Entspannungsstrang III. Der Strang I dient zur Förderung von Ausgangsstoffen mit einem hohen Feststoffanteil von zum Beispiel 3 bis 50 Prozent bezogen auf das Gesamtvolumen. Dazu wird die "trockene" Biomasse in einem Silo 1 bevorratet und von dort in einen Schubbodencontainer 2 verbracht. Über eine Fördereinrichtung, die zum Beispiel eine Förderschnecke oder ein Förderband sein kann, werden die Ausgangsstoffe in eine Zerkleinerungsvorrichtung (3) und von dort aus in einen Mischbehälter (6) gefördert.

Im Mischbehälter wird die trockene Biomasse mit aufkonzentriertem Prozesswasser aus dem Reservoir (4) und dem Katalysatordosierer (5) mittels eines Rührwerkes gründlich durchmischt. Über eine weitere Fördereinrichtung 7, die zum Beispiel eine Förderschnecke oder ein Förderband sein kann, wird das Gemisch dem Inkubationsbehälter 8 zugeführt. Der Inkubationsbehälter ermöglicht eine Einwirkzeit des Katalysators auf das Material. Die Behälter (7) und (8) sind doppelwandig ausgeführt und haben einen Heizwasseranschluss, um eine Vorwärmung des Materials auf 50 - 60°C zu ermöglichen.

Über die Fördereinrichtungen (9) und (10) (Schnecken oder Förderbänder) wird das inkubierte Material der Reaktor-Einbringvorrichtung (21) zugeführt. Die Einbringvorrichtung besteht aus einem Zwangsförderer, der zum Beispiel ein Injektor, Doppelschrauben-Extruder, eine Exzenterschneckenpumpe, eine Kolbenpumpe, eine Spiralverdrängerpumpe, die jeweils mit oder ohne Verdichterschnecken ausgestattet sind, oder ein Doppelschneckenverdichter ist und mit Absperrvorrichtungen versehen ist. Die Einbringvorrichtung stellt sicher, dass das inkubierte Material aus dem Strang I mit einem Druckniveau oberhalb des Reaktorinnendrucks in den Reaktor (19) eingebracht wird und verhindert Rückwirkungen in die Zuführeinrichtung.

Über den Förderstrang II werden pumpfähige Ausgangsstoffe mit einem Feststoffgehalt von 3 bis 50 oder 50 bis 70Prozent bezogen auf das Gesamtvolumen im Mischbehälter (14) mit Prozesswasser (4) und Katalysator (15) angemischt, inkubiert (16) und über eine geeignete Fördereinrichtung (17) (z.B. Kolben-, Spiralverdränger, Exzenterschneckenpumpe) dem Reaktor zugeführt. Über die Wärmetauschereinheit 18 wird das Material auf 180 - 200° C aufgewärmt. Ein einzelner Hydrolysereaktor (40) ersetzt die Reaktoren (19, 24, 32, 33) in Figur 1 oder 2. Die Elemente der Anlage stimmen sonst mit Figur 1 oder 2 überein, so dass diese jeweils mit gleichen Bezugsziffern versehen sind. Im Hydrolysereaktor (40) wird flüssige, pumpfähige Biomasse aus dem Förderstrang II mit trockener Biomasse aus dem Förderstrang I vermischt. Die trockene Biomasse aus Förderstrang I wird dem Hydrolysereaktor (40) über eine geeignete Einbringvorrichtung (41) zugeführt. Über einen Wärmetauscher (42) und die Doppelwand (43) des Hydrolysereaktors (40) kann das Material zusätzlich thermisch beeinflusst werden.

Nach Ablauf der Verweilzeit für den Reaktor (40) findet eine Entspannung des Materials über den Wärmetauscher (27) in den Entspannungsbehälter (29) statt. Der Wärmetauscher (27) sorgt für eine Abkühlung des Materials auf Temperaturen unterhalb der Verdampfungstemperatur von Wasser. Der Durchfluss und die Druck-Entspannung werden dabei über eine rückwärtsgerichtete Entspannungspumpe (28), die als Zwangsförder-, Exzenterschnecken-, Spiralverdränger- oder Kolbenmembranpumpe ausgelegt ist, gesteuert.

Das nasse Ausgangsmaterial wird im Entspannungsbehälter (29) gelagert. Über die Doppelwand kann anfallende Wärme abgeführt werden. Über die nachgeschaltete Fest-Flüssig-Trennvorrichtung (30), die als Dekanter, Zentrifuge, Zyklon, Filterkammerpresse, Filtration oder zum ähnlichen Zweck eingesetzte oder an anderer Stelle beschriebene Einrichtungen ausgebildet ist, wird überschüssiges Prozesswasser abgetrennt und kann an anderer Stelle dem Gesamtprozess wieder zur Verfügung gestellt werden. Das Endprodukt wird im Lager (31) zur weiteren Verwendung zwischengelagert.

Das Hydrolyseverfahren wird weitgehend kontinuierlich betrieben. Das heißt, dass der Zeitraum über den Ausgangsstoffe über einen Reaktionszyklus beziehungsweise über die für einen Durchlauf des Materials benötigte Zeit hinweg in den Prozess über die Wärmetauschereinheit (18) eingebracht werden mindestens sechs Zehntel des Reaktionszyklus beträgt. Versetzt gilt der gleiche Zeitraum für den Befüllungsvorgang in den Wärmetauscher (27) zur Abkühlung oder in den Entspannungsbehälter (29). Dabei wird über die Fördereinrichtung (17) und die Einbringvorrichtung (41) ein Durchsatz der Anlage definiert. Die rückwärtsgerichtete Entspannungspumpe (28) wird mittels Drucksensoren an verschiedenen Stellen der Anlage so in der Drehzahl geregelt, dass mit dem in der Anlage herrschenden Druck eine Verdampfung des Materials verhindert wird. Alternativ zu einer Entspannungspumpe kann auch ein Ventil zur Entspannung eingesetzt werden.

Die Entspannungsvorrichtung oder-pumpe (28) ist temperatur- und/oder druckgesteuert. Über eine Verminderung der Drehzahl wird eine längere Verweilzeit im Wärmetauscher (27) erreicht. Dadurch nimmt die Temperatur des Mediums ab. Die Temperatur wird so eingestellt, wie sie in der nachfolgenden Vorrichtung oder im nachfolgenden Prozess benötigt wird. Wird das Reaktionsgemisch zum Beispiel in einen Behälter mit Umgebungsdruck weitergeleitet, ist die Einstellung auf eine Temperatur unterhalb des Siedepunkts erforderlich, um ungezielte und unkontrollierte Verdampfungsprozesse zu vermeiden. Bei Zuführung in einen Trocknungsprozess können je nach Ausführungsform, von denen einige an anderer Stelle beschrieben sind, Temperaturen über dem Siedepunkt erwünscht. Die Entspannungspumpe (28) wird so gesteuert, dass der verbleibende Restdruck zur Förderung in einen nachfolgenden Prozess oder eine Vorrichtung ausreicht. Der Restdruck liegt zum Beispiel unter 10, 5, 2 oder 1 bar.

Die Auslegung einer Anlage zur thermisch-induzierten-Hydrolyse mit doppelsträngiger Zuführung und die einer doppelsträngigen Beschickungsvorrichtung für das erfindungsgemäße Verfahren zur Herstellung von Brenn- und Werkstoffen ähneln sich in einigen Punkten. Daher sind einige Vorrichtungen und Auslegungsformen austauschbar. Sämtliche Vorrichtungen, die im Zusammenhang mit einer doppelsträngigen Ausgangsstoffzufuhr stehen, sind soweit dies technisch möglich und wirtschaftlich darstellbar ist, mit einer Steuerung, Regelung, weitgehenden Automatisierung versehen oder ausgestattet. Gleiches gilt für sämtliche erwähnte Vorgänge, Verfahrens- oder Prozessschritte.

Die Abnahme der Viskosität im Verlauf des Verfahrens kann als Maß des Fortschreitens der Hydrolyse angesehen werden. Die Viskosität des Fest-Flüssig-Gemischs nimmt beim Durchlauf durch die Vorrichtung zur Hydrolyse ab und ist zum Ende des Prozesses mindestens auf drei Viertel, auf die Hälfte oder auf ein Fünftel der Viskosität des Ausgangsmaterials vermindert. Um den Durchsatz der Ausgangsstoffe beziehungsweise die Ausbeute des hydrolysierten Materials zu erhöhen, ist die Einstellung eines möglichst hohen Feststoffgehalts erforderlich. Der limitierende Faktor zur Maximierung des Feststoffgehalts ist zum einen die Pumpfähigkeit für die überwiegend feuchte Biomasse und zum anderen die Förderfähigkeit unabhängig von einer Pumpe von eher trockener Biomasse verbunden mit der Einbringung in einen Reaktor.

Nach dem erfindungsgemäßen Verfahren wird eine Zusatzstoffsuspension oder-dispersion zur Herstellung von keramischen Werkstoffen hergestellt. Die Erfindung betrifft ein Verfahren zur Herstellung eines Gegenstandes zumindest teilweise mit einem Gefüge, das aus einem keramischen und einem kohlenstoffhaltigen Material oder anderem Stoff besteht, aus einem Rohling aus einem kohlenstoffhaltigen Material.

Die Herstellung von Gegenständen, etwa Bauteilen oder auch Verschleißteilen, ganz oder teilweise aus keramischen Werkstoffen und insbesondere Siliziumkarbid ist derzeit äußerst aufwendig, da Siliziumkarbid ein sehr hochfester Stoff ist, der sich nur sehr schwer formen oder mechanisch bearbeiten lässt. Siliziumkarbid ist eine nichtoxidische Hochtemperaturkeramik, die besonders durch ihre hervorragenden Eigenschaften, wie u.a. hohe Diamant-ähnliche Härte, optische Transparenz, Halbleiter-Charakter, hohe thermische Leitfähigkeit, chemische und thermische Haltbarkeit von großem Interesse ist und daher in vielen verschiedenen Bereichen der Technik, z.B. der Herstellung von Feuerfestwerkstoffen, Isolatoren wie auch als Halbleitermaterial zum Einsatz kommt. Daher hat die Herstellung von Gegenständen aus Siliziumkarbid eine hohe wirtschaftliche Bedeutung.

Üblicherweise werden Gegenstände aus Siliziumkarbid mittels herkömmlicher Sinterverfahren hergestellt, bei denen ein fest gemahlenes Siliziumkarbid-Pulver unter Verwendung unterschiedlicher Bindemittel bei hohen Temperaturen zusammen gebacken wird. Nachteilig an dieser Vorgehensweise ist neben den benötigten hohen Temperaturen und langen Sinterzeiten die Porosität der entstehenden Gegenstände, die einen Einsatz nur für bestimmte Anwendungen zulässt.

Aus der DE-A-3 322 060 ist ein anderes Herstellungsverfahren für Gegenstände aus Siliziumkarbid bekannt, bei dem ein Gegenstand aus einem kohlenstoffhaltigen Material wie Graphit maß- und formgetreu hergestellt wird und anschließend mittels Diffusionsvorgängen während einer langdauernden Glühbehandlung der Kohlenstoff des Gegenstandes zumindest oberflächennah durch Siliziumkarbid ersetzt wird. Hierzu wird der Gegenstand beim Glühen in ein Granulat aus Siliziumdioxid eingepackt und beim Glühen z.B. Wasserstoffgas über das Granulat geleitet. Hierdurch soll ein Gas mit nennenswertem Siliziummonoxidanteil erzeugt werden, das dann in das kohlenstoffhaltige Material des Gegenstandes oberflächennah eindiffundieren kann und mit dem Kohlenstoff des Gegenstandes derart reagiert, dass sich in der Matrix des Gegenstandes Siliziumkarbid bildet. Hierdurch kann zumindest oberflächennah ein Austausch des Kohlenstoffs des Gegenstandes gegen Siliziumkarbid erreicht werden, wodurch eine entsprechende Verbesserung der oberflächennahen Bereiche des Gegenstandes erzielt werden können. Nachteilig an dieser Verfahrensweise ist es, dass die Erzeugung des Siliziummonoxidgases aufwendig ist und die notwendigen Mengenanteile des Siliziummonoxid in diesem Gas nur schwer einzuhalten und zu dosieren sind. Aufgabe der vorliegenden Erfindung ist es daher, verbesserte Herstellungsverfahren für Gegenstände aus keramischen Materialien und insbesondere Siliziumkarbid anzugeben, bei denen ein Gegenstand aus kohlenstoffhaltigem Material oder einem porösen keramischen Stoff und insbesondere Siliziumkarbid einfach und sicher ganz oder teilweise in Siliziumkarbid umgewandelt werden kann.

Die Zusatzstoffsuspension oder-dispersion wird über die erfindungsgemäße Herstellung enes Fest-Flüssig-Gemischs aus Wasser und einer kohlenstoffhaltigen Komponente als Ausgangs- oder Zusatzstoff zur Herstellung eines isolierenden und/oder keramischen Werkstoffs gewonnen, wobei das Fest-Flüssig-Gemisch bei einer Temperatur von über 100°C und einem Druck von über 5 bar behandelt wird. Dies ist möglich durch die hohe Reinheit der Suspension und die weitgehenden Elimination von Störstoffen. Zur Charakterisierung der Reinheit der Zusatzstoffsuspension oder-dispersion dient der Schwefel- und Aschegehalt, denn andere Parameter wie Alkalimetalle, Chlor, Phophor, Calcium, Stickstoff, Magnesium, Chrom, Kupfer, Blei, Zink verhalten sich ähnlich. Denn durch einen erhöhten Zusatz oder Durchsatz von aufgereinigtem Wasser oder Prozesswasser sinkt entsprechend der Gehalt der oben genannten Stoffe im kohlenstoffhaltigen Fest-Flüssig-Gemisch. Durch zahlreiche zusätzliche Waschschritte, die durch hohen Druck und Temperatur eine höhere Wirksamkeit entfalten, nimmt die Reinheit des im Fest-Flüssig-Gemisch vorliegenden Kohlenstoff zu. Der Schwefel- und/oder Aschegehalt des Fest-Flüssig-Gemischs vermindert sich dadurch um mindestens 50% bzw. 75% bezogen auf den jeweiligen ursprünglichen Gehalt der kohlenstoffhaltigen Komponente. Die Schwefel- und Aschegehalte können um mehr als 80, 90 oder 99% bezogen auf den jeweiligen ursprünglichen Gehalt der kohlenstoffhaltigen Komponente verringert werde. Oder anders nimmt im Zuge des Reaktionsprozesses in Verbindung mit Waschvorgängen der Schwefel- und Aschegehalte kontinuierlich ab und ist zum Ende des Prozesses mindestens auf über zwei Zehntel, ein Zwanzigstel oder ein Hundertstel des Schwefel- und Aschegehalts des Ausgangsmaterials vermindert.

Aufgrund der Vorinkubation im sauren Medium und des Zusatzes von Säuren als Katalysator ist das Gemisch sauer ist und bietet sich daher zur Herstellung eines keramischen Werkstoff mittels eines alkalischen Sols an. Mit einem Sol-Gel-Verfahren kann durch Zuleiten der sauren Zusatzstoffsuspension oder-dispersion zu einem alkalischen Sol der Gelierprozess eingeleitet werden. Durch diese Behandlungsweise und weitere Verfahrensschritte entsteht eine Siliziumverbindung und ein Sol, dass organische oder anorganische Silikate und/oder Kieselsäure enthält. Das Sol ist eine wässrige Lösung von Wasserglas. Zur Herstellung des Gels wird eine Kohlenstoffkomponente und eine Silikatkomponente verwendet. Der Gel wird bis zur Entwicklung von SiC-Gas soweit erhitzt, dass das SiC-Gas in einen bereitgestellten porösen Formkörper eindringt. Der Formkörper enthält aufgereinigten, reinen, hochreien oder ultrareinen Kohlenstoff. Von besonderer Bedeutung ist es, dass der Kohlenstoff in dem kohlenstoffreichen Siliziumdioxid-Granulat derart fein verteilt vorliegt, dass beim Erhitzen des Granulates das Siliziumdioxid unmittelbar mit diesem Kohlenstoff reagiert und dabei ein siliziumkarbidhaltiges Gas, vorzugsweise weitgehend reines Siliziumkarbid-Gas bildet. Durch die geringe Größe der Kohlenstoffpartikel in der erfindungsgemäßen Zusatzstoffsuspension oder-dispersion kann eine Verteilung des Kohlenstoffs in dem Siliziumdioxid erreicht werden, durch die die Bildung des siliziumkarbidhaltigen Gases weit unter der normalen Sublimationstemperatur des Siliziumkarbid, insbesondere schon bei Temperaturen zwischen 1700°C und 1900°C erfolgt. Dadurch kann das gebildete Siliziumkarbidgas in beschriebener Weise direkt in den Gegenstand eindiffundieren. In weiterer Ausgestaltung ist es hierbei von Vorteil, wenn das siliziumkarbidhaltige Gas gasförmig in den Gegenstand aus dem kohlenstoffhaitigen Material eindringt und den Kohlenstoff des Gegenstandes aus der Kohlenstoffmatrix verdrängt. Dadurch wird unter weitgehendem Erhalt der Struktur der Matrix der Hauptbestandteil der Matrix von Kohlenstoff in Siliziumkarbid ausgetauscht und die Eigenschaften des Gegenstandes in der schon beschriebenen Weise geändert und verbessert.

Von wesentlichem Vorteil für die Durchführung des Verfahrens ist es, wenn das kohlenstoffreiche Siliziumdioxid-Granulat in einem Sol-Gel-Prozess mit anschließender karbothermaler Reduktion hergestellt wird. Durch die Verwendung eines Sol-Gel-Prozesses zur Herstellung des kohlenstoffreichen Siliziumdioxid-Granulates kann die Verteilung des Kohlenstoffs oder auch anderer hinzuzufügender Stoffe des Granulats sehr genau und sehr fein, quasi auf atomarer Basis eingestellt werden, wodurch sich die Bildung des siliziumkarbidhaltigen Gases verbessert oder auch erst in größerem Maßstab ermöglicht wird. Durch die mittels Sol-Gel-Prozess erreichbare feine Verteilung des Kohlenstoffs und der anderen hinzuzufügenden Stoffe des Granulats kann beim Glühvorgang das sich bildende siliziumoxidhaltige Gas unmittelbar mit dem Kohlenstoff und den anderen hinzuzufügenden Stoffe reagieren und steht sofort für die Diffusionsvorgänge oberflächennah an dem Gegenstand zur Verfügung.

Aus DE-A-10 2006 055 469 ist ein Verfahren zur Herstellung eines Gegenstandes bekannt, bei dem zumindest teilweise mit Siliziumkarbidgeflüge aus einem Rohling aus einem kohlenstoffhaltigen Material, wobei in einem ersten Schritt der Gegenstand aus dem kohlenstoffhaltigen Material im wesentlichen gemäß seiner gewünschten Endform und/oder Endmaße hergestellt wird und anschließend der Gegenstand aus dem kohlenstoffhaltigen Material mit einem kohlenstoffreichen Siliziumdioxid-Granulat zumindest bereichsweise umhüllt und in dieser Umhüllung in einer Schutzgasatmosphäre bei einer Glühtemperatur mindestens einmal geglüht wird, wobei das Siliziumdioxid-Granulat siliziumkarbidhaltiges Gas abgibt, das in den Gegenstand eindringt und das kohlenstoffhaltige Material teilweise oder ganz in Siliziumkarbid umwandelt.
Es ist vorteilhaft, wenn der Sol-Gel-Prozess zur Herstellung des kohlenstoffreichen Siliziumdioxid-Granulats als Ausgangsprodukt ein lösliches hydrolysierbares anorganisches oder organisches Silikat verwendet.

Diese Anmeldung offenbart außerdem:
1. Ein Verfahren zur Hydrolyse und/oder Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente, wobei das Fest-Flüssig-Gemisch bei einer Temperatur von über 100°C und einem Druck von über 5 bar in mindestens einem Reaktor behandelt wird, dadurch gekennzeichnet, dass über einen ersten Förderstrang nicht pumpfähige Ausgangsstoffe in den wenigstens einen Reaktor gefördert werden und zeitlich parallel oder versetzt dazu über einen zweiten Förderstrang pumpfähige erhitzte Ausgangsstoffe in den wenigstens einen Reaktor geleitet werden.
2. Ein Verfahren nach Absatz 1, wobei über den ersten Förderstrang nicht pumpfähige Ausgangsstoffe mit einem Feststoffgehalt von 25 bis 97 Prozent in den Reaktor gefördert werden und zeitlich parallel oder versetzt dazu über den zweiten Förderstrang pumpfähige erhitzte Ausgangsstoffe mit einem Feststoffgehalt von 3 bis 50 Prozent geleitet werden.
3. Ein Verfahren nach Absatz 1 oder 2, wobei das Verhältnis des Massendurchsatzes von nicht-pumpfähigen zu pumpfähigen Ausgangsstoffen 1 : 20 bis 10 : 1 beträgt.
4. Ein Verfahren nach einem der Absätze 1 bis 3, wobei die nicht-pumpfähigen Ausgangsstoffe aus dem ersten Förderstrang unter einem Druck oberhalb des Dampfdrucks des Prozesswassers in den Reaktor gefördert werden.
5. Ein Verfahren nach einem der Absätze 1 bis 4, wobei die Fördereinrichtung zur Einbringung der nicht-pumpfähigen Ausgangsstoffe aus dem ersten Förderstrang in den Reaktor unter Druck oberhalb des Dampfdrucks des Prozesswassers ein Injektor, Doppelschrauben-Extruder, eine Exzenterschneckenpumpe, eine Kolbenpumpe, die jeweils mit oder ohne Verdichterschnecke/n ausgestattet sind, oder ein Doppelschneckenverdichter ist.
6. Ein Verfahren nach einem der Absätze 1 bis 5, wobei das Verhältnis des Massendurchsatzes von vorgelegten zu zugeleiteten Ausgangsstoffen 1 : 20 bis 10 : 1, oder 1 : 5 bis 1 : 1 beträgt.

### Bezuaszeichenliste:

- 1: Silo
- 2: Container
- 3: Zerkleinerungsvorrichtung
- 4: Reservoir
- 5: Behältnis
- 6: Mischbehälter
- 7: Fördereinrichtung
- 8: Inkubationsbehälter
- 9: Fördereinrichtung
- 10: Fördereinrichtung
- 11: -
- 12: Vorratsbehälter
- 13: Fördervorrichtung
- 14: Mischbehälter
- 15: Behältnis
- 16: Inkubationsbehälter
- 17: Fördervorrichtung
- 18: Wärmetauschereinheit
- 19: Reaktor
- 20: Rührvorrichtung
- 21: Einbringvorrichtung
- 22: Wärmetauschervorrichtung
- 23: Doppelwand
- 24: Reaktor
- 25: Wärmetauschereinheit
- 26: Entspannungsbehälter
- 27: Wärmetauscher
- 28: Entspannungspumpe
- 29: Entspannungsbehälter
- 30: Fest-Flüssig-Trennvorrichtung
- 31: Lager
- 32: Reaktor
- 33: Reaktor
- 34: -
- 35: -
- 36: -
- 37: -
- 38: -
- 39: -
- 40: Hydrolysereaktor
- 41: Einbringeinrichtung
- 42: Wärmetauscher
- 43: Doppelwand

## Patentansprüche

1. Verfahren zur Beschickung eines Reaktors zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente, wobei das Fest-Flüssig-Gemisch bei einer Temperatur von über 100°C und einem Druck von über 5 bar in dem Reaktor behandelt wird, **dadurch gekennzeichnet, dass** das Fest-Flüssig-Gemisch zum Erhitzen einen Wärmetauscher durchströmt, bei dem das Betragsmittel des Winkels der Rohrachse zur Horizontalebene größer als 10 Grad ist.

2. Verfahren nach Anspruch 1, wobei das Fest-Flüssig-Gemisch zum Erhitzen einen Wärmetauscher durchströmt und dabei durch mindestens 60 Prozent im Wesentlichen senkrechte Rohranteile geleitet wird.

3. Verfahren nach Anspruch 1 oder 2, wobei die Viskosität des Fest-Flüssig-Gemischs beim Durchlauf durch den Wärmetauscher abnimmt und zum Ende des Prozesses mindestens auf drei Viertel der Viskosität des Ausgangsmaterials vermindert ist.

4. Verfahren nach einem der Ansprüche 1 bis 3, wobei die Pumpe zur Förderung des Fest-Flüssig-Gemisches und/oder eine Gegendruckpumpe eine Exzenterschnecken-, Spiralverdränger- oder eine Kolbenpumpe ist.

5. Vorrichtung zur Behandlung eines Fest-Flüssig-Gemischs aus Wasser und einer kohlenstoffhaltigen Komponente bei einer Temperatur von über 100°C und einem Druck von über 5 bar, umfassend einen Reaktor mit einer Beschickungs- oder Hydrolysevorrichtung, und **gekennzeichnet durch** einen Wärmetauscher mit einer Rohrachse, bei dem das Betragsmittel des Winkels der Rohrachse zur Horizontalebene größer ist als 10 Grad.

6. Vorrichtung nach Anspruch 5, wobei der Wärmetauscher aus mindestens 60 % senkrechten Rohranteilen besteht.

7. Vorrichtung nach Anspruch 5 oder 6, wobei der Wärmetauscher für Drücke von 10 bis 120 bar oder mindestens ein Modul oder eine Einheit für Drücke von 60 bis 120 bar ausgelegt ist.

8. Vorrichtung nach einem der Ansprüche 5 bis 7, ferner aufweisend eine Pumpe zur Förderung von Fest-Flüssig-Gemischen mit einem Feststoffgehalt von mindestens 10 oder mindestens 15 Masseprozent.

9. Verfahren zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente und zur Behandlung desselben, wobei das Fest-Flüssig-Gemisch bei einer Temperatur von über 100°C und einem Druck von über 5 bar für eine Behandlungsdauer von mindestens 1 Stunde behandelt wird, **dadurch gekennzeichnet, dass** über einen Wärmetauscher Ausgangsstoffe über einen Zeitraum von mindestens sechs Zehntel der Reaktionszeit kontinuierlich einem ersten Reaktor zugeführt werden und das Reaktionsgemisch chargenweise von einem zum folgenden Reaktor weitergeleitet wird und Reaktionsprodukte über einen Zeitraum von mindestens sechs Zehntel der Reaktionszeit kontinuierlich aus einem letzten Reaktor abgeführt werden.

10. Verfahren nach Anspruch 9, wobei eine Charge zur Vermeidung von Rückvermischungen für einen Zeitraum von mindestens einem Hundertstel der Reaktionszeit in einem abgeschlossenen Reaktor, der in Durchflussrichtung hinter mindestens dem ersten Reaktor positioniert ist, verbleibt.

11. Vorrichtung zur Behandlung eines Fest-Flüssig-Gemischs aus Wasser und einer kohlenstoffhaltigen Komponente bei einer Temperatur von über 100°C und einem Druck von über 5 bar, umfassend einen Reaktor mit einer Beschickungs- oder Hydrolysevorrichtung mit einer Pumpe zur Förderung von Fest-Flüssig-Gemischen mit einem Feststoffgehalt von mindestens 10 bis 15 Prozent; und optional einem Wärmetauscher mit einer Rohrachse, bei dem das Betragsmittel des Winkels der Rohrachse zur Horizontalebene größer als 10 Grad ist.

12. Verfahren zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente, wobei das Fest-Flüssig-Gemisch bei einer Temperatur von über 100°C und einem Druck von über 5 bar behandelt wird, **dadurch gekennzeichnet, dass** dem Fest-Flüssig-Gemisch in einem Membranreaktor bei der Reaktion kontinuierlich oder in Intervallen Wasser entzogen wird.

13. Verfahren zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente, wobei das Fest-Flüssig-Gemisch bei einer Temperatur von über 100°C und einem Druck von über 5 bar behandelt wird, **dadurch gekennzeichnet, dass** aufkonzentriertes Prozesswasser teilweise zur Vorinkubation, Vorwärmung von Ausgangsstoffen, Herstellung der Pumpfähigkeit eines Fest-Flüssig-Gemischs, zur Übernahme in das Reaktionsgemisch, zur Überschichtung von oder zur Beimischung zu vorgelegtem Ausgangsstoff in einem Reaktor der Anlage, zur Rückführung in den laufenden Prozess, als Wärmeträgermedium z. B. für weitere Prozesse innerhalb oder außerhalb einer Anlage eingesetzt und/oder als Düngemittelbestandteil verwendet wird.

14. Verwendung von aufkonzentriertem Prozesswasser aus einem Verfahren zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente, wobei das Fest- Flüssig-Gemisch bei einer Temperatur von über 100°C und einem Druck von über 5 bar behandelt wird, zur Vorinkubation, Vorwärmung von Ausgangsstoffen, Herstellung eines pumpfähigen Fest-Flüssig-Gemischs, zur Übernahme in das Reaktionsgemisch, zur Überschichtung von oder zur Beimischung zu vorgelegtem Ausgangsstoff in einem Reaktor der Anlage, zur Rückführung in den laufenden Prozess, als Wärmeträgermedium und/oder als Düngemittelbestandteil.

15. Vorrichtung zur Herstellung von Werk- oder Brennstoffen, Humus, Maillard- oder ähnlichen Reaktionsprodukten aus einem Fest-Flüssig-Gemisch aus Wasser und einer kohlenstoffhaltigen Komponente und zur Behandlung desselben, wobei das Fest-Flüssig-Gemisch bei einer Temperatur von über 100°C und einem Druck von über 5 bar behandelt wird, **gekennzeichnet durch** eine Vorrichtung zur Aufkonzentrierung von abgezogenem Prozesswasser und zum Rückführen des aufkonzentrierten Prozesswassers zu dem Fest-Flüssig-Gemisch.
